(19) Europäisches Patentamt
European Patent Office
Office européen des brevets

(11) Veröffentlichungsnummer: **0 377 166 B1**

(12) **EUROPÄISCHE PATENTSCHRIFT**

(45) Veröffentlichungstag der Patentschrift: **02.03.94**

(51) Int. Cl.$^5$: **C09B 62/507**, D06P 1/384

(21) Anmeldenummer: **89123502.0**

(22) Anmeldetag: **20.12.89**

# (54) Wasserlösliche faserreaktive Farbstoffe, Verfahren zu ihrer Herstellung und ihre Verwendung.

(30) Priorität: **04.01.89 DE 3900114**
**25.01.89 DE 3902030**

(43) Veröffentlichungstag der Anmeldung:
**11.07.90 Patentblatt 90/28**

(45) Bekanntmachung des Hinweises auf die Patenterteilung:
**02.03.94 Patentblatt 94/09**

(84) Benannte Vertragsstaaten:
**BE CH DE ES FR GB IT LI**

(56) Entgegenhaltungen:
**EP-A- 0 076 782**
**EP-A- 0 182 366**
**DE-A- 3 624 136**

(73) Patentinhaber: **HOECHST AKTIENGESELLSCHAFT**
**D-65926 Frankfurt(DE)**

(72) Erfinder: **Büch, Holger Michael, Dr.**
**Neugasse 4**
**D-6238 Hofheim am Taunus(DE)**
Erfinder: **Russ, Werner Hubert, Dr.**
**41 Cedar Pond**
**Warwick, RI 02886(US)**
Erfinder: **Tappe, Horst, Dr.**
**Ringstrasse 9**
**D-6057 Dietzenbach(DE)**

EP 0 377 166 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung liegt auf dem technischen Gebiet der faserreaktiven Farbstoffe.

Die Praxis des Färbens mit Reaktivfarbstoffen hat in neuerer Zeit zu erhöhten Anforderungen an die Qualität der Färbungen und die Wirtschaftlichkeit des Färbeprozesses geführt. Infolgedessen besteht weiterhin Bedarf nach neuen Reaktivfarbstoffen, die verbesserte Eigenschaften, insbesondere in Bezug auf die Applikation, aufweisen. Für das Färben von Baumwolle nach dem Kaltverweilverfahren werden heute Reaktivfarbstoffe gefordert, die eine der niedrigen Färbetemperatur angepaßte Substantivität haben und die zugleich eine gute Auswaschbarkeit der nicht fixierten Anteile aufweisen. Sie sollen ferner eine hohe Reaktivität besitzen, so daß nur kurze Verweilzeiten erforderlich sind, und sie sollen insbesondere Färbungen mit hohen Fixiergraden liefern. Von bekannten Farbstoffen, wie sie beispielsweise in der europäischen Patentschrift Nr. 0 076 782 B1 beschrieben sind, werden diese Anforderungen nur in ungenügendem Maße erfüllt.

Der vorliegenden Erfindung lag daher die Aufgabe zugrunde, neue, verbesserte Reaktivfarbstoffe für das Kaltverweilverfahren zu finden. Sie sollten sich vor allem durch hohe Fixierausbeuten und hohe Faser-Farbstoff-Bindungsstabilitäten und eine leichte Auswaschbarkeit der nicht fixierten Anteile auszeichnen.

Mit der vorliegenden Erfindung wurde diese Aufgabe durch Auffindung von Farbstoffen gelöst, die der allgemeinen Formel (1)

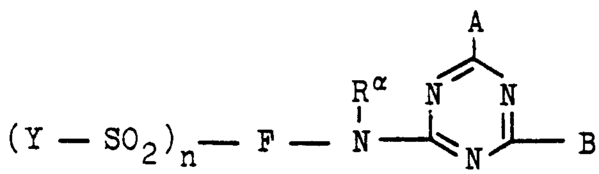

(1)

entsprechen. In dieser Formel bedeuten:

F ist der Rest eines mindestens eine Sulfogruppe enthaltenden metallfreien oder schwermetallhaltigen Mono- oder Disazofarbstoffes;

n ist die Zahl 1 oder 2, bevorzugt 1;

Y ist die Vinylgruppe oder eine $\beta$-Sulfatoethyl-, $\beta$-Halogenethyl-, wie $\beta$-Chlorethyl-, eine $\beta$-Thiosulfatoethyl-, $\beta$-Phosphatoethyl- oder $\beta$-Acetoxyethyl-Gruppe, bevorzugt eine Vinylgruppe und insbesondere bevorzugt eine $\beta$-Sulfatoethyl-Gruppe;

$R^{\alpha}$ ist ein Wasserstoffatom oder eine geradkettige oder verzweigte Alkylgruppe von 1 bis 4 C-Atomen, die durch eine Carboxy-, Sulfo-, Cyano- oder Hydroxygruppe oder durch ein Chloratom substituiert sein kann, bevorzugt die Methylgruppe und insbesondere bevorzugt ein Wasserstoffatom;

A ist eine Gruppe der allgemeinen Formel (2a) oder (2b)

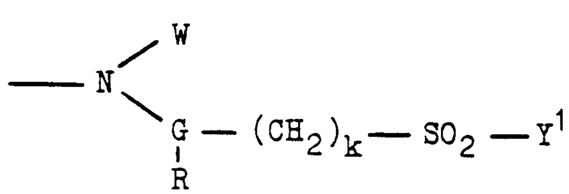

(2a)

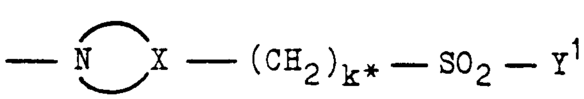

(2b)

in welcher

G ein geradkettiger oder verzweigter Alkylenrest von 1 bis 6 C-Atomen, vorzugsweise von 2 bis 4 C-Atomen, insbesondere von 3 C-Atomen, ist oder einen Alkylenrest von 2 bis 6 C-Atomen bedeutet, der durch 1 oder 2 Heterogruppen, wie beispielsweise durch Sauerstoff oder die Aminogruppe -NH- , unterbrochen ist, wobei die Alkylenanteile geradkettig oder verzweigt sein

können und bevorzugt solche von 2 oder 3 C-Atomen sind, oder ist ein gegebenenfalls methylsubstituierter Cycloalkylenrest von 5 bis 8 C-Atomen, wie vorzugsweise der Cyclohexylenrest,

R ein Wasserstoffatom oder ein Chlor-, Brom- oder Fluoratom oder eine Hydroxy-, Sulfato-, Cyano-, Carboxy- oder Carbamoylgruppe oder eine Carbalkoxygruppe von 2 bis 5 C-Atomen oder eine Alkanoyloxygruppe von 2 bis 5 C-Atomen oder eine Benzoylaminogruppe, die durch 1 oder 2 Substituenten aus der Gruppe Sulfo, Carboxy, Methyl, Ethyl, Methoxy, Ethoxy und Chlor substituiert sein kann, ist oder eine Gruppe der allgemeinen Formel $-SO_2-Y^2$ bedeutet, in welcher

$Y^2$ eine der obigen für Y angegebenen Bedeutungen besitzt oder eine β-Hydroxyethylgruppe darstellt, wobei $Y^2$ mit Y gleich oder verschieden sein kann,

k für die Zahl Null, 1 oder 2 steht,

k* die Zahl Null, 1, 2, 3 oder 4 bedeutet,

X zusammen mit dem N-Atom und mit 1 oder 2 Alkylengruppen von 1 bis 5 C-Atomen und gegebenenfalls 1 oder 2 Heteroatomen, wie Stickstoff- und Sauerstoffatomen, den bivalenten Rest eines heterocyclischen Ringes bildet, wie beispielsweise den Piperazin-1,4-ylen- oder einen Piperidinylen-Rest,

$Y^1$ eine der oben für Y angegebenen Bedeutungen besitzt, wobei $Y^1$ mit Y gleich oder verschieden sein kann, und bevorzugt Vinyl, β-Chlorethyl oder β-Sulfatoethyl ist, und

W ein Wasserstoffatom, die Methyl-, Sulfomethyl- oder Carboxymethylgruppe oder eine geradkettige oder verzweigte Alkylgruppe von 2 bis 6 C-Atomen, vorzugsweise von 2 bis 4 C-Atomen, ist, die durch 1 oder 2 Substituenten aus der Gruppe Methoxy, Ethoxy, Carboxy, Sulfo, Hydroxy und Halogen, wie Chlor und Brom, substituiert sein kann, oder ein gegebenenfalls methylsubstituierter Cycloalkylenrest von 5 bis 8 C-Atomen, wie der Cyclohexylenrest, ist oder ein Phenylrest ist, der durch Substituenten aus der Gruppe Alkyl von 1 bis 4 C-Atomen, wie Methyl und Ethyl, Alkoxy von 1 bis 4 C-Atomen, wie Methoxy und Ethoxy, Carboxy, Sulfo und Halogen, wie Chlor, substituiert sein kann;

B hat eine der für A angegebenen Bedeutungen, wobei A und B zueinander gleiche oder voneinander verschiedene Bedeutungen besitzen können.

Schwermetallhaltige Mono- und Disazofarbstoffe, die dem Rest F zugehören, sind insbesondere Kupfer-, Nickel-, Kobalt- und Chromkomplex-Farbstoffe. Der Farbstoffrest F enthält bevorzugt 2 bis 6, insbesondere 2 bis 4 Sulfogruppen.

Neben Wasserstoff und Methyl bedeutet $R^\alpha$ insbesondere Ethyl, 1-Propyl, 2-Propyl, 1-Butyl, 2-Methyl-1-propyl, tert.-Butyl, Carboxymethyl, Sulfomethyl, β-Sulfoethyl, β-Cyanoethyl, β-Chlorpropyl und β-Hydroxyethyl.

Bevorzugt ist W die Methyl- oder Ethylgruppe und insbesondere bevorzugt ein Wasserstoffatom.

Die Substituenten "Sulfo", "Carboxy", "Phosphato", "Thiosulfato" und "Sulfato" schließen sowohl deren Säureform als auch deren Salzform ein. Demgemäß bedeuten Sulfogruppen Gruppen entsprechend der allgemeinen Formel $-SO_3M$ , Carboxygruppen Gruppen entsprechend der allgemeinen Formel -COOM , Phosphatogruppen Gruppen entsprechend der allgemeinen Formel $-OPO_3M_2$ , Thiosulfatogruppen Gruppen entsprechend der allgemeinen Formel $-S-SO_3M$ und Sulfatogruppen entsprechend Gruppen der allgemeinen Formel $-OSO_3M$ ,

in welchen

M ein Wasserstoffatom oder ein Alkalimetall, wie Natrium, Kalium oder Lithium, ist.

Erfindungsgemäße Farbstoffe entsprechend der allgemeinen Formel (1) sind insbesondere solche Mono- und Disazofarbstoffe, die den allgemeinen Formeln (3a) oder (3b)

$$(Y\text{-}SO_2\text{-}X^1)_n - D - N = N - (E - N = N)_v - K - Z \qquad (3a)$$

$$Z - D - N = N - (E - N = N)_v - K - X^1 - SO_2 - Y \qquad (3b)$$

oder den davon abgeleiteten Schwermetallkomplex-Verbindungen entsprechen, wobei in diesen Formeln die einzelnen Formelglieder folgende Bedeutungen haben:

Y und n haben eine der obengenannten Bedeutungen;

$X^1$ ist eine direkte Bindung oder ein Brückenglied, wie bspw. eine Alkylengruppe von 1 bis 4 C-Atomen oder der bivalente Rest einer Alkanoylamido-Gruppe von 2 bis 5 C-Atomen;

n ist die Zahl 1 oder 2, vorzugsweise 1;

Z ist eine Gruppe der allgemeinen Formel (4)

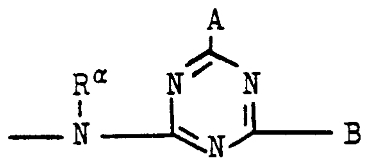

(4)

in welcher

$R^\alpha$, A und B eine der obengenannten Bedeutungen besitzen;

D ist der Rest einer in der Azochemie üblichen Diazokomponente aus der Benzol- oder Naphthalinreihe, die für Azofarbstoffe übliche Substituenten enthalten kann, wie beispielsweise Sulfo-, Carboxy-, Hydroxy-, Amino-, Methyl-, Ethyl-, Methoxy- und Ethoxygruppen und gegebenenfalls substituierte Alkanoylaminogruppen von 2 bis 4 C-Atomen, gegebenenfalls substituierte Benzoylaminogruppen und Halogenatome;

K ist der Rest einer in der Azochemie üblichen Kupplungskomponente der Benzol-, Naphthalin-, Pyrazolon-, 6-Hydroxy-2-pyridon oder Acetessigsäurearylamid-Reihe, wobei die Kupplungskomponente die für Azofarbstoffe üblichen Substituenten, wie beispielsweise Hydroxy, Sulfo-, Carboxy-, Amino-, Methyl-, Ethyl-, Methoxy- und Ethoxygruppen und gegebenenfalls substituierte Alkanoylaminogruppen von 2 bis 4 C-Atomen, gegebenenfalls substituierte Benzoylaminogruppen und Halogenatome enthalten kann;

E ist der Rest einer in Disazofarbstoffen üblichen Mittelkomponente der Benzol- und Naphthalinreihe, der durch für Azofarbstoffe übliche Substituenten substituiert sein kann, wie beispielsweise Sulfo-, Carboxy-, Hydroxy-, Methyl-, Ethyl-, Methoxy- und Ethoxygruppen und gegebenenfalls substituierte Alkanoylaminogruppen von 2 bis 4 C-Atomen, gegebenenfalls substituierten Ureidogruppe, gegebenenfalls substituierten Benzoylaminogruppen und Halogenatome;

v steht für die Zahl Null oder 1;

die Reste D, E und K enthalten zusammen mindestens eine Sulfogruppe, bevorzugt mindestens zwei Sulfogruppen, insbesondere 3 oder 4 Sulfogruppen.

Von den erfindungsgemäßen Farbstoffen sind insbesondere solche hervorzuheben, die den allgemeinen Formeln (5a), (5b), (5c) und (5d)

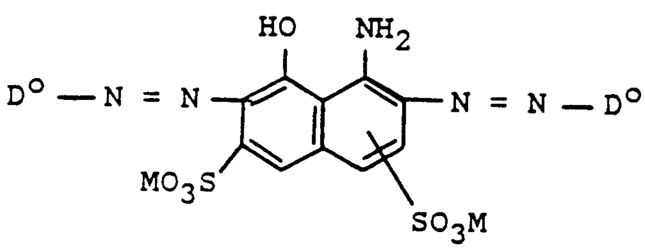

(5a)

$$(Y\text{-}SO_2\text{-}X^1)_n - D^1 - N = N - (E^1 - N = N)_v - K^* - Z \qquad (5b)$$

$$Z - D^* - N = N - (E^1 - N = N)_v - K^1 - X^2 - SO_2 - Y \qquad (5c)$$

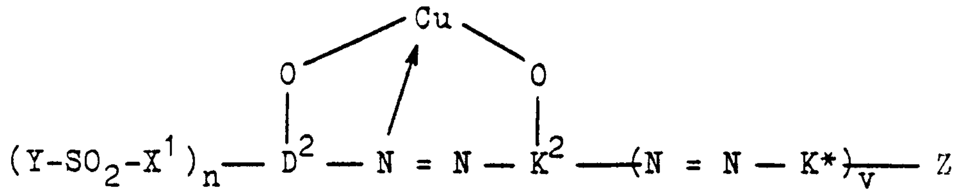

(5d)

entsprechen, in welchen bedeuten:

| | |
|---|---|
| Y, M, n, v und Z | haben eine der obengenannten Bedeutungen; |
| $X^1$ | hat eine der obengenannten Bedeutungen und ist bevorzugt eine Gruppe der Formel $-(CH_2)_3-CO-NH-$ und insbesondere bevorzugt eine direkte Bindung; |
| $X^2$ | hat eine der für $X^1$ angegebenen Bedeutungen und ist bevorzugt eine Gruppe der Formel $-NH-CO-(CH_2)_3-$ und insbesondere bevorzugt eine direkte Bindung; |
| $D^o$ | ist ein Rest der allgemeinen Formel (6a), (6b) oder (6c) |

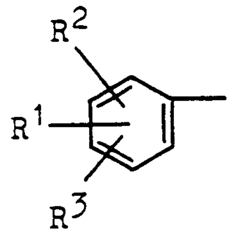

(6a)

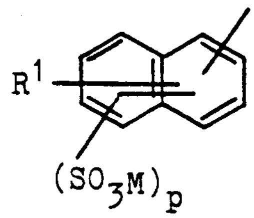

(6b)

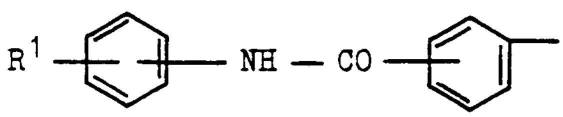

(6c)

in welchen

| | |
|---|---|
| $R^1$ | in dem einen Rest $D^o$ eine oder zwei Gruppen der obengenannten und definierten allgemeinen Formel $Y-SO_2-X^1-$ darstellt, wobei $-X^1-$ eine der obengenannten, insbesondere bevorzugten Bedeutungen hat, und $R^1$ in dem anderen $D^o$ einen Rest Z der allgemeinen Formel (4) bedeutet, |
| $R^2$ | Wasserstoff, Methyl, Ethyl, Methoxy, Ethoxy, Alkanoyl von 2 bis 5 C-Atomen, wie Acetyl und Propionyl, Cyano, Carboxy, Sulfo, Alkoxycarbonyl von 2 bis 5 C-Atomen, Carbamoyl, N-($C_1$-$C_4$-Alkyl)-carbamoyl, Fluor, Chlor, Brom oder Trifluormethyl ist, |
| $R^3$ | Wasserstoff, Methyl, Ethyl, Methoxy, Ethoxy, Cyan, Carboxy, Sulfo, Alkanoylamino von 2 bis 5 C-Atomen, wie Acetylamino, Alkoxycarbonyl von 2 bis 5 C-Atomen, Carbamoyl, N-($C_1$-$C_4$-Alkyl)-carbamoyl, Fluor, Chlor, Nitro, Sulfamoyl, N-($C_1$-$C_4$-Alkyl)-sulfamoyl, Alkylsulfonyl von 1 bis 4 C-Atomen, Phenylsulfonyl oder Phenoxy ist, |
| p | die Zahl Null, 1 oder 2 bedeutet (wobei diese Gruppe im Falle von p gleich Null ein Wasserstoffatom bedeutet) und |
| M | die obengenannte Bedeutung hat; |
| $D^1$ | ist ein Phenylenrest, der die oben genannten und definierten Substituenten $R^2$ und $R^3$ besitzt, oder ist ein Naphthylenrest, der durch 1 oder 2 Sulfogruppen substituiert sein kann; |
| $E^1$ | ist ein Rest der allgemeinen Formel (7a), (7b), (7c) oder (7d) |

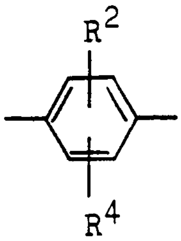

(7a)

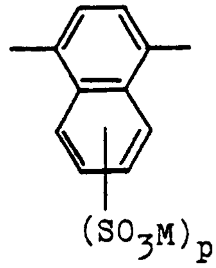

(7b)

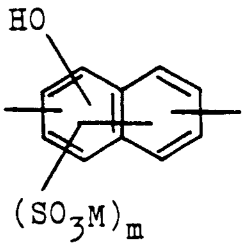

(7c)

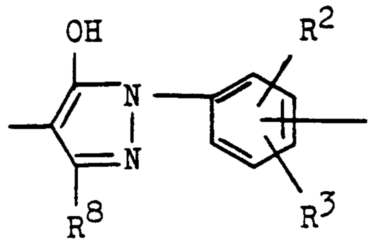

(7d)

in welchen

$R^2$, $R^3$, M und p — die oben angegebenen Bedeutungen haben,

$R^4$ — ein Wasserstoffatom, eine Alkylgruppe von 1 bis 4 C-Atomen, wie die Methyl- oder Ethylgruppe, eine Alkoxygruppe von 1 bis 4 C-Atomen, wie die Methoxy- und Ethoxygruppe, ein Chloratom, eine Alkanoylaminogruppe von 2 bis 5 C-Atomen, wie die Acetylamino- und Propionylaminogruppe, die Benzoylaminogruppe, die Ureidogruppe, eine N'-Phenyl-ureidogruppe, eine N'-Alkyl-ureidogruppe mit 1 bis 4 C-Atomen im Alkylrest, eine Phenylsulfonylgruppe oder eine Alkylsulfonylgruppe von 1 bis 4 C-Atomen ist,

m — die Zahl 1 oder 2 bedeutet und

$R^8$ — für Wasserstoff, Alkyl von 1 bis 4 C-Atomen, wie Methyl, Cyano, Carboxy, Carbalkoxy von 2 bis 5 C-Atomen, Carbamoyl oder Phenyl steht, bevorzugt jedoch Methyl, Carboxy und Carbalkoxy von 2 bis 5 C-Atomen, wie Carbomethoxy und Carbethoxy, ist;

-K*-Z — ist ein Rest der allgemeinen Formel (8a), (8b), (8c), (8d), (8e) oder (8f)

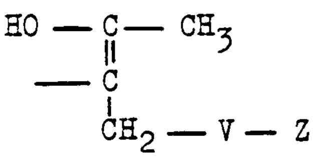

(8a)

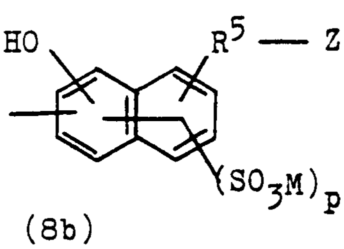

(8b)

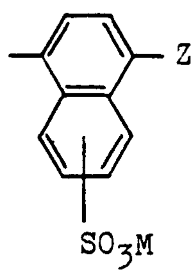

(8c)

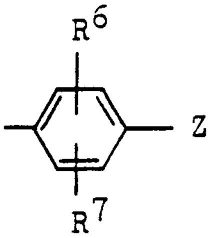

(8d)

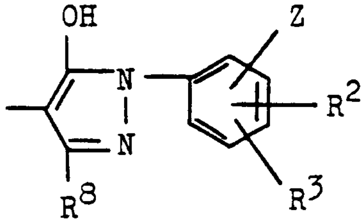

(8e)

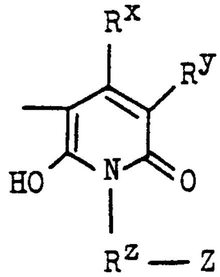

(8f)

in welchen

$R^2$, $R^3$, Z, p und M — die obengenannten Bedeutungen haben und die Hydroxygruppe in Formel (8b) in ortho-Stellung zur freien Bindung, die mit der Azogruppe verbunden ist, steht,

V — ein Phenylenrest ist, der die obengenannten und definierten Reste $R^2$ und $R^3$ enthält, oder ein Naphthylenrest ist, der durch 1 oder 2 Sulfogruppen substituiert sein kann,

$R^5$ — eine direkte Bindung oder ein Rest der Formel -NH-CO-phenylen- , -NH-CO-NH-phenylen- , $-N(CH_3)$-CO-phenylen- oder $-N(CH_3)$-CO-NH-phenylen-ist,

$R^6$ — Wasserstoff, Alkyl von 1 bis 4 C-Atomen, wie Methyl und Ethyl, Alkoxy von 1 bis 4 C-Atomen, wie Methoxy und Ethoxy, Brom, Chlor oder Alkanoylamino von 2 bis 7 C-Atomen, wie Acetylamino und Propionylamino, ist,

$R^7$ — Wasserstoff, Alkyl von 1 bis 4 C-Atomen, wie Methyl und Ethyl, Alkoxy von 1 bis 4 C-Atomen, wie Methoxy und Ethoxy, Chlor oder Alkanoylamino von 2 bis 7 C-Atomen, wie Acetylamino und Propionylamino, eine Ureido- oder Phenylureidogruppe ist,

$R^8$ — eine der oben angegebenen Bedeutungen hat,

$R^x$ — ein Wasserstoffatom oder eine Alkylgruppe von 1 bis 4 C-Atomen, wie die Methylgruppe, oder eine durch Alkoxy von 1 bis 4 C-Atomen, wie Methoxy, oder Cyano substituierte Alkylgruppe von 1 bis 4 C-Atomen ist,

$R^y$ — ein Wasserstoffatom, eine Sulfogruppe oder eine Sulfoalkylgruppe mit einem Alkylenrest von 1 bis 4 C-Atomen, wie die Sulfomethylgruppe, oder eine Cyano oder Carbamoylgruppe ist und

$R^z$ — eine Alkylengruppe von 1 bis 6 C-Atomen, bevorzugt von 1 bis 4 C-Atomen, oder ein Phenylenrest ist, der durch Substituenten aus der Gruppe Methyl, Ethyl, Chlor, Carboxy und Sulfo substituiert sein kann, oder eine Alkylenphenylen-Rest mit 2 bis 4 C-Atomen im Alkylenrest ist;

D* — ist ein Phenylenrest, der durch 1 oder 2 Substituenten aus der Gruppe Wasserstoff, Methyl, Ethyl, Methoxy, Brom, Chlor, Carboxy und Sulfo substituiert sein kann, oder ist ein Naphthylenrest, der durch 1 oder 2 Sulfogruppen substituiert sein kann;

$K^1$ — ist ein Rest der allgemeinen Formel (9a), (9b) oder (9c)

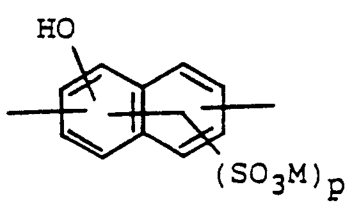
(9a)

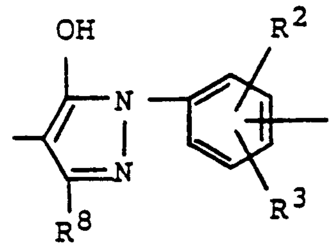
(9b)

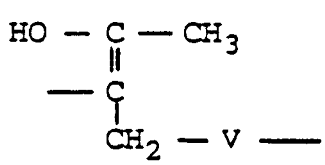
(9c)

in welchen M, p, V, $R^2$, $R^3$ und $R^8$ die obengenannten Bedeutungen haben und die Hydroxygruppe in Formel (9a) in ortho-Stellung zur freien Bindung steht, die mit der Azogruppe verbunden ist;

$D^2$ — ist ein Benzolrest, der durch 1 oder 2 Substituenten aus der Gruppe Methyl, Ethyl, Methoxy, Ethoxy, Brom, Chlor, Carboxy und Sulfo substituiert sein kann, oder ist ein Naphthalinrest, der durch eine Sulfogruppe substituiert sein kann;

$K^2$ — ist ein Rest der allgemeinen Formel (10a) oder (10b)

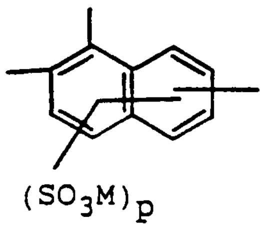

(10a)

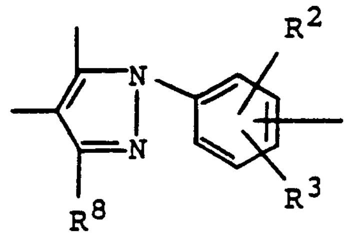

(10b)

in welchen M, p, $R^2$, $R^3$ und $R^8$ die obengenannten Bedeutungen haben.

In den erfindungsgemäßen Farbstoffen ist der Rest Z der allgemeinen Formel (4) bevorzugt ein Rest der allgemeinen Formel (4A)

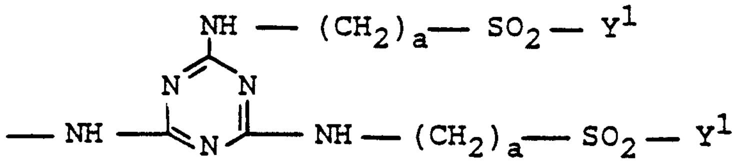

(4A)

in welcher jedes a für die Zahl 2 oder bevorzugt 3 steht und $Y^1$ eine der oben genannten Bedeutungen hat und jedes $Y^1$ bevorzugt die Vinylgruppe oder die β-Chloroethyl- oder die β-Sulfatoethyl-Gruppe ist.

Bevorzugt sind demgemäß insbesondere Farbstoffe der allgemeinen Formel (1) bzw. der allgemeinen Formeln (3a), (3b), (5a), (5b), (5c) und (5d), in welchen $R^\alpha$ ein Wasserstoffatom bedeutet und die Formelglieder A und B zueinander eine gleiche Bedeutung besitzen und jedes für einen Rest der allgemeinen Formel $-NH-(CH_2)_a-SO_2-Y^1$ steht, wobei die Formelglieder a und $Y^1$ eine der obengenannten, insbesondere bevorzugten Bedeutungen haben.

Von den erfindungsgemäßen Farbstoffen sind weiterhin solche hervorzuheben, die den nachstehenden allgemeinen Formeln (11a) bis (11n) entsprechen:

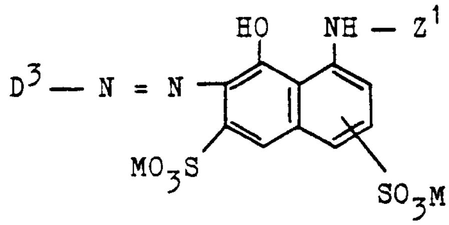

(11a)

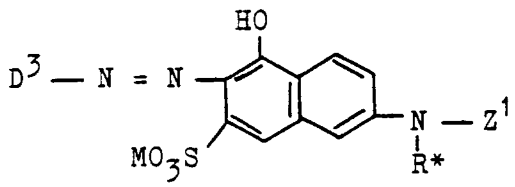

(11b)

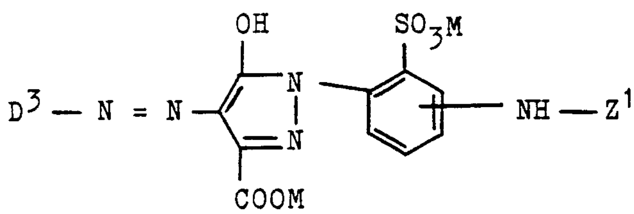

(11c)

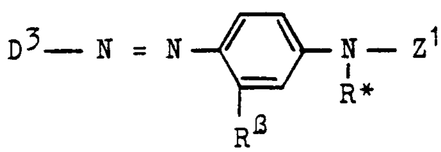

(11d)

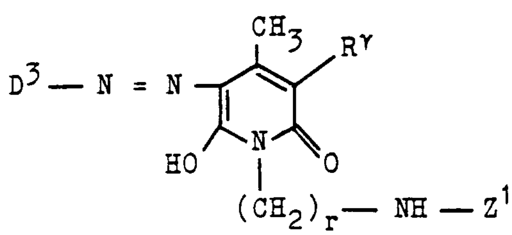

(11e)

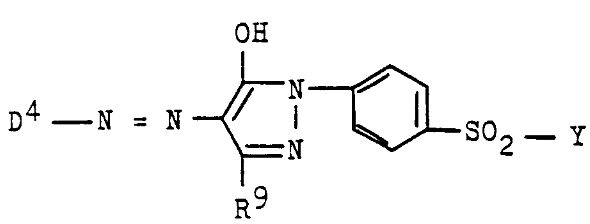

(11f)

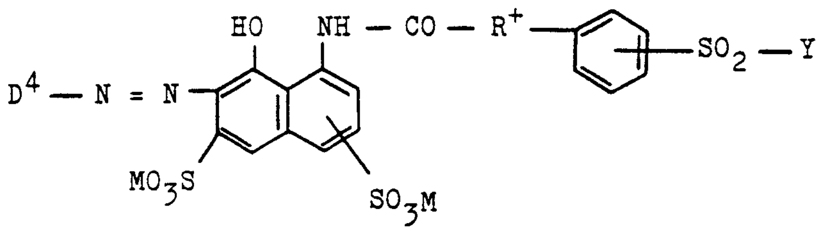

(11g)

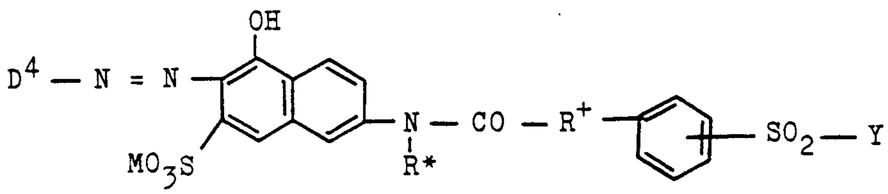

(11h)

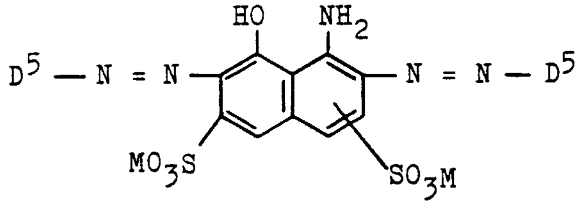

(11j)

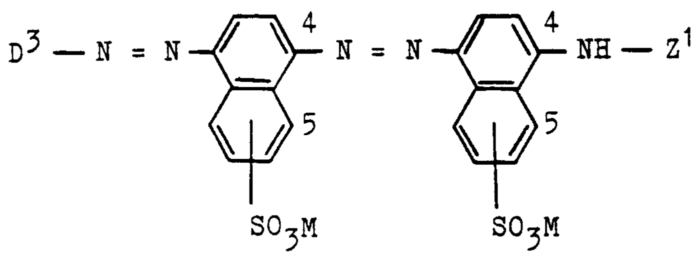

(11k)

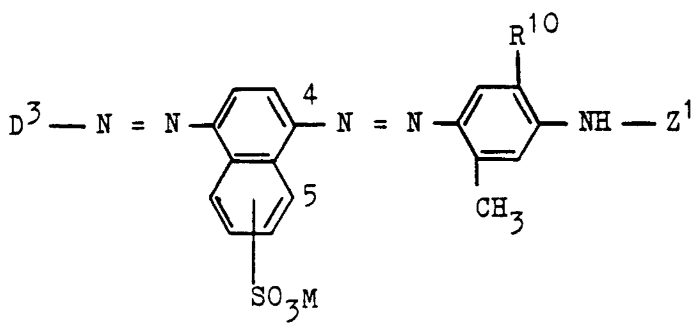

(11m)

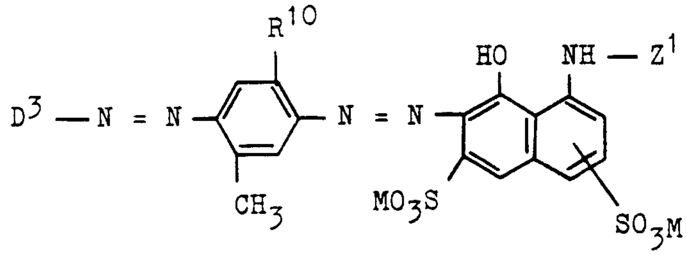

(11n)

In diesen Formeln bedeuten:

M hat eine der obengenannten Bedeutungen und ist vorzugsweise ein Wasserstoffatom und insbesondere Natrium, Kalium oder Lithium;

$D^3$ ist ein Phenyl- oder 2-Naphthyl-Rest, der durch eine Gruppe der oben definierten allgemeinen Formel $-SO_2-Y$ substituiert ist und der noch durch Substituenten gemäß den Gruppen $R^2$ und $R^3$

obiger Definition substituiert sein kann, wobei $D^3$ bevorzugt der 4-($\beta$-Sulfatoethylsulfonyl)-phenyl-, der 4-(Vinylsulfonyl)-phenyl-, der 3-($\beta$-Sulfatoethylsulfonyl)-phenyl-, der 3-(Vinylsulfonyl)-phenyl-, der 2-Sulfo-4-($\beta$-sulfatoethylsulfonyl)-phenyl-, der 2-Sulfo-4-(vinylsulfonyl)-phenyl-, der 4-Methoxy-3-($\beta$-sulfatoethylsulfonyl)-phenyl-, der 4-Methoxy-3-(vinylsulfonyl)-phenyl-, der 1-Sulfo-6-($\beta$-sulfatoethylsulfonyl)-2-naphth-yl- oder der 1-Sulfo-6-(vinylsulfonyl)-2-naphthyl-Rest ist;

$Z^1$ ist eine Gruppe der allgemeinen Formel (4a)

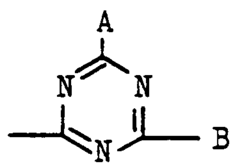

(4a)

in welcher A und B eine der obengenannten, insbesondere bevorzugten Bedeutungen haben;

$R^*$ ist ein Wasserstoffatom oder die Methylgruppe;

$R^\beta$ ist die Methyl-, Acetylamino- oder Ureidogruppe;

$R^\gamma$ ist ein Wasserstoffatom oder die Cyan- oder Carbamoylgruppe;

r ist die Zahl 2 oder 3;

$D^4$ ist eine Gruppe der allgemeinen Formel (12)

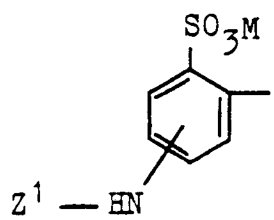

(12)

mit M und $Z^1$ der obengenannten Bedeutung, wobei die Gruppe $Z^1$-HN- entweder in para-Stellung zur mit der Azogruppe verbundenen freien Bindung oder in para-Stellung zur Sulfogruppe an den Benzolkern gebunden ist;

$R^9$ ist die Methyl- oder Carboxygruppe;

Y hat eine der obengenannten Bedeutungen und ist bevorzugt die Vinylgruppe und insbesondere die $\beta$-Sulfatoethyl-Gruppe;

$R^+$ ist eine direkte Bindung oder ist die Gruppe -NH- ;

$D^5$ ist in dem einen Falle ein Rest $D^4$ obengenannter Bedeutung und in dem anderen Falle ein Rest $D^3$ der obengenannten Bedeutung;

$R^{10}$ ist ein Wasserstoffatom oder die Methyl- oder Methoxygruppe;

die Sulfogruppe $-SO_3M$ in den Formeln (11k) und (11m) steht in 5-, 6- oder 8-Stellung an den Naphthalinrest gebunden.

Von diesen Verbindungen können insbesondere diejenigen hervorgehoben werden, die der allgemeinen Formel (11a) entsprechen, in welcher M eine der obengenannten, insbesondere bevorzugten Bedeutungen besitzt und $D^3$ einen Phenylrest bedeutet, der in para-Stellung zur Azogruppe durch eine Gruppe der Formel $-SO_2$-Y mit Y der obengenannten Bedeutung und bevorzugt mit der Bedeutung von Vinyl oder insbesondere $\beta$-Sulfatoethyl substituiert ist, oder $D^3$ den 1-Sulfo-2-naphthyl-Rest bedeutet, der in 6-Stellung durch die Gruppe $-SO_2$-Y mit Y der obengenannten Bedeutung und bevorzugt der Bedeutung einer Vinylgruppe und insbesondere einer $\beta$-Sulfatoethyl-Gruppe substituiert ist, und in welcher $Z^1$ einen Rest der allgemeinen Formel (4B)

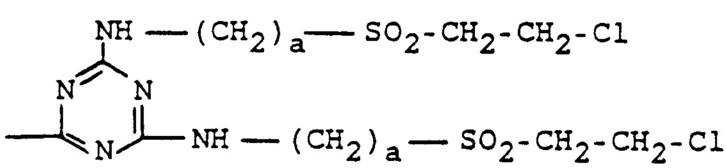

(4B)

bedeutet, in welcher a die Zahl 2 oder bevorzugt 3 ist.

Von den Verbindungen der allgemeinen Formel (11j) ist insbesondere diejenige Verbindung der Formel (11p)

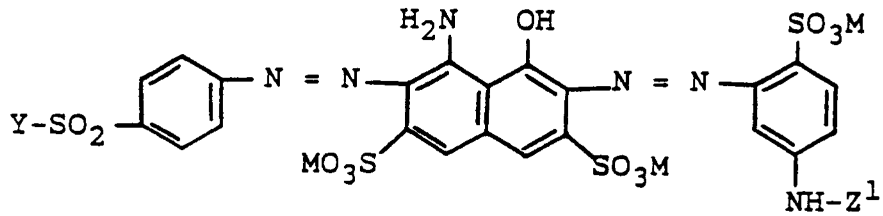

(11p)

bevorzugt, in welcher Y und M eine der obengenannten, insbesondere bevorzugten Bedeutungen besitzen und $Z^1$ ein Rest der oben genannten und definierten Formel (4B) ist.

Weiterhin sind von den obengenannten Verbindungen diejenigen der allgemeinen Formel (11b) von Interesse, in welchen insbesondere $D^3$ den Phenylrest bedeutet, der in para-Stellung zur Azogruppe durch eine Methoxygruppe und in meta-Stellung zur Azogruppe durch die Gruppe $-SO_2-Y$ mit Y der obengenannten Bedeutung und bevorzugt der Bedeutung einer Vinylgruppe und insbesondere einer $\beta$-Sulfatoethyl-Gruppe substituiert ist, M eine der obengenannten, insbesondere bevorzugten Bedeutungen besitzt, $R^*$ für ein Wasserstoffatom steht und $Z^1$ eine Gruppe der Formel (4C)

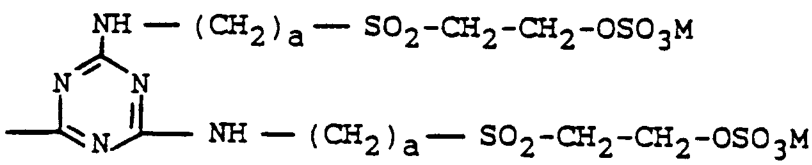

(4C)

mit M und a der obengenannten Bedeutung ist.

Die vorliegende Erfindung betrifft weiterhin Verfahren zur Herstellung der erfindungsgemäßen Farbstoffe. Beispielsweise lassen sie sich erfindungsgemäß analog bekannten Verfahrensweisen der Synthese von Azofarbstoffen oder deren Schwermetallkomplex-Verbindungen durch Umsetzung von dem Fachmann geläufigen Farbstoffvorprodukten, wobei mindestens eines dieser Farbstoffvorprodukte eine faserreaktive Gruppierung der allgemeinen Formel (4) und mindestens eines der Vorprodukte eine Gruppe $-SO_2-Y$ und/oder $-SO_2-Y^2$ enthält, herstellen. So können beispielsweise Mono- und Disazofarbstoffe der allgemeinen Formel (1) durch Umsetzung von deren Diazo- und Kupplungskomponenten in der hierfür üblichen Verfahrensweise der Diazotierung und Kupplung synthetisiert werden, wobei die Diazo- und Kupplungskomponenten eine faserreaktive Gruppe der allgemeinen Formel (4) bzw. der Formel $-SO_2-Y$ oder $-SO_2-Y^2$ enthalten. Im Falle der Synthese von Disazofarbstoffen kann bereits die Diazo- oder Kupplungskomponente die zweite Azogruppierung gebunden enthalten. Erfindungsgemäß einsetzbare Diazokomponenten sind die für faserreaktive Azofarbstoffe üblichen aromatischen carbocyclischen und heterocyclischen Aminoverbindungen, die gegebenenfalls die faserreaktive Gruppe der allgemeinen Formel (4) bzw. $-SO_2-Y$ oder $-SO_2-Y^2$ enthalten und erfindungsgemäß einsetzbaren Kupplungskomponenten sind solche zur Synthese von faserreaktiven Azofarbstoffen üblichen Kupplungskomponenten beispielsweise der Naphthol-, Anilin-, Naphthylamin-, Aminonaphthol-, Pyrazolon- und Pyridonreihe, die die faserreaktive Gruppe der allgemeinen Formel $-SO_2-Y$ oder $-SO_2-Y^2$ bzw. der allgemeinen Formel (4) enthalten. Solche Diazokomponenten sind beispielsweise Verbindungen, die der allgemeinen Formel $D^o-NH_2$ oder $D^*-Z$ bzw. $(Y^2-SO_2-X^1)_n-D^1-$ oder $(Y^2-SO_2-X^1)_n-D^2(OH)-$ mit $D^o$, $D^*$, Z, $Y^2$, $X^1$, n, $D^1$ und $D^2$ der obengenannten Bedeutung entsprechen, und solche Kupplungskomponenten sind bspw. die nachstehend genannten Verbindungen der allgemeinen Formeln (13a) bis (13d) und (14a) bis (14c)

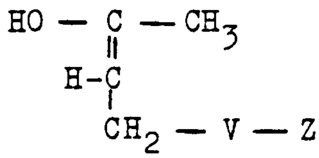
(13a)

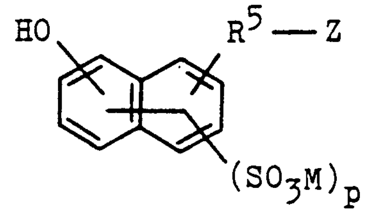
(13b)

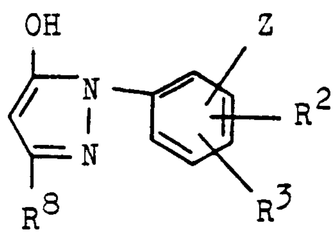
(13c)

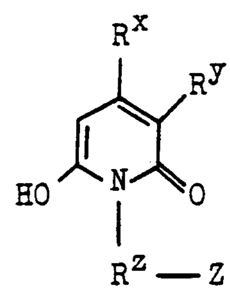
(13d)

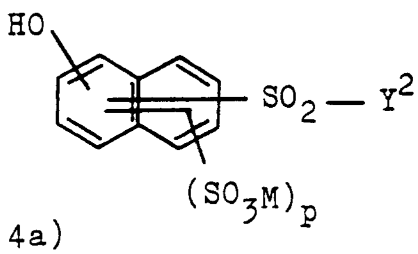
(14a)

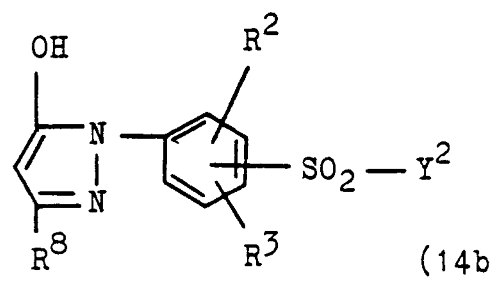
(14b)

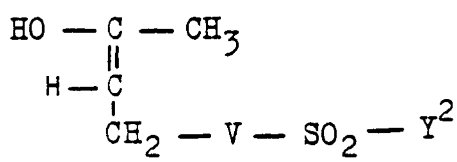
(14c)

mit Z, $Y^2$, V, $R^5$, M, p, $R^2$, $R^3$, $R^8$, $R^x$, $R^y$ und $R^z$ der obengenannten Bedeutung.

Weitere Diazokomponenten, die erfindungsgemäß zur Synthese der Farbstoffe der allgemeinen Formel (1) eingesetzt werden können, sind beispielsweise Diaminoverbindungen der allgemeinen Formel $H_2N$-D-$NH_2$ oder $H_2N$-D*-$NH_2$ mit D und D* der obengenannten Bedeutung bzw. deren Monoacylaminoderivate (wobei die Acylgruppe als übliche Schutzgruppe dient, um eine Diazotierung der zweiten Aminogruppe auszuschließen, die dann nach Diazotierung und Kupplung in üblicher Weise hydrolytisch abgespalten werden kann). Die mit diesen Diazokomponenten erhältlichen Aminoazoverbindungen können dann erfindungsgemäß mit einem Cyanurhalogenid oder einer Verbindung der allgemeinen Formel $Z^1$-Hal , worin $Z^1$ die obengenannte Bedeutung besitzt und Hal für ein Halogenatom, wie Fluor, Brom oder Chloratom, steht, analog bekannten Verfahrensweisen der Umsetzung von Aminoverbindungen bzw. Aminoazoverbindungen mit Halogen-triazin-Derivaten umgesetzt werden.

Die Diazotierungs- und Kupplungsreaktionen erfolgen in üblicher Weise, so die Diazotierung in der Regel bei einer Temperatur zwischen -5 °C und +15 °C und einem pH-Wert unterhalb von 2 mittels einer starken Säure und Alkalinitrit in bevorzugt wäßrigem Medium und die Kupplungsreaktion in der Regel bei einem pH-Wert zwischen 1,5 und 4,5 im Falle der aminogruppenhaltigen Kupplungskomponente und bei einem pH-Wert zwischen 3 und 7,5 im Falle der hydroxygruppenhaltigen Kupplungskomponente und bei einer Temperatur zwischen 0 und 25 °C, ebenso bevorzugt in wäßrigem Medium.

Die erfindungsgemäßen Farbstoffe können ebenfalls erfindungsgemäß in der Weise hergestellt werden, indem man ein Cyanurhalogenid, wie Cyanurfluorid, Cyanurbromid oder Cyanurchlorid, mit einer Verbindung der allgemeinen Formel (15)

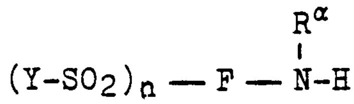

(15)

in welcher F, Y, $R^{\alpha}$ und n die obengenannten Bedeutungen haben, und einer oder zwei Amonoverbindungen der allgemeinen Formel (16)

$H_2N$-A (16)

in welcher A eine der obengenannten Bedeutungen hat, wobei A auch eine andere Bedeutung gemäß dem Rest B darstellen kann, in beliebiger Folge umsetzt. So kann man zunächst eine Aminoverbindung der allgemeinen Formel (15) mit einem Cyanurhalogenid, vorzugsweise Cyanurchlorid oder Cyanurfluorid, zur Dihalogentriazinylamino-Verbindung der allgemeinen Formel (17)

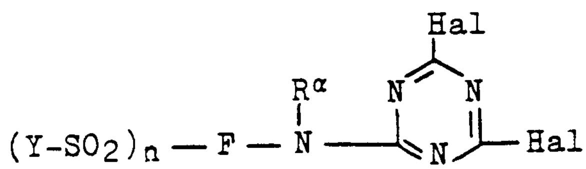

(17)

in welcher Hal ein Halogenatom, vorzugsweise Chlor oder Fluor, ist und F, Y, $R^{\alpha}$ und n die obengenannten Bedeutungen haben, umsetzen, und diese wird durch Reaktion mit einer oder zwei Aminoverbindungen der allgemeinen Formel (16) in äquivalenter Menge in den Endfarbstoff (1) übergeführt, oder man setzt zunächst eine Aminoverbindung der allgemeinen Formel (16) mit einem Cyanurhalogenid zur Halogentriazinylamino-Verbindung der allgemeinen Formel (18a) oder (18b)

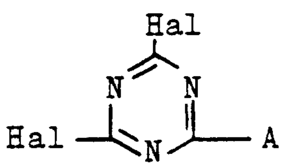

(18a)

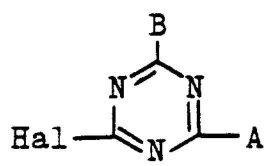

(18b)

mit Hal, A und B der obengenannten Bedeutungen und diese in äquivalenter Menge mit der Verbindung der allgemeinen Formel (15) zum Endfarbstoff (1) um. Die Kondensationsreaktionen zwischen dem Cyanurhalogenid bzw. den Halogentriazinylamino-Verbindungen (17) und (18) mit den Aminoverbindungen (15) und/oder (16) können in der üblichen Weise der Umsetzung eines Cyanurhalogenids bzw. einer Halogenotriazinylaminoverbindung mit Aminoverbindungen erfolgen, so in organischem oder bevorzugt wäßrig-organischem Medium, insbesondere bevorzugt in wäßrigem Medium unter Zusatz säurebindender Mittel, wie Alkali- oder Erdalkalicarbonaten, Alkali- oder Erdalkalihydrogencarbonaten oder -hydroxiden oder Alkaliacetaten, wobei die Alkali- und Erdalkalimetalle vorzugsweise Natrium, Kalium oder Calcium sind. Säurebindende Mittel sind ebenso tertiäre Amine, wie beispielsweise Pyridin, Triethylamin oder Chinolin. Sofern diese Kondensationsreaktionen in organischem oder wäßrig-organischem Medium erfolgen, ist das (anteilige) organische Lösemittel Aceton, Dioxan und Dimethylformamid.

Die Kondensationsreaktionen zwischen dem Cyanurhalogenid und den Aminoverbindungen erfolgen in der Regel bei einer Temperatur zwischen -10° und +70°, vorzugsweise zwischen -5°C und +30°C, sowie bei einem pH-Wert zwischen 1,5 und 12, bevorzugt zwischen 4,5 und 8. Die Umsetzung der Halogentriazinylamino-Verbindungen der allgemeinen Formeln (17) oder (18) mit einer Aminoverbindung der allgemeinen Formel (15) bzw. (16) erfolgt beispielsweise bei einer Temperatur zwischen 0 und 70°C, bevorzugt zwischen 10 und 50°C, und bei einem pH-Wert zwischen 2 und 8, bevorzugt zwischen 4 und 7.

Bei den Kondensationsreaktionen ist darauf zu achten, daß die faserreaktiven Gruppierungen im alkalischen Bereich nicht geschädigt werden.

Die erfindungsgemäßen Farbstoffe, die als Gruppen $-SO_2-Y$ $\beta$-Sulfatoethylsulfonyl- oder $\beta$-Phosphatoethylsulfonyl-Gruppen besitzen, können erfindungsgemäß auch so hergestellt werden, daß man einen Farbstoff der allgemeinen Formel (1) mit obiger Bedeutung, in welcher jedoch eine oder mehrere der Formeln Y, $Y^1$ und $Y^2$ eine $\beta$-Hydroxyethyl-Gruppe darstellen, analog bekannten Verfahrensweisen mit einem Sulfatierungsmittel bzw. Phosphatierungsmittel, wie konzentrierter Schwefelsäure oder Schwefeltrioxid enthaltender Schwefelsäure bzw. wäßriger konzentrierter Phosphorsäure oder Polyphosphorsäure, umsetzt, wobei die Sulfatisierung in der Regel bei einer Temperatur zwischen 10°C und 25°C und die Phosphatisierung bei einer Temperatur zwischen 20 und 100°C erfolgt.

Die Ausgangsfarbstoffe mit den $\beta$-Hydroxyethylsulfonyl-Gruppen sind analog den obigen Angaben zur Herstellung der erfindungsgemäßen Farbstoffe synthetisierbar, indem man entweder entsprechende Farbstoffvorprodukte einsetzt, die diese $\beta$-Hydroxyethylsulfonyl-Gruppe(n) enthalten oder einen Amino-Farbstoff der allgemeinen Formel (15) und eine Aminoverbindung der allgemeinen Formel (16), in welcher jedoch Y für die $\beta$-Hydroxyethyl-Gruppe steht, mit einem Cyanurhalogenid gemäß den obigen Reaktionsbedingungen umsetzt.

Bei der erfindungsgemäßen Synthese von Schwermetallkomplex-Azofarbstoffen, beispielsweise solchen entsprechend der allgemeinen Formeln (5d), geht man in der Regel von solchen schwermetallfreien Azoverbindungen aus, die in der Kupplungskomponente eine phenolische oder naphtholische Hydroxygruppe in ortho-Stellung bzw. vicinaler Stellung zur Azogruppe gebunden enthalten und deren Diazokomponentenrest in ortho-Stellung zur Azogruppe ein Wasserstoffatom oder eine Hydroxygruppe oder eine niedere Alkoxygruppe, wie Methoxygruppe, gebunden enthält und die zudem einen Acylaminorest gebunden enthalten, wie einen Acetylaminorest entsprechend der allgemeinen Formel $-N(R^\alpha)$-Acyl , in welcher Acyl für den Acylrest einer organischen Säure, wie einer niederen Alkancarbonsäure, steht und $R^\alpha$ eine der obengenannten Bedeutungen besitzt, so beispielsweise von einer Ausgangsverbindung entsprechend der allgemeinen Formel (20)

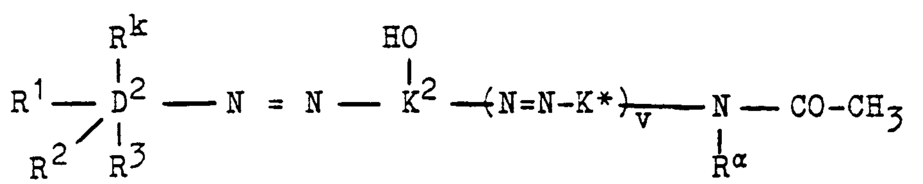
(20)

aus, in welcher $R^1$, $R^2$, $R^3$, $D^2$, $K^2$, $K^*$, v und $R^\alpha$ eine der obengenannten Bedeutungen haben und $R^k$ ein Wasserstoffatom oder eine in ortho-Stellung zur Azogruppe an $D^2$ gebundene Hydroxy- oder Methoxygruppe, ist, und setzt diese acylaminogruppenhaltige Ausgangs-Azoverbindung analog bekannten und üblichen Verfahrensweisen mit einem Schwermetall-abgebenden Mittel, wie einem Schwermetallsalz, um oder unterwirft sie im Falle der Bildung eines Kupferkomplex-Azofarbstoffes einer auf üblichem Wege durchzuführenden oxidativen oder entalkylierenden Kupferungsreaktion. Die nun erhaltenen Schwermetallkomplex-Azoverbindungen mit der Acylaminogruppe können sodann analog bekannten Verfahrensweisen unter Verseifung (Hydrolyse) der Acylaminogruppe zur Aminogruppe mit einem Cyanurhalogenid und einer Aminoverbindung entsprechend der allgemeinen Formel (16) zu den erfindungsgemäßen Farbstoffen der allgemeinen Formel (1) umgesetzt werden.

Erfindungsgemäße Farbstoffe entsprechend der allgemeinen Formel (1), in welchen eine oder mehrere der Formelreste Y, $Y^1$ und $Y^2$ eine Vinylgruppe darstellen, können erfindungsgemäß auch aus Farbstoffen entsprechend der allgemeinen Formel (1) erhalten werden, bei denen mindestens eine der Formelreste Y, $Y^1$ und $Y^2$ eine $\beta$-Sulfatoethyl- oder $\beta$-Halogenethyl-Gruppe bedeuten, indem man die $\beta$-Sulfatoethyl- oder $\beta$-Halogenethyl-Gruppe durch Behandlung mit einem wäßrigem Alkali, wie beispielsweise Natriumhydrogencarbonat oder Natriumhydroxid, so in wäßrigem Medium bei einer Temperatur von 50 bis 60°C und einem pH-Wert von 9 bis 11, zur Vinylgruppe überführt.

Die Ausgangsverbindungen der allgemeinen Formel (16) sind beispielsweise aus der deutschen Patentschrift 26 14 550 und der anfangs erwähnten europäischen Patentschrift Nr. 0 076 782 bekannt. Dort expressis verbis nicht beschriebene Verbindungen können analog diesen in der für den Chemiker geläufigen Weise hergestellt werden, so beispielsweise gemäß der entsprechenden Angabe in der deutschen Patentschrift Nr. 887 505.

Aromatische Amine entsprechend der allgemeinen Formel $(Y-SO_2-X^1-)_n-D-NH_2$ als Diazokomponenten in den erfindungsgemäßen Mono- und Disazofarbstoffen bzw. als Ausgangsverbindungen zur Synthese dieser Farbstoffe sind beispielsweise 4-VS-Anilin (wobei hier wie im folgenden VS eine Gruppe der allgemeinen Formel $-SO_2-Y^2$ mit $Y^2$ der obengenannten Bedeutung darstellt), 3-VS-Anilin, 2-Brom-4-VS-anilin, 2-Sulfo-5-VS-anilin, 2-Sulfo-4-VS-anilin, 2-Methoxy-5-VS-anilin, 2-Methoxy-5-methyl-4-VS-anilin, 2,5-Dimethoxy-4-VS-anilin, 2-Hydroxy-5-VS-anilin, 4-Chlor-3-VS-anilin, 2-Chlor-5-VS-anilin, 3,4-Di-VS-anilin-, 2,5-Di-VS-anilin-, 4-(β-Sulfatoethylamino)-3-VS-anilin,2-(β-Sulfatoethylamino)-5-VS-anilin, 4-(β-Succinylamidoethylamido)-3-VS-anilin, 4-(3′-VS-benzoylamido)-anilin, 3-(3′-VS-benzoylamido)-anilin, 6-VS-2-Naphthylamin, 8-VS-2-naphthylamin, 1-Sulfo-6-VS-2-naphthylamin, 6-Sulfo-8-VS-2-naphthylamin, 6-Sulfo-8-VS-1-hydroxy-2-naphthylamin, 2-Amino-4,4′-di-VS-diphenyl, 2-Sulfo-5-[γ-(β′-chlorethylsulfonyl)-butyrylamino]-anilin, 2-Sulfo-5-[γ-(vinylsulfonyl)(-butyrylamino]-anilin, 2-Sulfo-4-[γ-(β′-chlorethylsulfonyl)-butyrylamino]-anilin und 2-Sulfo-4-[γ-(vinylsulfonyl)-butyrylamino]-anilin.

Ausgangsverbindungen entsprechend der allgemeinen Formel $H_2N-D-NH_2$ bzw. $H_2N-D^*-NH_2$ sind beispielsweise 1,4-Phenylen-diamin, 1,4-Phenylendiamin-2-sulfonsäure, 1,4-Phenylendiamin-2-carbonsäure, 1,4-Diamino-naphthalin-2-sulfonsäure, 2,6-Diamino-naphthalin-8-sulfonsäure, 2,6-Diamino-naphthalin-4,8-disulfonsäure, 1,3-Phenylendiamin, 1,3-Phenylendiamin-4-sulfonsäure, 1,3-Phenylendiamin-4,6-disulfonsäure,1,4-Phenylendiamin-2,6-disulfonsäure, 1,4-Phenylendiamin-2,5-disulfonsäure, 1,4-Diamino-naphthalin-6-sulfonsäure, 4,4′-Diamino-diphenyl-3-sulfonsäure und 4,4′-Diamino-stilben-2,2′-disulfonsäure.

Ausgangsverbindungen entsprechend der allgemeinen Formel $H-E-NH_2$ bzw. $H-E^1-NH_2$ , die zur Synthese der erfindungsgemäßen Disazofarbstoffe eingesetzt werden können und sowohl als Kupplungskomponente und anschließend an die Kupplung als Diazokomponente dienen, sind beispielsweise Anilin, 3-Methyl-anilin, 2,5-Dimethyl-anilin, 2,5-Dimethoxy-anilin, 3-Methoxy-anilin, 3-Acetylamino-anilin, 3-Propionylamino-anilin, 3-Butyrylamino-anilin, 3-Benzoylamino-anilin, 3-Ureido-anilin, 2-Methyl-5-acetylamino-anilin, 2-Methoxy-5-acetylamino-anilin, 2-Methoxy-5-methyl-anilin, 1-Aminonaphthalin-6-sulfonsäure, 1-Aminonaphthalin-7-sulfonsäure, 2-Sulfo-5-acetylamino-anilin, 2-Amino-5-naphthol-7-sulfonsäure, 2-Amino-8-naphthol-7-sulfonsäure, 2-(4′-Amino-benzoylamino)-5-naphthol-7-sulfonsäure, 1-(4′-Amino-2-sulfo-phenyl)-3-methyl- oder -3-carboxy-5-pyrazolon und N-(3-Sulfo-4-amino)-acetoacetyl-anilid.

Ausgangsverbindungen, die als Kupplungskomponenten entsprechend der allgemeinen Formel $H-K^1-X^2-SO_2-Y^2$ bzw. $H-K-X^1-SO_2-Y^2$ zur Synthese der erfindungsgemäßen Farbstoffe dienen können, sind beispielsweise 1-[4′-(β-Sulfatoethylsulfonyl)-phenyl]-3-methyl-5-pyrazolon, 1-[4′-(Vinylsulfonyl)-phenyl]-3-methyl-5-pyrazolon, 1-[4′-(Vinylsulfonyl)-phenyl]-3-carboxy-5-pyrazolon, 1-[3′-(β-Chlorethylsulfonyl)-benzoylamino]-3,6-disulfo-8-naphthol, 1-[3′-(Vinylsulfonyl)-benzoylamino]-3,6-disulfo-8-naphthol,1-[3′-(Vinylsulfonyl)-benzoylamino]-4,6-disulfo-8-naphthol,1-[3′-(β-Sulfatoethylsulfonyl)-benzoylamino]-4,6-disulfo-8-naphthol, 2-[3′-(β-Chlorethylsulfonyl)-benzoylamino]-6-sulfo-8-naphthol, 2-[3′-(Vinylsulfonyl)-benzoylamino]-6-sulfo-8-naphthol, 3-[3′-(β-Chlorethylsulfonyl)-benzoylamino]-6-sulfo-8-naphthol, 3-[3′-(Vinylsulfonyl)-benzoylamino]-6-sulfo-8-naphthol, 6-Sulfo-1-[3′-β-chlorethylsulfonyl)-benzoylamino]-naphthol, 7-Sulfo-1-[3′-β-vinylsulfonyl)-benzoylamino]-naphthol, 2-[N-Methyl-N-(β-sulfatoethylsulfonyl)-amino]-6-sulfo-8-naphthol, 3-[N-Methyl-N-(β-sulfatoethylsulfonyl)-amino]-6-sulfo-8-naphthol, 2-[N-Ethyl-N-(β-sulfatoethylsulfonyl)-amino]-6-sulfo-8-naphthol, 1-[N′-(3′-β-Chlorethylsulfonyl-phenyl)-ureido]-3,6-disulfo-8-naphthol, 1-[N′-(3′-Vinylsulfonyl-phenyl)-ureido]-3,6-disulfo-8-naphthol, 1-[N′-(3′-Vinylsulfonyl-propyl)-ureido]-3,6-disulfo-8-naphthol, 1-[N′-(3′-β-Chlorethylsulfonyl-phenyl)-ureido]-4,6-disulfo-8-naphthol, 1-[N′-(3′-Vinylsulfonyl-phenyl)-ureido]-4,6-disulfo-8-naphthol, 1-[N′-(3′-β-Chlorethylsulfonyl-propyl)-ureido]-4,6-disulfo-8-naphthol, 2-[N′-(3′-β-Sulfatoethylsulfonyl-phenyl)-ureido]-6-sulfo-8-naphthol, 2-[N′-(3′-β-Chlorethylsulfonyl-propyl)-ureido]-6-sulfo-8-naphthol, 3-[N′-(3′-β-Chlorethylsulfonyl-phenyl)-ureido]-6-sulfo-8-naphthol, 3-[N′-(3′-Vinylsulfonyl-propyl)-ureido]-6-sulfo-8-naphthol, 2-Sulfo-5-[N′-(3″-β-chlorethylsulfonyl)-phenyl]-ureido-anilin, 3-[N′-(3″-β-Sulfatoethylsulfonyl-phenyl]-ureido-anilin und 6-Sulfo-1-[N′-(3″-β-Sulfatoethylsulfonyl)-phenyl]-ureido-naphthol.

Kupplungskomponenten entsprechend der allgemeinen Formel $H-K-NHR^{\alpha}$ bzw. $H-K^*-NHR^{\alpha}$, die zum Aufbau der erfindungsgemäßen Azofarbstoffe dienen, in welchen der faserreaktive Rest der allgemeinen Formel (4) in der Kupplungskomponente enthalten ist, in deren Aminogruppe $-NHR^{\alpha}$ anschließend dieser faserreaktive Rest eingeführt werden kann, sind beispielsweise Anilin, 3-Methyl-anilin, 2,5-Dimethyl-anilin, 2,5-Dimethoxy-anilin, 3-Methoxy-anilin, 3-Acetylamino-anilin, 3-Propionylamino-anilin, 3-Butyrylamino-anilin, 3-Benzoylamino-anilin, 3-Ureido-anilin, 2-Methyl-5-acetylamino-anilin, 2-Methoxy-5-acetylamino-anilin, 2-Methoxy-5-methyl-anilin, 1-Aminonaphthalin-6-sulfonsäure, 1-Amino-7-sulfonsäure, 1-Aminonaphthalin-8-sulfonsäure, 2-Sulfo-5-acetylamino-anilin, 2-Amino-5-naphthol-7-sulfonsäure, 2-Amino-8-naphthol-6-sulfonsäure, 2-(4′-Aminobenzoyl-amino)-5-naphthol-7-sulfonsäure, 1-(4′-Amino- oder 1-(4′-Acetylamino-2-sulfophenyl)-3-methyl- oder -3-carboxy-5-pyrazolon, N-(3-Sulfo-4-amino)-acetoacetyl-anilid, 1-Amino-8-naphthol-3,6- oder -4,6-disulfonsäure, 1-(3′- oder 1-(4′-Aminobenzoyl)-amino-8-naphthol-3,6- oder -4,6-disulfonsäure, 1-Acetylamino-8-naphthol-3,6- oder -4,6-disulfonsäure, 2-Acetylamino-5-naphthol-7-sulfonsäure, 2-Acetylamino-8-naphthol-6-sulfonsäure, 3-Acetylamino-8-naphthol-6-sulfonsäure, 3-(N-Methylamino)-8-naphthol-6-sulfonsäure, 1-(3'-Amino- oder 1-(3'-Acetylamino-6'-sulfophenyl)-3-methyl- oder -3-carboxy-5-pyrazolon, 2-(N-Methyl-N-acetylamino)- oder 2-Methylamino-5-naphthol-7-sulfonsäure, N-Methyl-anilin und N-Propyl-m-toluidin.

Ausgangsverbindungen entsprechend der allgemeinen Formel (16) sind beispielsweise γ-(β'-Chlorethylsulfonyl)-propylamin, γ-(β'-Sulfatoethylsulfonyl)-propylamin, γ-(β'-Hydroxyethylsulfonyl)-propylamin, γ-(Vinylsulfonyl)-propylamin, N-Ethyl-β-(β'-chlorethylsulfonyl)-ethylamin, N-Ethyl-γ-(β'-chlorethylsulfonyl)-propylamin, N-Ethyl-γ-(β'-sulfatoethylsulfonyl)-propylamin, N-Ethyl-γ-(β'-hydroxyethylsulfonyl)-propylamin, N-Ethyl-γ-(vinylsulfonyl)-propylamin, Bis-γ-[(β-chlorethylsulfonyl)-propyl)-amin, Bis-γ-[(β-hydroxyethylsulfonyl)-propyl)-amin, β-Hydroxy-γ-(β'-chlorethylsulfonyl)-propylamin, β,γ-Di-(β'-chlorethylsulfonyl)-propylamin, β-Acetoxy-γ-(β'-acetoxyethylsulfonyl)-propylamin, β-Chlor-γ-(β'-chlorethylsulfonyl)-propylamin, β-Brom-γ-(β'-chlorethylsulfonyl)-propylamin, β-Sulfato-γ-(β'-sulfatoethylsulfonyl)-propylamin, Bis-[β-hydroxy-γ-(β'-chlorethylsulfonyl)-propyl]-amin, Bis-[β-chlor-γ-(β'-chlorethylsulfonyl)-propyl]-amin, Bis-[β-sulfato-γ-(β'-sulfatoethylsulfonyl)-propyl]-amin, β-Hydroxy-γ-(vinylsulfonyl)-propylamin, β-[β'-(β''-Chlorethylsulfonyl)-ethoxy]-ethylamin, 4-(β-Chlorethylsulfonyl)-cyclohexylamin, 4-(β-Sulfatoethylsulfonyl)-cyclohexylamin, 4-(β-Sulfatoethylsulfonyl)-piperidin, 4-(Vinylsulfonyl)-piperidin, N'-[γ-(β'-Chlorethylsulfonyl)-propyl]-piperazin, 2-[β-(β'-Chlorethylsulfonyl)-ethyl]-piperidin und 3-[(β-Sulfatoethylsulfonyl)-methyl]-piperidin.

Bivalente Kupplungskomponenten, die zum Aufbau solcher Disazofarbstoffe geeignet sind, in welchem der bivalente Kupplungsrest mit zwei Diazokomponenten verbinden ist, von denen die eine einen faserreaktiven Rest der allgemeinen Formel $Y\text{-}SO_2\text{-}X^1$- und die andere einen faserreaktiven Rest der allgemeinen Formel (4) enthält, sind beispielsweise Resorcin, 5,5'-Dihydroxy-7,7'-disulfo-2,2'-dinaphthylharnstoff und insbesondere 1-Amino-8-naphthol-3,6-disulfonsäure und 1-Amino-8-naphthol-4,6-disulfonsäure.

Die erfindungsgemäßen Farbstoffe entsprechend der allgemeinen Formel (1) eignen sich als faserreaktive Farbstoffe zum Färben und Bedrucken von hydroxygruppenhaltigen Fasern, wie Cellulosefasermaterialien, insbesondere Baumwolle, und ebenso für synthetische oder natürliche Polyamidfasern, wie Wolle. Als Färbeverfahren eignen sich die bekannten Färbe- und Druckverfahren für faserreaktive Farbstoffe, insbesondere solche für faserreaktive Farbstoffe, die eine Kombination aus den faserreaktiven Gruppen der Fluortriazin- und Vinylsulfonreihe besitzen. Solche Verfahrensweisen sind zahlreich in der Allgemein- und Patentliteratur beschrieben

Insbesondere sind die erfindungsgemäßen Farbstoffe im Kaltverweilverfahren mit Vorteil anwendbar, da sie sich durch eine gleichmäßig hohe Fixierausbeute auszeichnen. Vorteilhaft ist auch ihre Anwendung beim Färben nach den üblichen Ausziehverfahren, desweiteren nach den Einbad-Klotz-Dämpf-Verfahren,den Zweibad-Klotz-Aufdock-Verfahren und den Zweibad-Klotz-Dämpf-Verfahren. Auch bei den Druckverfahren zeigen sie gleichmäßig hohe Fixierausbeuten, unabhängig von der Art der Fixierung, die beispielsweise durch Dämpfen oder in der Trockenhitze erfolgen kann. Die erfindungsgemäß erhältlichen Färbungen und Drucke sind von hoher Brillanz und Farbstärke. Sie zeigen gute Lichtechtheiten, auch im nassen Zustand, und gute Naßechtheiten, wie gute Echtheiten bei der 60 °C- und 95 °C-Wäsche und gute Seewasser-, saure und alkalische Schweiß-und Chlorbadewasserechtheiten, desweiteren eine gute Peroxidechtheit und Abgasechtheit. Ferner zeichnen sich die Farbstoffe durch Unempfindlichkeit gegen atmosphärische Einflüsse aus. Desweiteren liefern sie gute Färbungen auf Polyamidfasermaterialien, wie Wolle, wobei insbesondere deren gute Lichtechtheit und insbesondere deren guten Wasch- und Schweißechtheiten hervorgehoben werden können. Desweiteren ist ihr gutes Aufbauvermögen zu nennen.

Die nachstehenden Beispiele dienen zur Erläuterung der Erfindung. Die darin genannten Teile sind Gewichtsteile, die Prozentangaben stellen Gewichtsprozente dar, sofern nicht anders vermerkt. Gewichtsteile beziehen sich zu Volumenteilen wie Kilogramm zu Liter. Die in den Beispielen formelmäßig beschriebenen Verbindungen sind in Form der freien Säuren angegeben; im allgemeinen werden sie in Form ihrer Natrium- oder Kaliumsalze hergestellt und isoliert und in Form ihrer Salze zum Färben verwendet. Ebenso können die in den nachfolgenden Beispielen, insbesondere Tabellenbeispielen, in Form der freien Säure genannten Ausgangsverbindungen und Komponenten als solche oder in Form ihrer Salze, vorzugsweise Alkalisalze, in die Synthese eingesetzt werden.

Die für die erfindungsgemäßen Verbindungen angegebenen Absorptionsmaxima ($\lambda_{max}$) im sichtbaren Bereich wurden anhand derer Alkalimetallsalze in wäßriger Lösung ermittelt. In den Tabellenbeispielen sind die $\lambda_{max}$-Werte bei der Farbtonangabe in Klammern gesetzt; die Wellenlängenangabe bezieht sich auf nm.

**Beispiel 1**

Eine neutrale Lösung von 31,9 Teilen 1-Amino-3,6-disulfo-8-naphthol in 800 Teilen Wasser wird bei 0 °C und einem pH-Wert von 4,5 langsam innerhalb von 5 Minuten mit 14,2 Teilen Cyanurfluorid versetzt. Anschließend gibt man 22,3 Teile γ-(β'-Chlorethylsulfonyl)-propylamin-hydrochlorid unter Einhaltung eines

pH-Wertes von 7 und einer Temperatur von 5 bis 15 °C hinzu und rührt noch einige Zeit nach. Sodann gibt man bei 50 bis 55 °C und einem pH-Wert von 6,5 nochmals 22,3 Teile dieses Propylaminhydrochlorids hinzu und rührt bei dieser Temperatur und dem pH von 6,5 noch weitere 4 Stunden nach. Anschließend versetzt man den Ansatz bei 15 bis 30 °C mit der wäßrigen salzsauren Lösung des Diazoniumsalzes von 51,1 Teilen 1-Sulfo-2-amino-6-(β-sulfatoethylsulfonyl)-naphthalin und führt die Kupplungsreaktion bei einem pH-Wert von 6 durch.

Der gebildete erfindungsgemäße Monoazofarbstoff wird durch Sprühtrocknen bei einem pH-Wert von 7 aus der Syntheselösung isoliert. Er zeigt sehr gute Farbstoffeigenschaften und liefert auf den in der Beschreibung genannten Fasermaterialien, wie insbesondere Baumwolle, nach den üblichen Applikations- und Fixierverfahren, für faserreaktive Farbstoffe farbstarke rote Färbungen. Der Farbstoff besitzt, in Form der freien Säure geschrieben, die Formel:

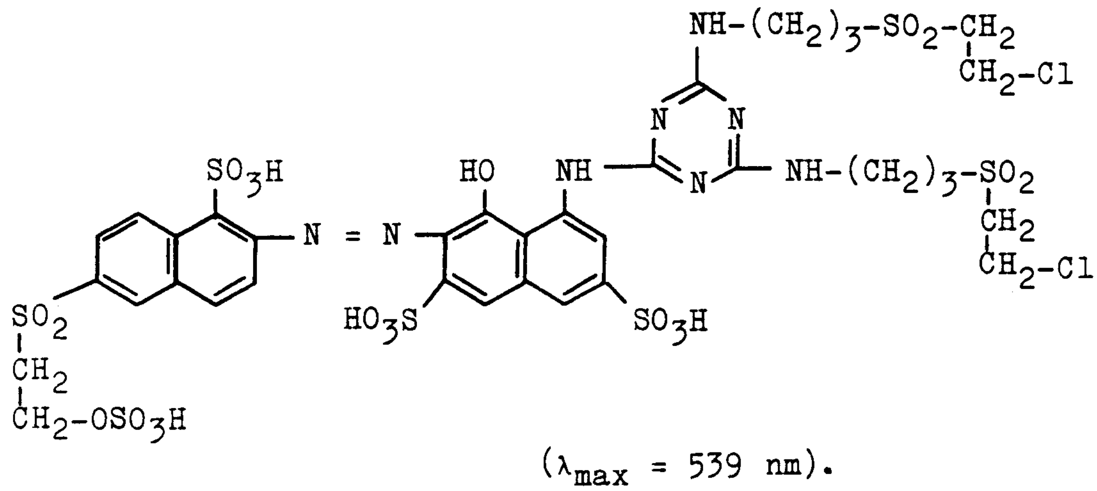

($\lambda_{max}$ = 539 nm).

**Beispiel 2**

Die gemäß Beispiel 1 erhaltene wäßrige Lösung des erfindungsgemäßen Farbstoffes wird bei 0 bis 5 °C während etwa 4 Stunden bei einem pH-Wert von 10,5 bis 11,5 gerührt, danach in üblicher Weise geklärt. Der synthetisierte erfindungsgemäße Vinylsulfon-Farbstoff der Formel wird als Alkalimetallsalz (Natriumsalz) durch Sprühtrocknung bei einem pH-Wert zwischen 5,5 und 7 isoliert. Er färbt ebenfalls Fasermaterialien, wie Baumwolle, in echten roten Tönen. Der Farbstoff besitzt, in Form der freien Säure geschrieben, die Formel

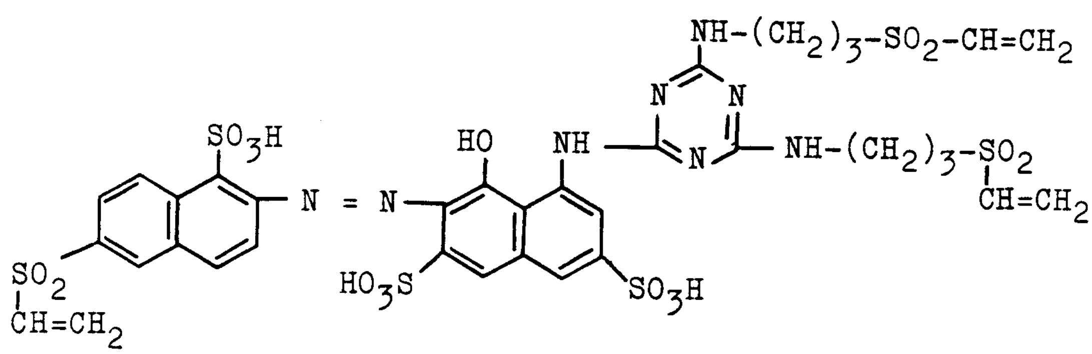

($\lambda_{max}$ = 540 nm).

**Beispiel 3**

Unter Rühren gibt man in eine Suspension von 255,2 Teilen 1-Amino-3,6-disulfo-8-naphthol in 1440 Teilen Wasser und 720 Teilen Eis unter Einhaltung eines pH-Wertes von 1,7 bis 2,2 155,2 Teile Cyanurchlorid; man rührt den Ansatz noch etwa 4 Stunden bei 0 bis 3 °C und dem angegebenen pH-Bereich weiter und setzt dann 204 Teile γ-(β'-Hydroxyethylsulfonyl)-propylamin-hydrochlorid hinzu und führt die zweite Kondensationsreaktion bei einem pH-Wert von 7 und einer Temperatur von 60 °C durch. Die dritte Kondensationsreaktion wird nach Zugabe von weiteren 204 Teilen dieses Propylaminhydrochlorids bei einem pH-Wert von 9 und einer Temperatur von 80 bis 90 °C ausgeführt. Der Ansatz wird danach bei 15 bis 30 °C mit der wäßrigen, salzsauren Suspension des Diazoniumsalzes von 411 Teilen 1-Sulfo-2-amino-6-(β-sulfatoethylsulfonyl)-naphthalin versetzt, und die Kupplungsreaktion erfolgt innerhalb dieses Temperaturbereiches und bei einem pH-Wert von 7. Man klärt danach die Syntheselösung und sprühtrocknet sie. Das elektrolythaltige Produkt wird innerhalb einer Stunde bei maximal 10 °C in ein Gemisch aus 800 Volumenteilen Schwefelsäure-Monohydrat und 424 Volumenteilen 20%igem Oleum eingetragen. Nach etwa 2 Stunden ist bei 10 °C die Veresterung beendet. Der Ansatz wird auf Eis gegeben und überschüssige Schwefelsäure mittels Calciumcarbonat neutralisiert. Das Calciumsulfat wird abgesaugt und mit Wasser gewaschen. Der erfindungsgemäße Farbstoff wird aus den vereinigten Filtraten durch Eindampfen unter reduziertem Druck bei 60 °C oder durch Sprühtrocknung als Alkalimetallsalz isoliert. Er besitzt, in Form der freien Säure geschrieben, die Formel

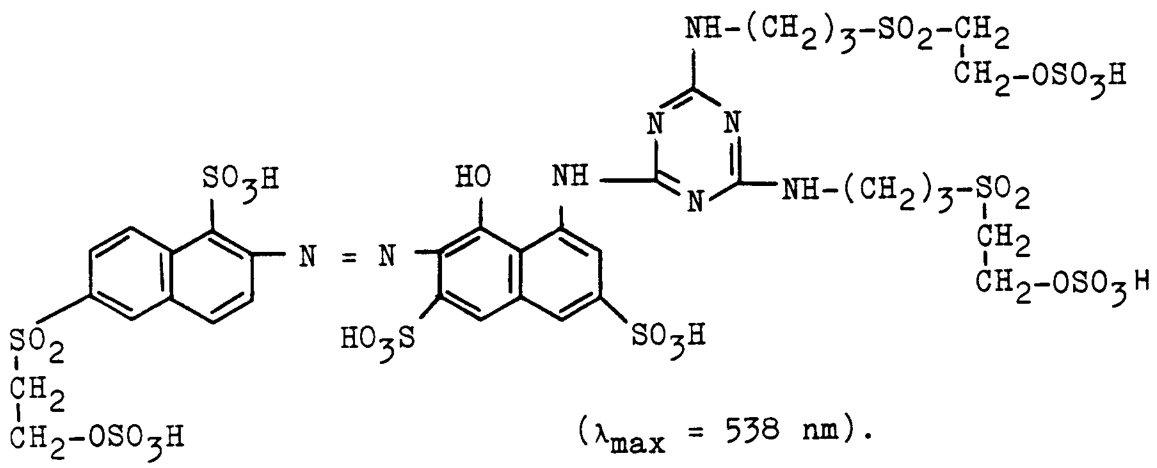

($\lambda_{max}$ = 538 nm).

Der erfindungsgemäße Farbstoff färbt insbesondere Baumwolle nach den üblichen Applikations- und Fixierverfahren für faserreaktive Farbstoffe in tiefen echten, blaustichig roten Tönen.

**Beispiel 4**

In eine Suspension von 255,2 Teilen 1-Amino-8-naphthol-4,6-disulfonsäure in 1400 Teilen Wasser und 720 Teilen Eis werden unter gutem Rühren 155,2 Teile Cyanurchlorid eingetragen. Der Ansatz wird 4 Stunden bei 0 bis 3 °C und einem pH-Wert von 1,7 bis 2,2 gerührt. Nach Synthese dieses primären Kondensationsproduktes gibt man die schwefelsaure Diazoniumsalzlösung des Diazoniumsalzes von 224,8 Teilen 4-(β-Sulfatoethylsulfonyl)-anilin in etwa 750 Teilen Wasser hinzu und führt die Kupplungsreaktion bei einem pH von 4,0 bis 4,5 und einer Temperatur von etwa 5 °C, die allmählich auf 15 bis 20 °C erhöht wird, durch. Man rührt danach noch einige Zeit nach und versetzt den Ansatz mit 366,5 Teilen γ-(β'-Chlorethylsulfonyl)-propylamin-hydrochlorid. Man führt die Umsetzung bei 0 bis 3 °C und bei einem pH-Wert von 7 während einer Stunde und anschließend bei einem pH-Wert zwischen 10,5 und 11,5 Stunden während 4 Stunden durch, wobei gleichzeitig die β-Chlorethylsulfonyl-Gruppe in die Vinylsulfonylgruppe übergeht. Nach Klärung der Syntheselösung wird der gebildete erfindungsgemäße Farbstoff der Formel (in Form der freien Säure geschrieben)

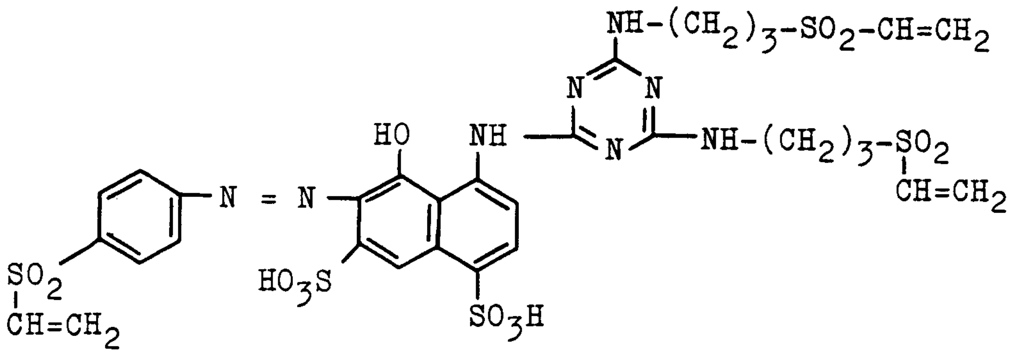

($\lambda_{max}$ = 508 nm).

durch Sprühtrocknung isoliert. Er besitzt sehr gute faserreaktive Farbstoffeigenschaften und färbt beispielsweise Baumwolle in echten gelbstichig roten Tönen.

**Beispiel 5**

Man rührt in eine Suspension von 255,2 Teilen 1-Amino-8-naphthol-3,6-disulfonsäure in 1440 Teilen Wasser und 720 Teilen Eis 155,2 Teile Cyanurchlorid und führt die Umsetzung bei einem pH-Wert von 1,7 bis 2,2 durch. Nach etwa 4 Stunden gibt man die schwefelsaure wäßrige Lösung des Diazoniumsalzes aus 224,8 Teilen 4-(β-Sulfatoethylsulfonyl)-anilin in etwa 750 Teilen Wasser hinzu und führt die Kupplungsreaktion bei einer Temperatur von zunächst 5 °C und später 15 bis 20 °C und bei einem pH-Wert von 4,0 bis 4,5 durch. Nach mehrstündigem Rühren versetzt man den Syntheseansatz mit 480 Teilen β-[β'-(β''-Chlorethylsulfonyl)-ethoxy]-ethylamin-hydrochlorid und führt die Umsetzung bei 0 bis 3 °C und einem pH-Wert von 7 durch. Nach einer Reaktionszeit von 1 Stunde erhöht man den pH auf 10,5 bis 12 und führt die dritte Kondensationsreaktion während 4 Stunden zu Ende. Hierbei erfolgt gleichzeitig die Überführung der β-Sulfatoethylsulfonyl-Gruppe in die Vinylsulfonylgruppe.

Die erfindungsgemäße Verbindung der Formel

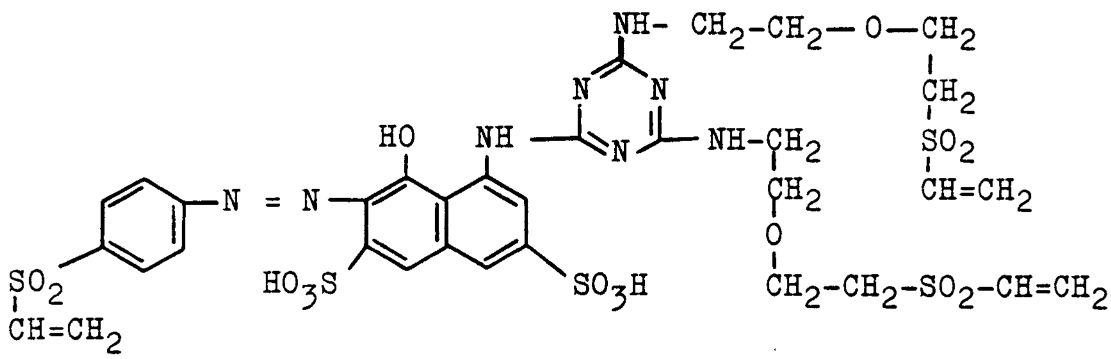

($\lambda_{max}$ = 511 nm)

wird in form ihres Alkalimetallsalzes in üblicher Weise isoliert, beispielsweise durch Sprühtrocknung. Sie besitzt sehr gute faserreaktive Farbstoffeigenschaften und färbt beispielsweise Baumwolle in roten Tönen.

**Beispiel 6**

Eine gemäß Beispiel 4 durch Umsetzung von 1-Amino-8-naphthol-4,6-disulfonsäure mit Cyanurchlorid und anschließender Kupplung mit dem Diazoniumsalz von 4-(β-Sulfatoethylsulfonyl)-anilin hergestellte Dichlortriazinylamino-Monoazoverbindung wird mit der zweifach äquivalenten Menge an N-[ γ-(Vinylsulfonyl)-propyl]-piperazin-hydrochlorid bei 0 bis 5 °C zunächst während einer Stunde bei einem pH-Wert von 7 und anschließend während 4 Stunden bei einem pH von 10,5 bis 12 umgesetzt, wobei gleichzeitig die β-Sulfatoethylsulfonyl-Gruppe in die Vinylsulfonyl-Gruppe übergeführt wird. Nach Isolierung erhält man die

erfindungsgemäße Verbindung der Formel (in Form der freien Säure geschrieben)

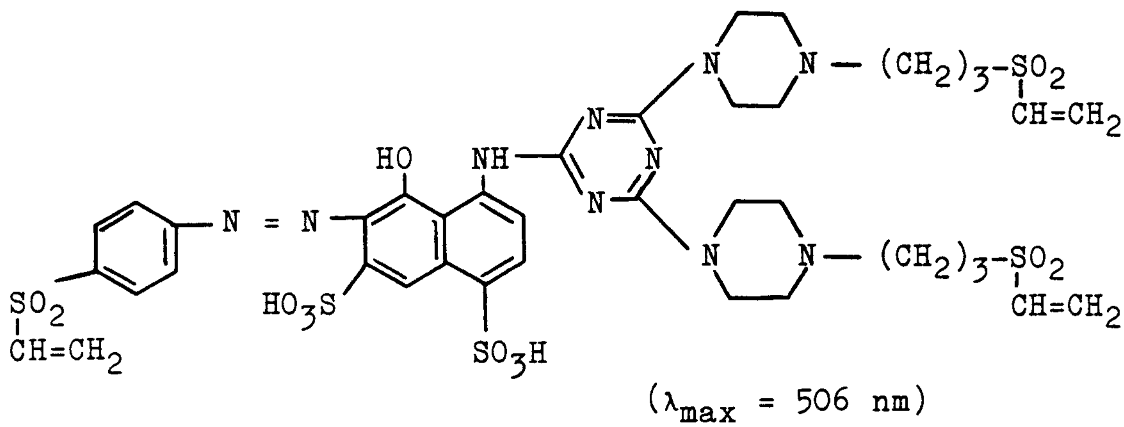

($\lambda_{max}$ = 506 nm)

die sehr gute faserreaktive Farbstoffeigenschaften besitzt und beispielsweise Baumwolle in echten roten Tönen färbt.

**Beispiel 7**

Man setzt analog den Angaben in den vorherigen Ausführungsbeispielen eine gemäß Beispiel 5 hergestellte Dichlortriazinylamino-Monoazoverbindung bei 0 bis 5 °C mit der zweifach äquivalenten Menge an N-[β-(β'-Chlorethylsulfonyl)-ethyl]-piperazin-hydrochlorid zunächst während einer Stunde bei einem pH-Wert von 7 und anschließend während 4 Stunden bei einem pH-Wert zwischen 11 und 12 um, wobei gleichzeitig die Überführung der β-Chlorethylsulfonyl-Gruppe in die Vinylsulfonylgruppe erfolgt. Man isoliert den erfindungsgemäßen faserreaktiven Farbstoff der Formel

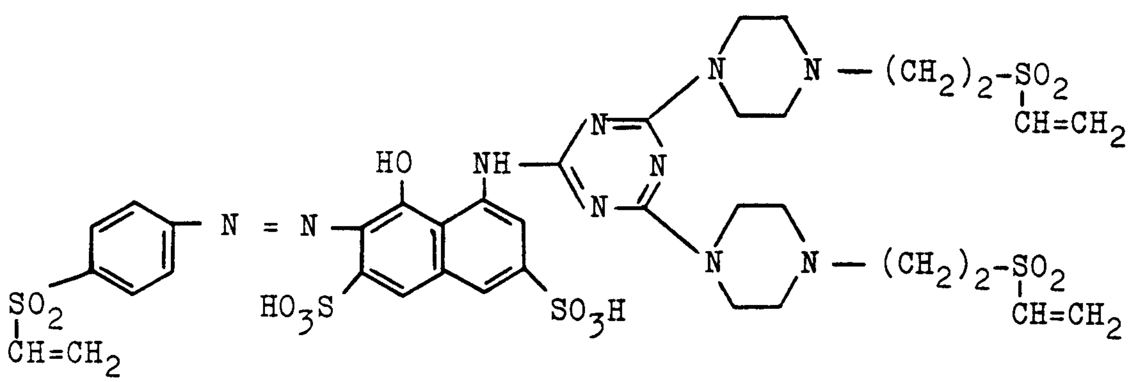

($\lambda_{max}$ = 511 nm)

in Form des Alkalimetallsalzes in üblicher Weise, beispielsweise durch Sprühtrocknung. Er besitzt sehr gute Farbstoffeigenschaften und färbt beispielsweise Baumwolle in roten Tönen.

**Beispiel 8**

Man synthetisiert in bekannter Weise die Dichlortriazinyl-(aminophenyl-pyrazolon)-Monoazoverbindung aus Cyanurchlorid, 4-(β-Sulfatoethylsulfonyl)-anilin als Diazokomponente und 1-(2'-Sulfo-4'-amino-phenyl)-3-carboxy-5-pyrazolon. Eine Lösung mit einem pH-Wert von 6,8 bis 7,2 von 72,5 Teilen dieser Azoverbindung in 400 Teilen Wasser wird bei 0 °C mit 47 Teilen γ-(β'-Chlorethylsulfonyl)-propylamin-hydrochlorid versetzt. Man führt die Kondensationsreaktionen bei dieser Temperatur zunächst während einer Stunde bei einem pH-Wert von 6,5 bis 7 und anschließend 5 Stunden bei einem pH-Wert zwischen 10,5 und 12 durch. Die gebildete erfindungsgemäße Monoazoverbindung wird durch Aussalzen mit Natriumchlorid oder Sprühtrocknen isoliert. Sie besitzt, in Form der freien Säure geschrieben, die Formel

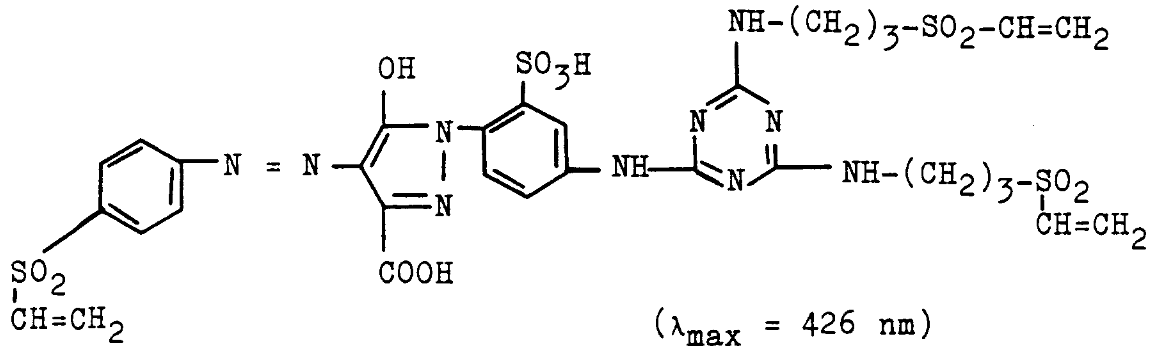

$(\lambda_{max} = 426\ nm)$

und färbt beispielsweise Baumwolle in farbstarken gelben Tönen.

**Beispiel 9**

Man setzt in bekannter Weise 57,3 Teile der Monoazoverbindung 4-(1'-Sulfo-6'-β-sulfatoethylsulfonyl-naphth-2-yl-azo)-3-acetylamino-anilin in wäßriger Lösung bei einem pH-Wert von 6,8 bis 7,2 und einer Temperatur von 0 °C mit 14,2 Teilen Cyanurfluorid um. Nach beendeter Acylierungsreaktion gibt man 47 Teile γ-(β'-Chloroethylsulfonyl)-propylamin-hydrochlorid hinzu und führt die Kondensationsreaktion zunächst bei 0 bis 5 °C und einem pH-Wert von 7 während einer Stunde und anschließend bei 50 bis 55 °C und einem pH-Wert von 6,5 während 5 Stunden durch. Der erhaltene erfindungsgemäße Farbstoff wird in Form seines Alkalimetallsalzes isoliert. Er besitzt, in Form der freien Säure geschrieben, die Formel

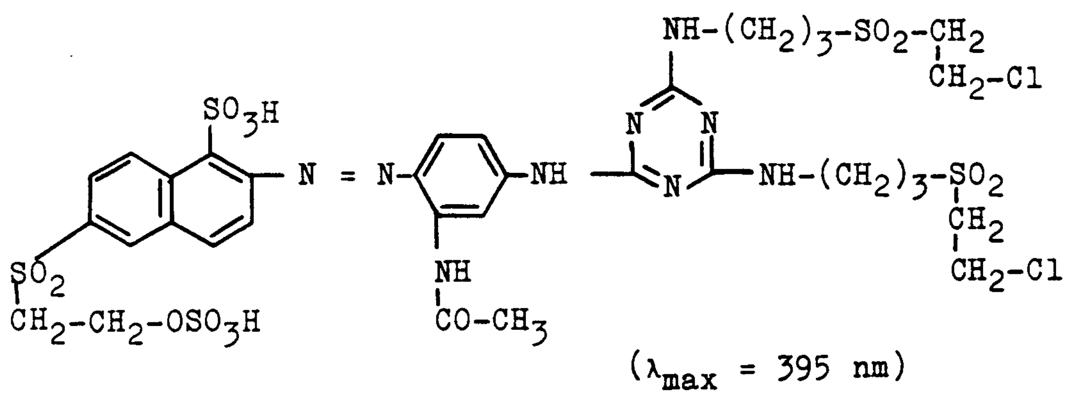

$(\lambda_{max} = 395\ nm)$

und färbt beispielsweise Baumwolle in farbstarken, echten rotstichig gelben Tönen.

**Beispiel 10**

Eine neutrale wäßrige Lösung von 56,2 Teilen der Monoazoverbindung 2-(4'-Methoxy-3'-β-sulfatoethylsulfonylphenyl-azo)-3-sulfo-6-amino-1-naphthol wird bei 0 °C und einem pH-Wert von 7 langsam mit 14,2 Teilen Cyanurfluorid versetzt. Nach Beendigung der Acylierungsreaktion gibt man 43 Teile γ-(β-Sulfatoethylsulfonyl)-propylamin hinzu und führt die Kondensationsreaktionen während einer Stunde bei 0 bis 5 °C und einem pH-Wert von 7 und anschließend während 5 Stunden bei 50 bis 55 °C und einem pH-Wert von 6,5 durch. Der erfindungsgemäße Farbstoff der Formel

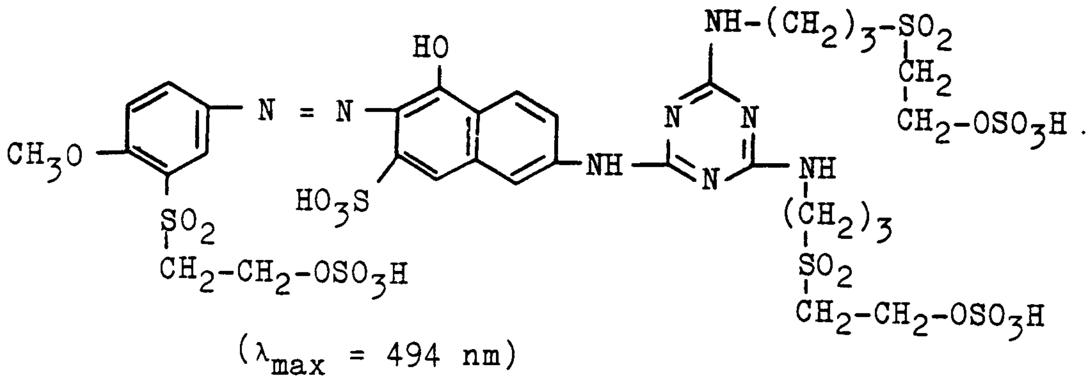

($\lambda_{max}$ = 494 nm)

kann durch Aussalzen oder Sprühtrocknung in Form des Alkalimetallsalzes isoliert werden. Er färbt beispielsweise Baumwolle gemäß den Applikations- und Fixierverfahren für faserreaktive Farbstoffe in brillanten Scharlachtönen.

**Beispiele 11 bis 59**

In den nachfolgenden Tabellenbeispielen sind weitere erfindungsgemäße Farbstoffe entsprechend der allgemeinen Formel (A)

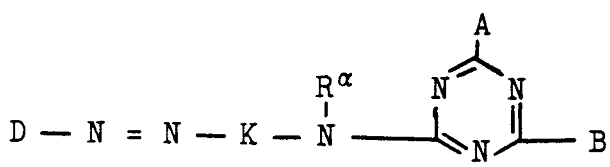

(A)

anhand ihrer Komponenten (der Diazokomponente D-$NH_2$, der mit dem Triazinylrest verbundenen Kupplungskomponente H-K-$NR^{\alpha}H$ und den Aminoresten A und B) beschrieben. Sie lassen sich in erfindungsgemäßer Weise, beispielsweise analog einem der obigen Ausführungsbeispiele, beispielsweise durch Umsetzung der entsprechenden Dihalogentriazinylamino-Ausgangs-Azoverbindung mit der entsprechenden Aminoverbindung entsprechend der allgemeinen Formel (16) bei gegebenenfalls gleichzeitiger Überführung des Restes $Y^1$ bzw. $Y^2$ in die Vinylsulfonylgruppe, herstellen. Sie besitzen sehr gute faserreaktive Farbstoffeigenschaften und färben beispielsweise Baumwolle in den in dem jeweiligen Tabellenbeispiel angegebenen Tönen in hoher Farbstärke und mit guten Echtheiten.

| Bsp. | Farbstoff der Formel (A) Rest D- | Komponente H-K-NHR$^{\alpha}$ | Reste A und B | Farbton |
|---|---|---|---|---|
| 11 | 2-Sulfo-4-(ß-sulfato-ethylsulfonyl)-phenyl | 1-Amino-3,6-disulfo-8-naphthol | γ-(ß'-Chlorethyl-sulfonyl)-propylamin | gelbstichig rot |
| 12 | 2-Sulfo-4-vinylsulfonyl-phenyl | dito | γ-(Vinylsulfonyl)-propylamino | dito |
| 13 | 2-Carboxy-5-(ß-sulfato-ethylsulfonyl)-phenyl | dito | γ-(ß'-Sulfatoethyl-sulfonyl)-propylamino | dito |
| 14 | 3-(ß-Sulfatoethyl-sulfonyl)-phenyl | dito | dito | rot |
| 15 | 3-Vinylsulfonyl-phenyl | dito | γ-(Vinylsulfonyl)-propylamino | rot |
| 16 | 2-Methoxy-5-(ß-sulfato-ethylsulfonyl)-phenyl | dito | γ-(ß'-Chlorethyl-sulfonyl)-propylamino | blaustichig rot |
| 17 | 2,5-Dimethoxy-4-(ß-sulfatoethylsulfonyl)-phenyl | dito | γ-(ß'-Sulfatoethyl-sulfonyl)-propylamino | dito |
| 18 | 4-[N-(3'-ß-sulfatoethyl-sulfonyl)-phenyl]-carbamoyl-phenyl | dito | dito | rot |
| 19 | 2-Sulfo-5-[γ-(vinylsulfo-nyl)-butyrylamino]-phenyl | dito | γ-(Vinylsulfonyl)-propylamino | gelbstichig rot |
| 20 | 4-Sulfo-5-[γ-(vinylsulfo-nyl)-butyrylamino]-phenyl | dito | dito | blaustichig rot |
| 21 | 4-Methoxy-3-(ß-sulfato-ethylsulfonyl)-phenyl | dito | γ-(ß'-Chlorethylsul-fonyl)-propylamino | dito |

| Bsp. | Farbstoff der Formel (A) Rest D- | Komponente H-K-NHR$^{\alpha}$ | Reste A und B | Farbton |
|---|---|---|---|---|
| 22 | Kupferkomplex mit: 2-Hydroxy-5-(ß-sulfatoethylsulfonyl)-phenyl | 1-Amino-3,6-disulfo-8-naphthol | γ-(ß'-Sulfatoethylsulfonyl)-propylamino | violett |
| 23 | Kupferkomplex mit: 2-Hydroxy-5-methoxy-4-ß-sulfatoethylsulfonyl-phenyl | 1-Amino-3,6-disulfo-8-naphthol | dito | blau |
| 24 | Kupferkomplex mit: 2-Hydroxy-6-sulfo-8-(ß-sulfatoethylsulfonyl)-naphth-2-yl | 1-Amino-3,6-disulfo-8-naphthol | γ-(ß'-Chlorethylsulfonyl)-propylamino | blau |
| 25 | Kupferkomplex mit: 2-Hydroxy-5-(ß-sulfatoethylsulfonyl)-phenyl | 3-(1'-Amino-3',6'-disulfo-8'-hydroxy-naphth-7'-yl)-azo-6-sulfo-8-naphthol | γ-(Vinylsulfonyl)-propylamino | blau |
| 26 | 2-Sulfo-6-(ß-sulfatoethylsulfonyl)-naphth-2-yl | 1-Amino-4,6-disulfo-8-naphthol | γ-(ß'-Sulfatoethylsulfonyl)-propylamino | rot |
| 27 | 2-Sulfo-vinylsulfonyl-phenyl | 1-(2'-Sulfo-4-amino-phenyl)-3-carboxy-5-pyrazolon | ß-[ß'-(Vinylsulfonyl)-ethoxy]-ethylamino | gelb |
| 28 | 2-Sulfo-6-(ß-sulfatoethylsulfonyl)-naphth-2-yl | dito | γ-(ß'-Chlorethylsulfonyl)-propylamino | gelb |
| 29 | 4-[N-(3'-ß-Sulfatoethylsulfonyl)-carbamoyl]-phenyl | dito | γ-(ß'-Sulfatoethylsulfonyl)-propylamino | gelb |
| 30 | 2-Methoxy-5-methyl-4-(ß-sulfatoethylsulfonyl)-phenyl | dito | dito | gelb |

| Bsp. | Farbstoff der Formel (A)<br>Rest D- | Komponente H-K-NHR$^{\alpha}$ | Reste A und B | Farbton |
|---|---|---|---|---|
| 31 | 2,5-Dimethoxy-4-(ß-sulfatoethylsulfonyl)-phenyl | 1-(2'-Sulfo-4'-amino-phenyl)-3-methyl-5-pyrazolon | dito | goldgelb |
| 32 | dito | dito | γ-(Vinylsulfonyl)-propylamino | goldgelb |
| 33 | Kupferkomplex mit:<br>2-Hydroxy-5-(ß-sulfato-ethylsulfonyl)-phenyl | 1-(2'-Sulfo-4'-amino-phenyl)-3-methyl-5-pyrazolon | dito | gelbbraun |
| 34 | dito | dito | 4-[γ-(Vinylsulfonyl)-propyl]-piperazin-1-yl | braun |
| 35 | 4-(ß-Sulfatoethyl-sulfonyl)-phenyl | 1-(2'-Sulfo-5'-amino-phenyl)-3-carboxy-5-pyrazolon | γ-(Vinylsulfonyl)-propylamino | gelb |
| 36 | 2-Sulfo-6-vinylsulfonyl-naphth-2-yl | dito | dito | gelb |
| 37 | 4-Vinylsulfonyl-phenyl | 1-(2',4'-Disulfo-5'-amino-phenyl)-3-methyl-5-pyrazolon | dito | gelb |
| 38 | 1-Sulfo-6-vinylsulfonyl-naphth-2-yl | dito | dito | gelb |
| 39 | 2-Sulfo-4-(ß-sulfato-ethylsulfonyl)-phenyl | 3-Carbamoyl-4-methyl-1-(ß-aminoethyl)-2-hydroxy-hydroxy-pyrid-6-on | γ-(ß-Sulfatoethylsulfonyl)-propylamino | grünstichig gelb |
| 40 | dito | 4-Methyl-1-(γ-aminopropyl)-2-hydroxy-pyrid-6-on | dito | dito |

| Bsp. | Farbstoff der Formel (A) Rest D- | Komponente H-K-NHR$^{\alpha}$ | Reste A und B | Farbton |
|---|---|---|---|---|
| 41 | 1-Sulfo-6-(ß-sulfato-ethylsulfonyl)-naphth-2-yl | 3-Carbamoyl-4-methyl-1-(γ-aminopropyl)-2-hydroxy-pyrid-6-on | ß-[ß'-(ß"-Chlorethyl-sulfonyl)-ethoxy]-ethylamino | dito |
| 42 | 6-Sulfo-8-(ß-sulfato-ethylsulfonyl)-naphth-2-yl | dito | γ-(ß'-Sulfatoethyl-sulfonyl)-propylamino | dito |
| 43 | 1-Sulfo-6-vinylsulfonyl-naphth-2-yl | 3-Sulfomethyl-4-methyl-1-(ß-aminoethyl)-2-hydroxy-pyrid-6-on | γ-(Vinylsulfonyl)-propylamino | dito |
| 44 | 2-Sulfo-5-γ-(vinylsul-fonyl)-butyrylamido-phenyl | 3-Carbamoyl-4-methyl-1-(γ-aminopropyl)-2-hydroxy-6-pyrid-on | dito | dito |
| 45 | dito | 3-Sulfomethyl-4-methyl-1-(γ-aminopropyl)-2-hydroxy-pyrid-6-on | dito | dito |
| 46 | 4-(ß-Sulfatoethylsul-fonyl)-phenyl | 1-Amino-3,6-disulfo-8-naphthol | γ-(ß-Thiosulfatoethyl-sulfonyl)-propylamino | rot |
| 47 | 1-Sulfo-6-vinylsulfo-nyl-naphth-2-yl | 2-Sulfo-5-acetylamino-anilin | γ-(Vinylsulfonyl)-propylamino | rotstichig gelb |
| 48 | 1-Sulfo-6-(ß-sulfato-ethylsulfonyl)-naphth-2-yl | 3-Ureido-anilin | γ-(ß'-Sulfatoethylsul-fonyl)-propylamino | rotstichig gelb |
| 49 | 6-Sulfo-8-(ß-sulfato-ethylsulfonyl)-naphth-2-yl | 3-Ureido-anilin | γ-(ß'-Sulfatoethylsul-fonyl)-propylamino | rotstichig gelb |
| 50 | dito | 2-Sulfo-5-acetylamino-anilin | ß-[ß'-(ß"-Chlorethyl-sulfonyl)-ethoxy]-ethylamino | dito |

| Bsp. | Farbstoff der Formel (A) Rest D- | Komponente H-K-NHR[α] | Reste A und B | Farbton |
|---|---|---|---|---|
| 51 | 1-Sulfo-6-(ß-sulfato-ethylsulfonyl)-naphth-2-yl | dito | γ-(ß'-Chlorethyl-sulfonyl)-propylamino | dito |
| 52 | 4-(ß-Sulfatoethylsul-fonyl)-phenyl | 1-Amino-3,6-disulfo-8-naphthol | A: γ-(ß'-Chlorethyl-sulfonyl)-propylamino<br>B: 4-[γ-(ß'-Chlorethyl-sulfonyl)-propyl]-piperazin-1-yl | rot |
| 53 | 2-Methoxy-5-(ß-sulfato-ethylsulfonyl)-phenyl | 3-Amino-6-sulfo-8-naphthol | γ-(ß'-Sulfatoethyl-sulfonyl)-propylamino | scharlach |
| 54 | dito | 3-Methylamino-6-sulfo-8-naphthol | dito | scharlach |
| 55 | 1-Sulfo-6-(ß-sulfato-ethylsulfonyl)-naphth-2-yl | 3-Amino-6-sulfo-8-naphthol | dito | orange |
| 56 | 6-Sulfo-8-(ß-sulfato-ethylsulfonyl)-naphth-2-yl | dito | dito | orange |
| 57 | 1-Sulfo-6-vinylsulfonyl-naphth-2-yl | 3-Methylamino-6-sulfo-8-naphthol | γ-(ß'-Vinylsulfonyl)-propylamino | orange |
| 58 | 6-Sulfo-8-vinylsulfonyl-naphth-2-yl | dito | 4-(ß-Vinylsulfonyl-ethyl)-piperazin-1-yl | orange |
| 59 | 4-Methoxy-3-(ß-sulfato-ethylsulfonyl)-phenyl | 3-Methylamino-6-sulfo-8-naphthol | γ-(ß'-Sulfatoethylsul-fonyl)-propylamino | scharlach |

**Beispiel 60**

56,2 Teile der Monoazoverbindung 4-(5'-Amino-2'-sulfophenyl-azo)-1-(4''-β-sulfatoethylsulfonyl)-phenyl-3-methyl-5-pyrazolon werden in wäßriger Lösung bei 0 bis 3 °C und einem pH-Wert zwischen 1,7 und 2,2

mit 15,5 Teilen Cyanurchlorid umgesetzt. Anschließend gibt man 40,8 Teile γ-(β'-Hydroxyethylsulfonyl)-propylamin-hydrochlorid hinzu und führt die erste Kondensationsreaktion bei einem pH-Wert von 7 und einer Temperatur von 60 °C und anschließend die zweite Kondensationsreaktion bei einem pH-Wert von 9 und einer Temperatur von 80 bis 90 °C durch. Die erhaltene β-Hydroxyethylsulfonyl-gruppenhaltige Azoverbindung wird mit Kaliumchlorid ausgesalzen, isoliert und getrocknet. Man gibt sie innerhalb einer Stunde bei einer Temperatur von maximal 10 °C in ein Gemisch aus 80 Volumenteilen Schwefelsäure-Monohydrat und 42,4 Volumenteilen 20%igem Oleum. Man rührt noch etwa 2 Stunden bei 10 °C nach und gibt den Ansatz sodann auf Eis, neutralisiert mit Calciumcarbonat, saugt ab und wäscht das Calciumsulfat mit Wasser nach. Die vereinigten Filtrate werden unter reduziertem Druck eingedampft. Man erhält die erfindungsgemäße Verbindung der Formel

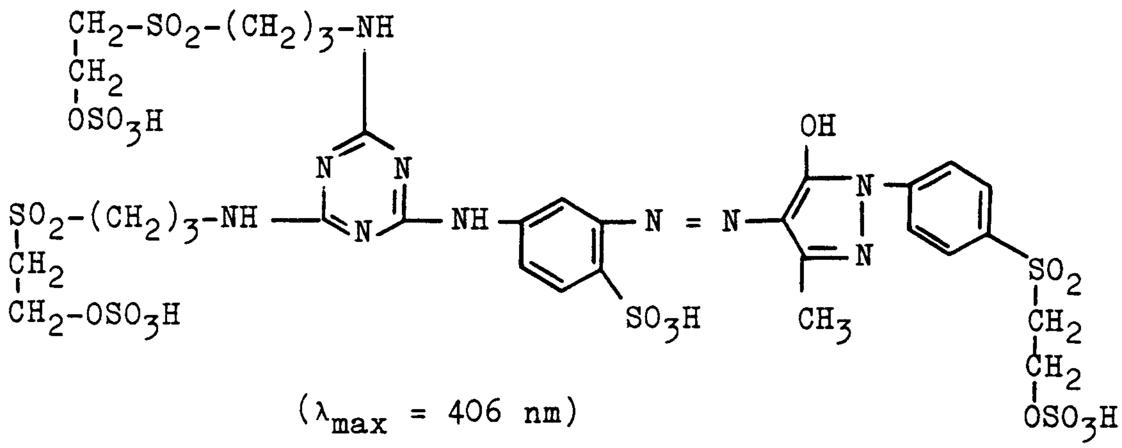

($\lambda_{max}$ = 406 nm)

in Form ihres Alkalimetallsalzes. Sie besitzt sehr gute faserreaktive Farbstoffeigenschaften und färbt beispielsweise Baumwolle in kräftigen gelben Tönen.

**Beispiele 61 bis 77**

In den nachfolgenden Tabellenbeispielen sind weitere erfindungsgemäße Azoverbindungen entsprechend der allgemeinen Formel (B)

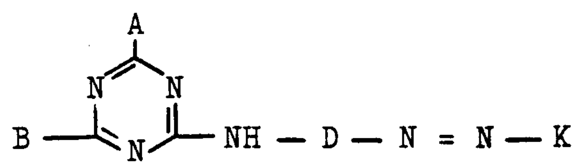

(B)

mit Hilfe der daraus ersichtlichen Komponenten beschrieben. Sie lassen sich in erfindungsgemäßer Weise, beispielsweise analog den Angaben des Ausführungsbeispieles 60, durch Umsetzung der Ausgangsverbindungen Cyanurchlorid oder Cyanurfluorid, der Aminoverbindung entsprechend der allgemeinen Formel (16), der als Diazokomponente dienenden aminogruppenhaltigen Anilin- oder Naphthylamin-Verbindung entsprechend der allgemeinen Formel $H_2N\text{-}D\text{-}NH_2$ und der entsprechenden Kupplungskomponente H-K , herstellen. Sie besitzen sehr gute faserreaktive Farbstoffeigenschaften und liefern auf den in der Beschreibung genannten Fasermaterialien, wie insbesondere Baumwolle, nach den für faserreaktive Farbstoffe üblichen Applikations- und Fixierverfahren farbstarke Färbungen und Drucke mit dem in dem jeweiligen Tabellenbeispiel für Baumwolle angegebenen Farbton.

| Bsp. | Azofarbstoff der Formel (B) Rest -D-N=N- | Rest -K | Reste A und B | Farbton |
|---|---|---|---|---|
| 61 | 2,4-Disulfo-5-azo-phenyl | 1-(4'-Vinylsulfonyl-phenyl-3-methyl-pyrazol-5-on-4-yl | γ-(Vinylsulfonyl)-propylamino | gelb |
| 62 | 1-Sulfo-2-azo-naphth-5-methylen-yl | 1-(4'-ß-Sulfatoethylsulfonyl)-3-methyl-pyrazol-5-on-4-yl | γ-(ß'-Sulfatoethyl-sulfonyl)-propylamino | gelb |
| 63 | 4-Sulfo-3-azo-phenyl | 2-[N-Methyl-N-(ß-sulfato-ethylsulfonyl)]-amino-6-sulfo-8-hydroxy-naphth-7-yl | dito | orange |
| 64 | 2,4-Disulfo-5-azo-phenyl | dito | γ-(Vinylsulfonyl)-propylamino | orange |
| 65 | 4-Sulfo-3-azo-phenyl | 3-[3'-ß-Chlorethylsulfonyl)-benzoylamino]-6-sulfo-8-hydroxy-naphth-7-yl | γ-(ß'-Sulfatoethyl-sulfonyl)-propylamino | orange |
| 66 | 1-Sulfo-2-azo-naphth-5-methylen-yl | dito | γ-(ß'-Chlorethyl-sulfonyl)-propylamino | orange |
| 67 | 4-Sulfo-3-azo-phenyl | 3-[N'-(3'-ß-Chlorethyl-sulfonyl-phenyl)]-ureido-6-sulfo-8-hydroxy-naphth-7-yl | γ-(ß'-Sulfatoethyl-sulfonyl)-propylamin | orange |
| 68 | 1-Sulfo-2-azo-naphth-5-methylen-yl | dito | dito | orange |
| 69 | dito | 3-[N'-(4'-ß-Sulfatoethyl-sulfonyl-phenyl)]-ureido-6-sulfo-8-hydroxy-naphth-7-yl | dito | orange |

| Bsp. | Azofarbstoff der Formel (B) Rest -D-N=N- | Rest -K | Reste A und B | Farbton |
|---|---|---|---|---|
| 70 | 2,4-Disulfo-5-azo-phenyl | 3-[N'-(3'-Vinylsulfonyl-phenyl)]-ureido-6-sulfo-8-hydroxy-naphth-7-yl | γ-(Vinylsulfonyl)-propylamino | orange |
| 71 | 4-Sulfo-3-azo-phenyl | 1-(3'-Vinylsulfonyl-benzoylamino)-3,6-disulfo-8-hydroxy-naphth-7-yl | dito | gelbstichig rot |
| 72 | dito | 1-(4'-Vinylsulfonyl-benzoylamino)-3,6-disulfo-8-hydroxy-naphth-7-yl | dito | gelbstichig rot |
| 73 | dito | 1-(3'-Vinylsulfonyl-benzoylamino)-4,6-disulfo-8-hydroxy-naphth-7-yl | dito | gelbstichig rot |
| 74 | 3-Sulfo-4-azo-phenyl | 1-(3'-β-Chlorethylsulfonyl-benzoylamino)-3,6-disulfo-8-hydroxy-naphth-7-yl | γ-(β'-Chlorethylsulfonyl)-propylamino | blaustichig rot |
| 75 | 1-Sulfo-2-azo-naphth-5-methylen-yl | dito | γ-(β'-Sulfatoethyl-sulfonyl)-propylamino | blaustichig rot |
| 76 | dito | 1-(3'-Vinylsulfonyl-benzoylamino)-3,6-disulfo-8-hydroxy-naphth-7-yl | γ-(Vinylsulfonyl)-propylamino | blaustichig rot |
| 77 | 3-Sulfo-4-azo-phenyl | 1-(4'-β-Sulfatoethylsulfonyl-phenyl)-3-methyl-pyrazol-5-on-4-yl | γ-(β'-Sulfatoethyl-sulfonyl)-propylamino | gelb |

**Beispiel 78**

81,1 Teile der Disazoverbindung 1-Amino-2-(4'-β-sulfatoethylsulfonyl-phenyl-azo)-7-(2''-sulfo-5''-amino-phenyl-azo)-8-naphthol-3,6-disulfonsäure werden in wäßriger Lösung bei einem pH-Wert von 7 und einer

Temperatur von 0 bis 3 °C mit 14,2 Teilen Cyanurfluorid umgesetzt. Anschließend gibt man 47 Teile γ-(β'-Chloroethylsulfonyl)-propylamin-hydrochlorid hinzu und führt die Kondensationsreaktionen zunächst während einer Stunde bei 0 bis 5 °C und einem pH-Wert von 7 und anschließend während 5 Stunden bei 50 bis 55 °C und einem pH-Wert von 6,5 durch.
Der synthetisierte erfindungsgemäße Azofarbstoff der Formel

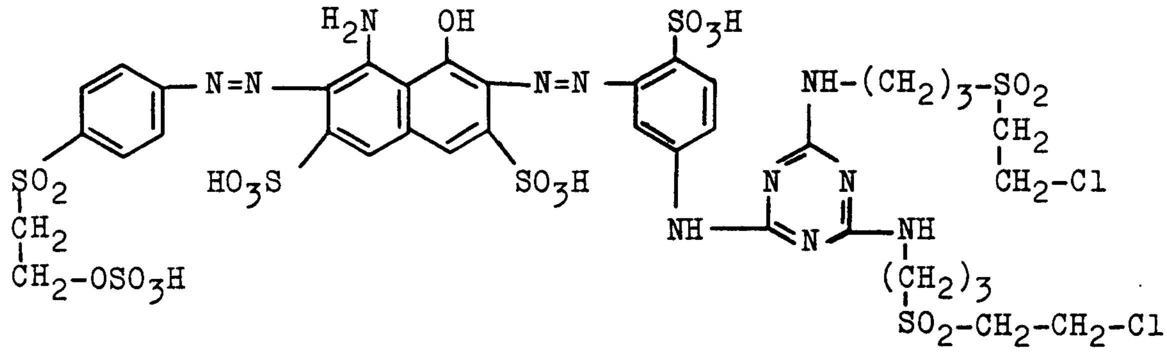

($\lambda_{max}$ = 604 nm)

wird in Form seines Alkalimetallsalzes durch Aussalzen mit einem Elektrolytsalz, wie Natriumchlorid oder Kaliumchlorid, oder durch Sprühtrocknung isoliert. Er besitzt sehr gute faserreaktive Farbstoffeigenschaften und färbt besipielsweise Baumwolle nach den üblichen Applikations- und Fixierverfahren in kräftigen, echten marineblauen Tönen.

**Beispiele 79 bis 86**

In den nachfolgenden Tabellenbeispielen sind weitere erfindungsgemäße Disazofarbstoffe entsprechend den allgemeinen Formeln (C) und (D)

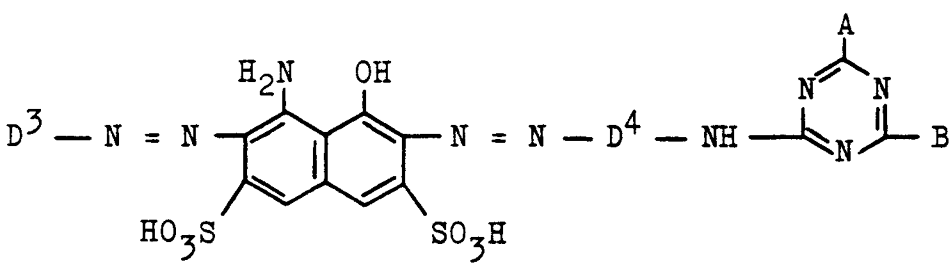

(C)

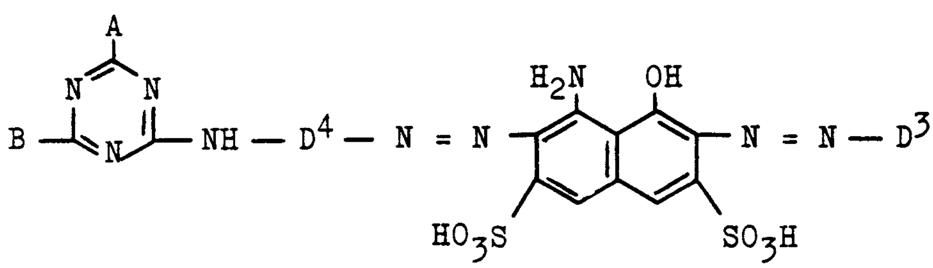

(D)

mit Hilfe der daraus ersichtlichen Komponenten beschrieben. Sie lassen sich in erfindungsgemäßer Weise, beispielsweise analog den Angaben des Ausführungsbeispieles 78, durch Umsetzung des aminogruppenhaltigen Disazofarbstoffes mit einem Cyanurhalogenid, wie Cyanurfluorid oder Cyanurchlorid, und der Aminoverbindung entsprechend der allgemeinen Formel (16), herstellen.
Sie besitzen sehr gute faserreaktive Farbstoffeigenschaften und liefern auf den in der Beschreibung genannten Fasermaterialien, wie insbesondere Baumwolle, nach den für faserreaktive Farbstoffe üblichen

Applikations- und Fixierverfahren farbstarke Färbungen und Drucke mit dem in dem jeweiligen Tabellenbeispiel für Baumwolle angegebenen Farbton.

| | | Farbstoff der Formeln (C) und (D) | | | |
|---|---|---|---|---|---|
| Bsp. | Formel | Rest $D^3$- | Rest $D^4$- | Reste A und B | Farbton |
| 79 | (C) | 4-Vinylsulfonyl-phenyl | 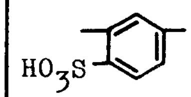 | ß-[ß'-(Vinylsulfonyl)-ethylamino]-ethylamino | marineblau |
| 80 | (C) | 2-Brom-4-vinyl-sulfonyl-phenyl | dito | γ-(Vinylsulfonyl)-propyl-amino | dito |
| 81 | (D) | dito | 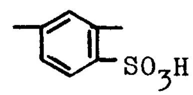 | dito | dito |
| 82 | (D) | 2-Sulfo-5-[3'-(ß-chlorethylsulfonyl)-benzoylamino]-phenyl | dito | γ-(ß'-Sulfatoethylsulfo-nyl)-propylamino | dito |
| 83 | (C) | dito | 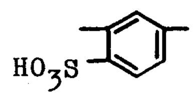 | γ-(Vinylsulfonyl)-propyl-amino | dito |
| 84 | (D) | 2-Sulfo-5-[γ-(ß'-chlorethylsulfonyl)-butyrylamino]-phenyl | 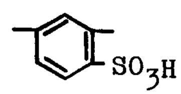 | γ-(ß'-Chlorethylsulfonyl)-propylamino | dito |
| 85 | (C) | dito | 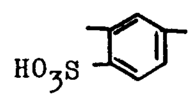 | dito | dito |
| 86 | (D) | 4-Vinylsulfonyl-phenyl | 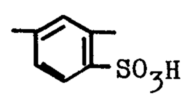 | γ-(Vinylsulfonyl)-propyl-amino | dito |

**Beispiele 87 bis 93**

In den nachfolgenden Tabellenbeispielen sind weitere erfindungsgemäße Disazofarbstoffe entsprechend den allgemeinen Formel (E)

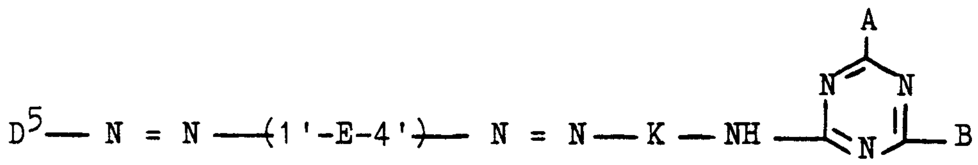

(E)

mit Hilfe der daraus ersichtlichen Komponenten beschrieben. Sie lassen sich in erfindungsgemäßer Weise, bespielsweise analog den Angaben des Ausführungsbeispieles 78 durch Umsetzung des aminogruppenhaltigen Disazofarbstoffes mit einem Cyanurhalogenid, wie Cyanurfluorid oder Cyanurchlorid, und der Aminoverbindung entsprechend der allgemeinen Formel (16), herstellen,
Sie besitzen sehr gute faserreaktive Farbstoffeigenschaften und liefern auf den in der Beschreibung genannten Fasermaterialien, wie insbesondere Baumwolle, nach den für faserreaktive Farbstoffe üblichen Applikations- und Fixierverfahren farbstarke Färbungen und Drucke mit dem in dem jeweiligen Tabellenbeispiel für Baumwolle angegebenen Farbton.

| Bsp. | Farbstoff der Formel E Rest $D^5$- | Rest -E- | Rest -N=N-K-NH- | Reste A und B | Farbton |
|---|---|---|---|---|---|
| 87 | 6-Sulfo-8-(ß-sulfatoethylsulfonyl)-naphth-2-yl | 2'-Methyl-5'-methoxy-phen-1',4'-ylen | 7-Azo-8-hydroxy-3,6-disulfo-naphth-1-ylamino | γ-(ß'-Chlorethylsulfonyl)-propylamino | blau |
| 88 | 1-Sulfo-6-(ß-sulfatoethylsulfonyl)-naphth-2-yl | 2'-Methyl-phen-1',4'-ylen | dito | γ-(Vinylsulfonyl)-propylamino | blau |
| 89 | 4-Methoxy-3-(ß-sulfatoethylsulfonyl)-phenyl | (6',7')-Mono-sulfo-naphth-1',4'-ylen | 1-Azo-(6,7)-mono-sulfo-naphth-4-ylamino | γ-(ß'-Chlorethylsulfonyl)-propylamino | braun |
| 90 | 2-Methoxy-5-(ß-sulfatoethylsulfonyl)-phenyl | dito | dito | γ-(ß'-Sulfatoethylsulfonyl)-propylamino | braun |
| 91 | 1-Sulfo-6-(ß-sulfatoethylsulfonyl)-naphth-2-yl | dito | 1-Azo-2-methyl-phen-4-ylamino | dito | braun |
| 92 | 6-Sulfo-8-(ß-sulfatoethylsulfonyl)-naphth-2-yl | dito | dito | dito | braun |
| 93 | 1-Sulfo-6-(ß-sulfatoethylsulfonyl)-naphth-2-yl | 2'-Methyl-5'-methoxy-phen-1',4'-ylen | 7-Azo-8-hydroxy-3,6-disulfo-naphth-1-ylamino | dito | blau |

**Patentansprüche**

**Patentansprüche für folgende Vertragsstaaten : BE, CH, DE, FR, GB, IT, LI**

**1.** Farbstoff entsprechend der allgemeinen Formel (1)

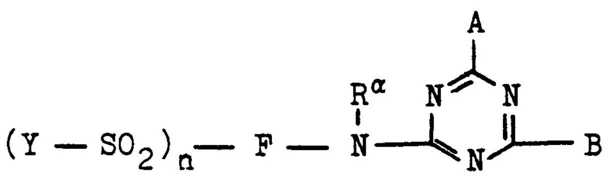

(1)

in welcher bedeuten:

F ist der Rest eines mindestens eine Sulfogruppe enthaltenden metallfreien oder schwermetallhaltigen Mono- oder Disazofarbstoffes;

n ist die Zahl 1 oder 2, bevorzugt 1;

Y ist die Vinylgruppe oder β-Sulfatoethyl-, β-Halogenethyl-, eine β-Thiosulfatoethyl-, β-Phosphatoethyl- oder β-Acetoxyethyl-Gruppe;

$R^{\alpha}$ ist ein Wasserstoffatom oder eine geradkettige oder verzweigte Alkylgruppe von 1 bis 4 C-Atomen, die durch eine Carboxy-, Sulfo-, Cyano- oder Hydroxygruppe oder durch ein Chloratom substituiert sein kann;

A ist eine Gruppe der allgemeinen Formel (2a) oder (2b)

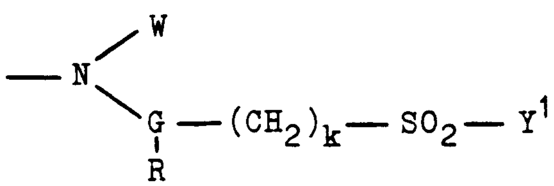

(2a)

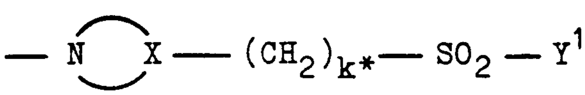

(2b)

in welchen

G ein geradkettiger oder verzweigter Alkylenrest von 1 bis 6 C-Atomen, vorzugsweise von 2 bis 4 C-Atomen, ist oder einen Alkylenrest von 2 bis 6 C-Atomen bedeutet, der durch 1 oder 2 Heterogruppen unterbrochen ist, wobei die Alkylenanteile geradkettig oder verzweigt sein können und bevorzugt solche von 2 oder 3 C-Atomen sind, oder ein gegebenenfalls methylsubstituierter Cycloalkylenrest von 5 bis 8 C-Atomen ist,

R ein Wasserstoffatom oder ein Chlor-, Brom- oder Fluoratom oder eine Hydroxy-, Sulfato-, Cyano-, Carboxy- oder Carbamoylgruppe oder eine Carbalkoxygruppe von 2 bis 5 C-Atomen oder eine Alkanoyloxygruppe von 2 bis 5 C-Atomen oder eine Benzoylaminogruppe, die durch 1 oder 2 Substituenten aus der Gruppe Sulfo, Carboxy, Methyl, Ethyl, Methoxy, Ethoxy und Chlor substituiert sein kann, ist oder eine Gruppe der allgemeinen Formel $-SO_2-Y^2$ bedeutet, in welcher

$Y^2$ eine der obigen für Y angegebenen Bedeutungen besitzt oder eine β-Hydroxyethyl-Gruppe darstellt, wobei $Y^2$ mit Y gleich oder verschieden sein kann,

k für die Zahl Null, 1 oder 2 steht,

k* die Zahl Null, 1, 2, 3 oder 4 bedeutet,

X zusammen mit dem N-Atom und 1 oder 2 Alkylengruppen von 1 bis 5 C-Atomen und gegebenenfalls 1 oder 2 Heteroatomen den bivalenten Rest eines heterocyclischen Ringes bildet,

$Y^1$ eine der oben für Y angegebenen Bedeutungen besitzt, wobei $Y^1$ mit Y gleich oder verschieden sein kann, und

W ein Wasserstoffatom, die Methyl-, Sulfomethyl- oder Carboxymethylgruppe oder eine geradkettige oder verzweigte Alkylgruppe von 2 bis 6 C-Atomen ist, die durch 1 oder 2 Substituenten aus der Gruppe Methoxy, Ethoxy, Carboxy, Sulfo, Hydroxy und Halogen substituiert sein kann, oder ein gegebenenfalls methyl-substituierter Cycloalkylenrest von 5 bis 8 C-Atomen ist oder ein Phenylrest ist, der durch Substituenten aus der Gruppe Alkyl von 1 bis 4 C-Atomen, Alkoxy von 1 bis 4 C-Atomen, Carboxy, Sulfo und Halogen substituiert sein kann;

B hat eine der für A angegebenen Bedeutungen, wobei A und B zueinander gleiche oder voneinander verschiedene Bedeutungen besitzen können.

**2.** Farbstoff nach Anspruch 1 entsprechend der allgemeinen Formel (3a) oder (3b)

$$(Y-SO_2-X^1)_n - D - N = N -(E - N = N)_v - K - Z \qquad (3a)$$

$$Z - D - N = N -(E - N = N)_v - K - X^1 - SO_2 - Y \qquad (3b)$$

in welchen bedeuten:

Y und n haben eine der in Anspruch 1 genannten Bedeutungen;

$X^1$ ist eine direkte Bindung oder ein Brückenglied, wie bspw. eine Alkylengruppe von 1 bis 4 C-Atomen oder der bivalente Rest einer Alkanoylamido-Gruppe von 2 bis 5 C-Atomen;

n ist die Zahl 1 oder 2, vorzugsweise 1;

Z ist eine Gruppe der allgemeinen Formel (4)

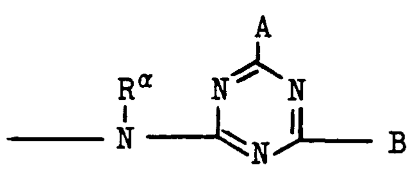

(4)

in welcher $R^\alpha$, A und B eine der in Anspruch 1 genannten Bedeutungen besitzen;

D ist der Rest einer in der Azochemie üblichen Diazokomponente aus der Benzol- oder Naphthalinreihe, die für Azofarbstoffe übliche Substituenten enthalten kann, wie beispielsweise Sulfo-, Carboxy-, Hydroxy-, Amino-, Methyl-, Ethyl-, Methoxy-und Ethoxygruppen und gegebenenfalls substituierte Alkanoylaminogruppen von 2 bis 4 C-Atomen, gegebenenfalls substituierte Benzoylaminogruppen und Halogenatome;

K ist der Rest einer in der Azochemie üblichen Kupplungskomponente der Benzol-, Naphthalin-, Pyrazolon-, 6-Hydroxy-2-pyridon oder Acetessigsäurearylamid-Reihe, die für Azofarbstoffe übliche Substituenten, wie beispielsweise Hydroxy, Sulfo-, Carboxy-, Amino-, Methyl-, Ethyl-, Methoxy- und Ethoxygruppen und gegebenenfalls substituierte Alkanoylaminogruppen von 2 bis 4 C-Atomen, gegebenenfalls substituierte Benzoylaminogruppen und Halogenatome, enthalten kann;

E ist der Rest einer in Disazofarbstoffen üblichen Mittelkomponente der Benzol- und Naphthalinreihe, der durch für Azofarbstoffe übliche Substituenten substituiert sein kann, wie beispielsweise Sulfo-, Carboxy-, Hydroxy-, Methyl-, Ethyl-, Methoxy- und Ethoxygruppen und gegebenenfalls substituierte Alkanoylaminogruppen von 2 bis 4 C-Atomen, einer gegebenenfalls substituierten Ureidogruppe, gegebenenfalls substituierten Benzoylaminogruppen und Halogenatome;

v steht für die Zahl Null oder 1;

die Reste D, E und K enthalten zusammen mindestens zwei Sulfogruppen, vorzugsweise 3 bis 4 Sulfogruppen.

**3.** Farbstoff nach Anspruch 1 entsprechend der allgemeinen Formel (5a)

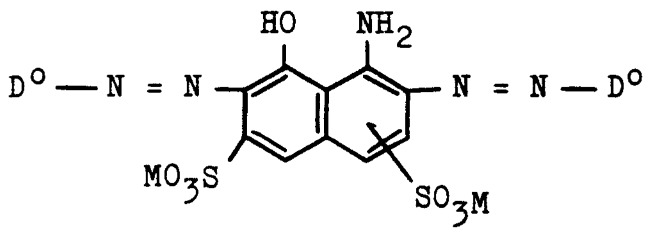

(5a)

in welcher bedeuten:

M ist ein Wasserstoffatom oder ein Alkalimetall;

D° ist ein Rest der allgemeinen Formel (6a), (6b) oder (6c)

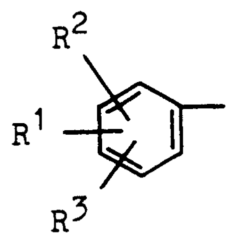

(6a)

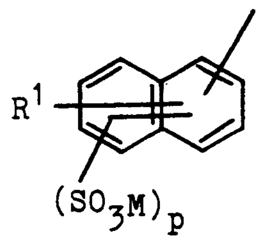

(6b)

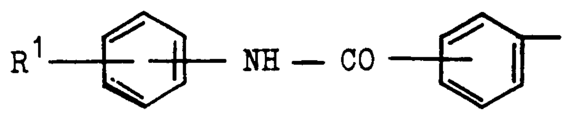

(6c)

in welchen

$R^1$ in dem einen Rest D° eine oder zwei Gruppen der allgemeinen Formel Y-$SO_2$-$X^1$- darstellt, in welcher Y die Anspruch 1 genannte Bedeutung besitzt und $X^1$ eine direkte Bindung oder eine Alkylengruppe von 1 bis 4 C-Atomen oder der bivalente Rest einer Alkanoylamido-Gruppe von 2 bis 5 C-Atomen, bevorzugt hiervon der bivalente Rest der Propionylamido-Gruppe, ist, und $R^1$ in dem anderen D° einen Rest Z der allgemeinen Formel (4)

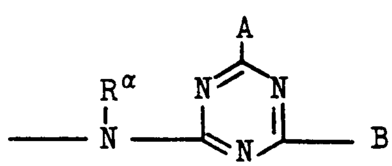

(4)

bedeutet, in welcher $R^{\alpha}$, A und B eine der in Anspruch 1 genannten Bedeutungen haben,

$R^2$ Wasserstoff, Methyl, Ethyl, Methoxy, Ethoxy, Alkanoyl von 2 bis 5 C-Atomen, Cyano, Carboxy, Sulfo, Alkoxycarbonyl von 2 bis 5 C-Atomen, Carbamoyl, N-($C_1$-$C_4$-Alkyl)-carbamoyl, Fluor, Chlor, Brom oder Trifluormethyl ist,

$R^3$ Wasserstoff, Methyl, Ethyl, Methoxy, Ethoxy, Cyano, Carboxy, Sulfo, Alkanoylamino von 2 bis 5 C-Atomen, Alkoxycarbonyl von 2 bis 5 C-Atomen, Carbamoyl, N-($C_1$-$C_4$-Alkyl)-carbamoyl, Fluor, Chlor, Nitro, Sulfamoyl, N-($C_1$-$C_4$-Alkyl)-sulfamoyl, Alkylsulfonyl von 1 bis 4 C-Atomen, Phenylsulfonyl oder Phenoxy ist,

p die Zahl Null, 1 oder 2 bedeutet (wobei diese Gruppe im Falle von p gleich Null ein Wasserstoffatom bedeutet) und

M die obengenannte Bedeutung hat.

**4.** Farbstoff nach Anspruch 1 entsprechend der allgemeinen Formel (5b)

$$(Y-SO_2-X^1)_n - D^1 - N = N -(E^1 - N = N)_v - K^* - Z \qquad (5b)$$

in welcher bedeuten:

| | |
|---|---|
| Y und n | haben die in Anspruch 1 genannten Bedeutungen; |
| $X^1$ | ist eine direkte Bindung oder eine Alkylengruppe von 1 bis 4 C-Atomen oder bivalente Rest einer Alkanoylamido-Gruppe von 2 bis 5 C-Atomen, hiervon vorzugsweise die Gruppe der Formel $-(CH_2)_3-CO-NH-$ ; |
| $D^1$ | ist ein Phenylenrest, der die Substituenten $R^2$ und $R^3$ besitzt, welche bedeuten: |
| $R^2$ | ist Wasserstoff, Methyl, Ethyl, Methoxy, Ethoxy, Alkanoyl von 2 bis 5 C-Atomen, Cyano, Carboxy, Sulfo, Alkoxycarbonyl von 2 bis 5 C-Atomen, Carbamoyl, N-($C_1$-$C_4$-Alkyl)-carbamoyl, Fluor, Chlor, Brom oder Trifluormethyl; |
| $R^3$ | ist Wasserstoff, Methyl, Ethyl, Methoxy, Ethoxy, Cyan, Carboxy, Sulfo, Alkanoylamino von 2 bis 5 C-Atomen, Alkoxycarbonyl von 2 bis 5 C-Atomen, Carbamoyl, N-($C_1$-$C_4$-Alkyl)-carbamoyl, Fluor, Chlor, Nitro, Sulfamoyl, N-($C_1$-$C_4$-Alkyl)-sulfamoyl,Alkylsulfonyl von 1 bis 4 C-Atomen, Phenylsulfonyl oder Phenoxy; |
| $E^1$ | ist ein Rest der allgemeinen Formel (7a), (7b), (7c) oder (7d) |

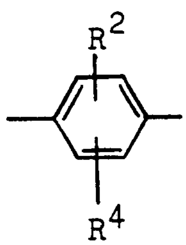

(7a)

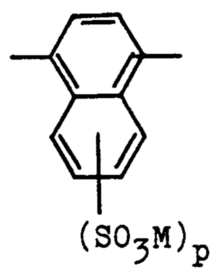

(7b)

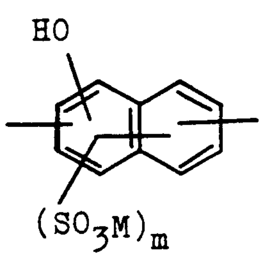

(7c)

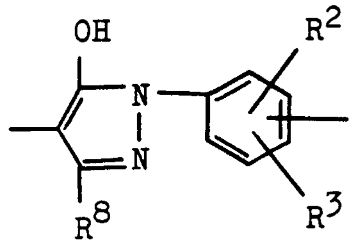

(7d)

| | |
|---|---|
| | in welchen |
| $R^2$ und $R^3$ | eine der oben angegebenen Bedeutungen haben, |
| $R^4$ | ein Wasserstoffatom, eine Alkylgruppe von 1 bis 4 C-Atomen, eine Alkoxygruppe von 1 bis 4 C-Atomen, ein Chloratom, eine Alkanoylaminogruppe von 2 bis 5 C-Atomen, die Benzoylaminogruppe, die Ureidogruppe, eine N'-Phenyl-ureidogruppe, eine N'-Alkyl-ureidogruppe mit 1 bis 4 C-Atomen im Alkylrest, eine Phenylsulfonylgruppe oder eine Alkylsulfonylgruppe von 1 bis 4 C-Atomen ist, |
| M | ein Wasserstoffatom oder ein Alkalimetall ist, |
| m | die Zahl 1 oder 2 bedeutet, |
| p | die Zahl Null, 1 oder 2 bedeutet und |
| $R^8$ | für Wasserstoff, Alkyl von 1 bis 4 C-Atomen, Cyano, Carboxy, Carbalkoxy von 2 bis 5 C-Atomen, Carbamoyl oder Phenyl steht; |
| v | ist die Zahl Null oder 1; |
| $-K^*-Z$ | ist ein Rest der allgemeinen Formel (8a), (8b), (8c), (8d), (8e) oder (8f) |

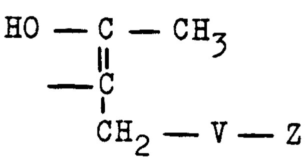

(8a)

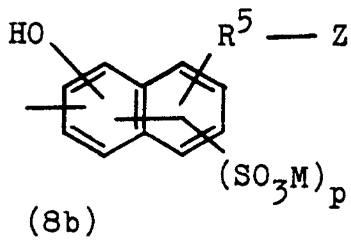

(8b)

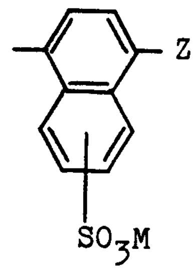

(8c)

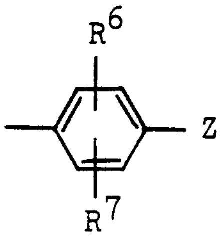

(8d)

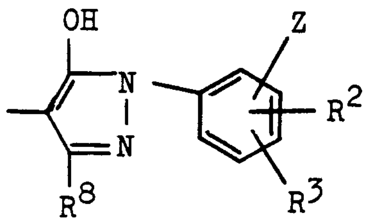

(8e)

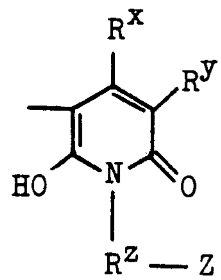

(8f)

in welchen

$R^2$, $R^3$, p und M die obengenannten Bedeutungen haben und die Hydroxygrupe in Formel (8b) in ortho-Stellung zur freien Bindung, die mit der Azogruppe verbunden ist, steht,

V ein Phenylenrest ist, der die obengenannten und definierten Reste $R^2$ und $R^3$ enthält, oder ein Naphthylenrest ist, der durch 1 oder 2 Sulfogruppen substituiert sein kann,

Z ein Rest der allgemeinen Formel (4)

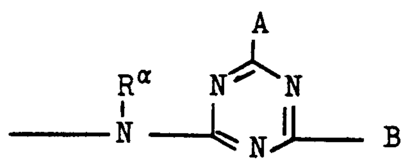

(4)

ist, in welcher

$R^\alpha$, A und B die in Anspruch 1 genannten Bedeutungen haben,

$R^5$ eine direkte Bindung oder ein Rest der Formel -NH-CO-phenylen- , -NH-CO-NH-phenylen- , -N($CH_3$)-CO-phenylen- oder -N($CH_3$)-CO-NH-phenylen-ist,

$R^6$ Wasserstoff, Alkyl von 1 bis 4 C-Atomen, Alkoxy von 1 bis 4 C-Atomen, Brom, Chlor oder Alkanoylamino von 2 bis 7 C-Atomen ist,

$R^7$ Wasserstoff, Alkyl von 1 bis 4 C-Atomen, Alkoxy von 1 bis 4 C-Atomen, Chlor, Alkanoylamino von 2 bis 7 C-Atomen, Ureido oder Phenylureido ist,

$R^8$ eine der oben genannten Bedeutungen besitzt,

$R^x$ ein Wasserstoffatom oder eine Alkylgruppe von 1 bis 4 C-Atomen oder eine durch Alkoxy von 1 bis 4 C-Atomen oder Cyano substituierte Alkylgruppe von 1 bis 4 C-Atomen ist,

$R^y$ ein Wasserstoffatom, eine Sulfogruppe oder eine Sulfoalkylgruppe mit einem Alkylenrest von 1 bis 4 C-Atomen oder eine Cyano oder Carbamoylgruppe ist und

$R^z$ eine Alkylengruppe von 1 bis 6 C-Atomen, bevorzugt von 1 bis 4 C-Atomen, oder ein Phenylenrest ist, der durch Substituenten aus der Gruppe Methyl, Ethyl, Chlor, Carboxy und Sulfo substituiert sein kann, oder eine Alkylenphenylen-Rest mit 2 bis 4 C-Atomen im Alkylenrest ist.

**5.** Farbstoff nach Anspruch 1 entsprechend der allgemeinen Formel (5c)

$$Z - D^* - N = N -(E^1 - N = N)_v - K^1 - X^2 - SO_2 - Y \quad (5c)$$

in welcher bedeuten:

Z ist ein Rest der allgemeinen Formel (4)

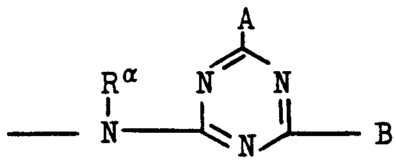

(4)

in welcher $R^\alpha$, A und B die in Anspruch 1 genannten Bedeutungen haben;

D* ist ein Phenylenrest, der durch 1 oder 2 Substituenten aus der Gruppe Wasserstoff, Methyl, Ethyl, Methoxy, Brom, Chlor, Carboxy und Sulfo substituiert sein kann, oder ist ein Naphthylenrest, der durch 1 oder 2 Sulfogruppen substituiert sein kann;

$E^1$ ist ein Rest der allgemeinen Formel (7a), (7b), (7c) oder (7d)

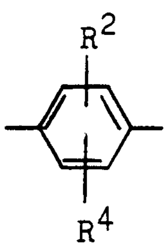

(7a)

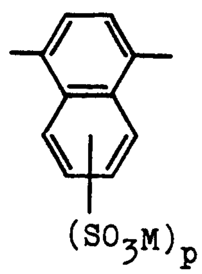

(7b)

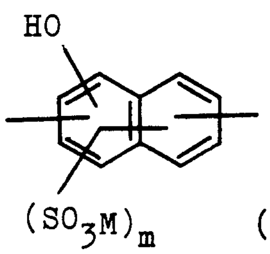

(7c)

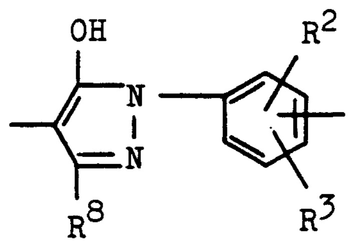

(7d)

in welchen

$R^2$ Wasserstoff, Methyl, Methoxy, Ethoxy, Alkanoyl von 2 bis 5 C-Atomen, Cyano, Carboxy, Sulfo, Alkoxycarbonyl von 2 bis 5 C-Atomen, Carbamoyl, N-($C_1$-$C_4$-Alkyl)-carbamoyl, Fluor, Chlor, Brom oder Trifluormethyl ist,

$R^3$ Wasserstoff, Methyl, Ethyl, Methoxy, Ethoxy, Cyano, Carboxy, Sulfo, Alkanoylamino von 2 bis 5 C-Atomen, Alkoxycarbonyl von 2 bis 5 C-Atomen, Carbamoyl, N-($C_1$-$C_4$-Alkyl)-carbamoyl, Fluor, Chlor, Nitro, Sulfamoyl, N-($C_1$-$C_4$-Alkyl)-sulfamoyl, Alkylsulfonyl von 1 bis 4 C-Atomen, Phenylsulfonyl oder Phenoxy ist,

$R^4$ ein Wasserstoffatom, eine Alkylgruppe von 1 bis 4 C-Atomen, eine Alkoxygruppe von 1 bis 4 C-Atomen, ein Chloratom, eine Alkanoylaminogruppe von 2 bis 5 C-Atomen, die Benzoylaminogruppe, die Ureidogruppe, eine N'-Phenylureidogruppe, eine N'-Alkyl-ureidogruppe mit 1 bis 4 C-Atomen im Alkylrest, eine Phenylsulfonylgruppe oder eine Alkylsulfonylgruppe von 1

bis 4 C-Atomen ist,

M ein Wasserstoffatom oder ein Alkalimetall ist,

m die Zahl 1 oder 2 bedeutet,

p die Zahl Null, 1 oder 2 bedeutet und

$R^8$ für Wasserstoff, Alkyl von 1 bis 4 C-Atomen, Cyano, Carboxy, Carbalkoxy von 2 bis 5 C-Atomen, Carbamoyl oder Phenyl steht;

v ist die Zahl Null oder 1;

$K^1$ ist ein Rest der allgemeinen Formel (9a), (9b) oder (9c)

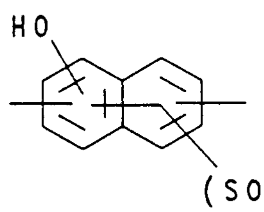

(9a)

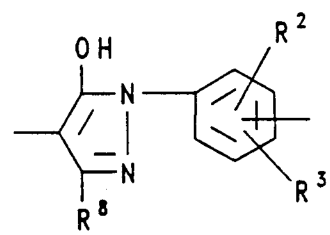

(9b)

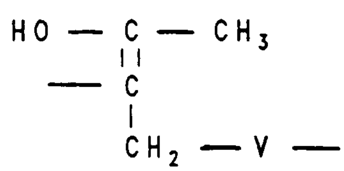

(9c)

in welchen M, p, $R^2$, $R^3$ und $R^8$ die obengenannten Bedeutungen haben und die Hydroxygruppe in Formel (9a) in ortho-Stellung zur freien Bindung steht, die mit der Azogruppe verbunden ist, und

V ein Phenylenrest ist, der die obengenannten und definierten Reste $R^2$ und $R^3$ enthält, oder ein Naphthylenrest ist, der durch 1 oder 2 Sulfogruppen substituiert sein kann;

$X^2$ ist eine direkte Bindung oder eine Alkylengruppe von 1 bis 4 C-Atomen oder der bivalente Rest einer Alkanoylamido-Gruppe von 2 bis 5 C-Atomen, hiervon bevorzugt die Gruppe $-NH-CO-(CH_2]_3-$;

Y hat eine der in Anspruch 1 genannten Bedeutungen.

**6.** Farbstoff nach Anspruch 1 entsprechend der allgemeinen Formel (5d)

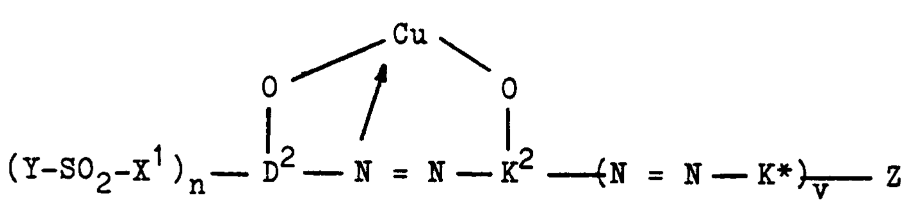

(5d)

in welcher bedeuten:

| | |
|---|---|
| Y und n | haben die in Anspruch 1 genannten Bedeutungen; |
| $X^1$ | ist eine direkte Bindung oder eine Alkylengruppe von 1 bis 4 C-Atomen oder bivalente Rest einer Alkanoylamido-Gruppe von 2 bis 5 C-Atomen, hiervon vorzugsweise die Gruppe der Formel $-(CH_2)_3-CONH-$ ; |
| $D^2$ | ist ein Benzolrest, der durch 1 oder 2 Substituenten aus der Gruppe Methyl, Ethyl, Methoxy, Ethoxy, Brom, Chlor, Carboxy und Sulfo substituiert sein kann, oder ist ein Naphthalinrest, der durch eine Sulfogruppe substituiert sein kann; |
| $K^2$ | ist ein Rest der allgemeinen Formel (10a) oder (10b) |

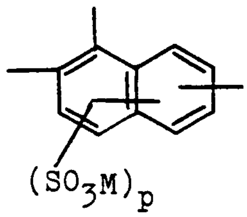

(10a)

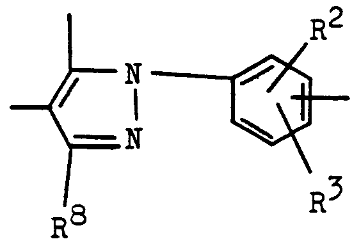

(10b)

in welchen

M ein Wasserstoffatom oder ein Alkalimetall ist,

p für die Zahl Null, 1 oder 2 steht,

$R^2$ Wasserstoff, Methyl, Methoxy, Ethoxy, Alkanoyl von 2 bis 5 C-Atomen, Cyano, Carboxy, Sulfo, Alkoxycarbonyl von 2 bis 5 C-Atomen, Carbamoyl, N-($C_1$-$C_4$-Alkyl)-carbamoyl, Fluor, Chlor, Brom oder Trifluormethyl ist,

$R^3$ Wasserstoff, Methyl, Ethyl, Methoxy, Ethoxy, Cyano, Carboxy, Sulfo, Alkanoylamino von 2 bis 5 C-Atomen, Alkoxycarbonyl von 2 bis 5 C-Atomen, Carbamoyl, N-($C_1$-$C_4$-Alkyl)-carbamoyl, Fluor, Chlor, Nitro, Sulfamoyl, N-($C_1$-$C_4$-Alkyl)-sulfamoyl, Alkylsulfonyl von 1 bis 4 C-Atomen, Phenylsulfonyl oder Phenoxy ist und

$R^8$ für Wasserstoff, Alkyl von 1 bis 4 C-Atomen, Cyano, Carboxy, Carbalkoxy von 2 bis 5 C-Atomen, Carbamoyl oder Phenyl steht;

Z ist ein Rest der allgemeinen Formel (4)

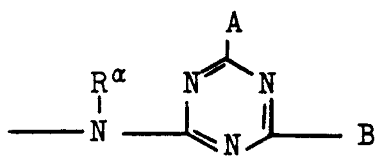

(4)

in welcher $R^\alpha$, A und B eine die in Anspruch 1 genannten Bedeutungen haben;

v ist die Zahl Null oder 1;

-K*-Z ist ein Rest der allgemeinen Formel (8a), (8b), (8c), (8d), (8e) oder (8f)

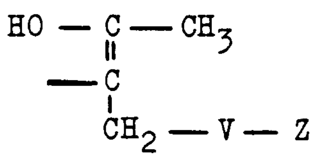

(8a)

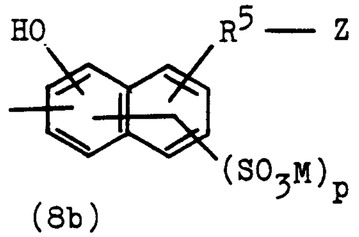

(8b)

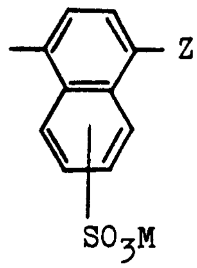

(8c)

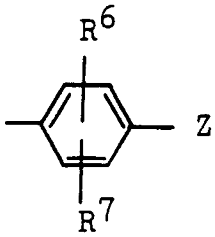

(8d)

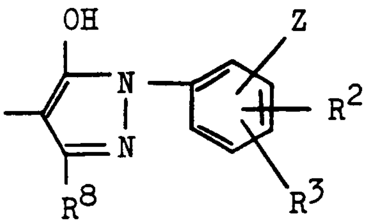

(8e)

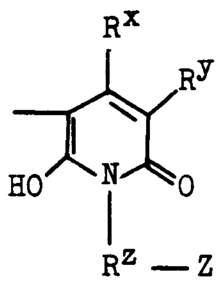

(8f)

in welchen

$R^2$, $R^3$, $R^8$, Z, p und M — die obengenannten Bedeutungen haben und die Hydroxygrupe in Formel (8b) in ortho-Stellung zur freien Bindung, die mit der Azogruppe verbunden ist, steht,

V — ein Phenylenrest ist, der die obengenannten und definierten Reste $R^2$ und $R^3$ enthält, oder ein Naphthylenrest ist, der durch 1 oder 2 Sulfogruppen substituiert sein kann,

$R^5$ — eine direkte Bindung oder ein Rest der Formel -NH-CO-phenylen- , -NH-CO-NH-phenylen- , -N($CH_3$)-CO-phenylen- oder -N($CH_3$)-CO-NH-phenylen- ist,

$R^6$ — Wasserstoff, Alkyl von 1 bis 4 C-Atomen, Alkoxy von 1 bis 4 C-Atomen, Brom, Chlor oder Alkanoylamino von 2 bis 7 C-Atomen ist,

$R^7$ — Wasserstoff, Alkyl von 1 bis 4 C-Atomen, Alkoxy von 1 bis 4 C-Atomen, Chlor oder Alkanoylamino von 2 bis 7 C-Atomen, oder eine Ureido- oder Phenylureidogruppe ist,

$R^x$ — ein Wasserstoffatom oder eine Alkylgruppe von 1 bis 4 C-Atomen oder eine durch Alkoxy von 1 bis 4 C-Atomen oder Cyano substituierte Alkylgruppe von 1 bis 4 C-Atomen ist,

$R^y$ — ein Wasserstoffatom, eine Sulfogruppe oder eine Sulfoalkylgruppe mit einem Alkylenrest von 1 bis 4 C-Atomen oder eine Cyano- oder Carbamoylgruppe ist und

$R^z$ — eine Alkylengruppe von 1 bis 6 C-Atomen, bevorzugt von 1 bis 4 C-Atomen, oder ein Phenylenrest ist, der durch Substituenten aus der Gruppe Methyl, Ethyl, Chlor, Carboxy und Sulfo substituiert sein kann, oder eine Alkylenphenylen-Rest mit 2 bis 4 C-Atomen im Alkylenrest ist.

**7.** Farbstoff nach mindestens einem der Ansprüche 1 bis 6, dadurch gekennzeichnet, daß $X^1$ und $X^2$ eine direkte Bindung bedeuten.

**8.** Verbindung nach mindestens einem der Ansprüche 1 bis 7, dadurch gekennzeichnet, daß $R^\alpha$ die Methylgruppe oder bevorzugt ein Wasserstoffatom ist.

**9.** Farbstoff nach mindestens einem der Ansprüche 1 bis 8, dadurch gekennzeichnet, daß A eine Gruppe der allgemeinen Formel (2a) mit der im Anspruch 1 genannten Bedeutung ist.

**10.** Farbstoff nach mindestens einem der Ansprüche 1 bis 9, dadurch gekennzeichnet, daß B die gleiche Bedeutung wie A besitzt.

**11.** Farbstoff nach Anspruch 9 oder 10 oder 9 und 10, dadurch gekennzeichnet, daß W ein Wasserstoffatom oder eine Methylgruppe ist, R ein Wasserstoffatom bedeutet, k für die Zahl Null steht und $Y^1$ eine $\beta$-Sulfatoethyl- oder $\beta$-Chlorethyl-Gruppe ist.

**12.** Farbstoff nach Anspruch 11, dadurch gekennzeichnet, daß G die n-Propylen-Gruppe bedeutet.

**13.** Farbstoff nach mindestens einem der Ansprüche 1 bis 12, dadurch gekennzeichnet, daß Y die Vinylgruppe oder eine $\beta$-Sulfatoethyl-Gruppe bedeutet.

**14.** Farbstoff nach mindestens einem der Ansprüche 1 bis 10, dadurch gekennzeichnet, daß die Gruppe der allgemeinen Formel (4)

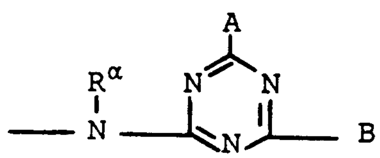 (4)

eine Gruppe der allgemeinen Formel (4A)

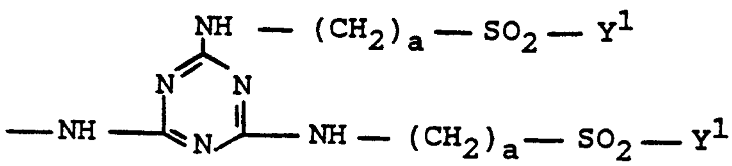 (4A)

ist, in welcher $Y^1$ die Vinylgruppe, eine $\beta$-Sulfatoethyl-, $\beta$-Halogenethyl-, $\beta$-Thiosulfatoethyl-, $\beta$-Phosphatoethyl- oder $\beta$-Acetoxyethylgruppe ist und a für die Zahl 2 oder 3 steht.

**15.** Farbstoff nach mindestens einem der Ansprüche 1 bis 10 und 12 bis 14, dadurch gekennzeichnet, daß $Y^1$ die Vinyl-, $\beta$-Chlorethyl- oder $\beta$-Sulfatoethyl-Gruppe ist.

**16.** Farbstoff nach Anspruch 14 oder 15, dadurch gekennzeichnet, daß a die Zahl 3 ist.

**17.** Verfahren zur Herstellung eines Farbstoffes von Anspruch 1, dadurch gekennzeichnet, daß man analog üblichen Verfahrensweisen der Synthese von Mono- und Disazofarbstoffen und deren Schwermetallkomplex-Verbindungen Farbstoffvorprodukte, von denen mindestens eines eine faserreaktive Gruppierung der in Anspruch 1 genannten und definierten allgemeinen Formel (4) und mindestens eines eine faserreaktive Gruppierung der in Anspruch 1 genannten und definierten allgemeinen Formel $-SO_2-Y$ enthält, miteinander umsetzt, oder daß man ein Cyanurhalogenid mit einer Verbindung der allgemeinen Formel (15)

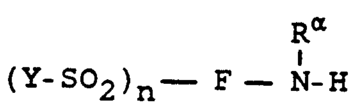 (15)

in welcher F, Y, $R^\alpha$ und n die in Anspruch 1 genannten Bedeutungen haben, und einer oder zwei Aminoverbindungen der allgemeinen Formel (16)

$H_2N-A$ (16)

in welcher A eine der in Anspruch 1 genannten Bedeutungen hat, wobei A auch eine andere Bedeutung gemäß dem Rest B darstellen kann, in beliebiger Folge umsetzt.

**18.** Verfahren zur Herstellung eines Farbstoffes der in Anspruch 1 genannten und definierten allgemeinen Formel (1), in welcher jedoch Y für die β-Sulfatoethyl- oder β-Phosphatoethyl-Gruppe steht, dadurch gekennzeichnet, daß man den Farbstoff entsprechend der allgemeinen Formel (1), in welcher jedoch eine oder mehrere der Gruppen Y, $Y^1$ und $Y^2$ β-Hydroxyethyl-Gruppe(n) darstellen, mit einem Sulfatierungsmittel bzw. Phospatierungsmittel umsetzt.

**19.** Verwendung eines in Anspruch 1 genannten und definierten Farbstoffes der allgemeinen Formel (1) zum Färben (einschließlich Bedrucken) von hydroxy- und/oder carbonamidgruppenhaltigem Material, insbesondere Fasermaterial.

**20.** Verfahren zum Färben (einschließlich Bedrucken) von hydroxy- und/oder carbonamidgruppenhaltigem Material, insbesondere Fasermaterial, bei welchem man einen Farbstoff auf das Material aufbringt oder in das Material einbringt und ihn mittels Wärme und/oder mit Hilfe eines alkalisch wirkenden Mittels fixiert, dadurch gekennzeichnet, daß man als Farbstoff einen Farbstoff entsprechend der in Anspruch 1 genannten und definierten Formel (1) einsetzt.

**Patentansprüche für folgenden Vertragsstaat : ES**

**1.** Verfahren zur Herstellung eines Farbstoffes entsprechend der allgemeinen Formel (1)

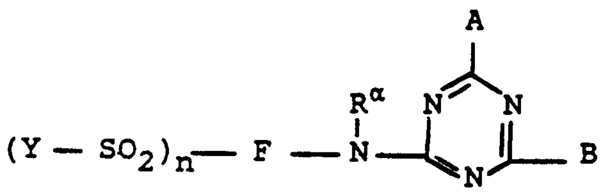

(1)

in welcher bedeuten:

- F ist der Rest eines mindestens eine Sulfogruppe enthaltenden metallfreien oder schwermetallhaltigen Mono- oder Disazofarbstoffes;
- n ist die Zahl 1 oder 2, bevorzugt 1;
- Y ist die Vinylgruppe oder β-Sulfatoethyl-, β-Halogenethyl-, eine β-Thiosulfatoethyl-, β-Phosphatoethyl- oder β-Acetoxyethyl-Gruppe;
- $R^{\alpha}$ ist ein Wasserstoffatom oder eine geradkettige oder verzweigte Alkylgruppe von 1 bis 4 C-Atomen, die durch eine Carboxy-, Sulfo-, Cyano- oder Hydroxygruppe oder durch ein Chloratom substituiert sein kann;
- A ist eine Gruppe der allgemeinen Formel (2a) oder (2b)

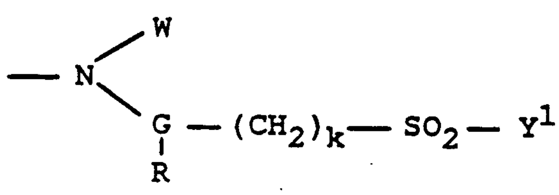

(2a)

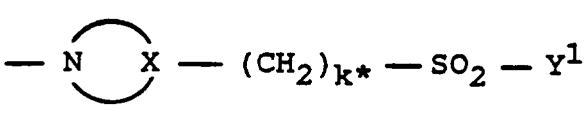

(2b)

in welcher

G ein geradkettiger oder verzweigter Alkylenrest von 1 bis 6 C-Atomen, vorzugsweise von 2 bis

4 C-Atomen, ist oder einen Alkylenrest von 2 bis 6 C-Atomen bedeutet, der durch 1 oder 2 Heterogruppen unterbrochen ist, wobei die Alkylenanteile geradkettig oder verzweigt sein können und bevorzugt solche von 2 oder 3 C-Atomen sind, oder ein gegebenenfalls methylsubstituierter Cycloalkylenrest von 5 bis 8 C-Atomen ist,

R ein Wasserstoffatom oder ein Chlor-, Brom- oder Fluoratom oder eine Hydroxy-, Sulfato-, Cyano-, Carboxy- oder Carbamoylgruppe oder eine Carbalkoxygruppe von 2 bis 5 C-Atomen oder eine Alkanoyloxygruppe von 2 bis 5 C-Atomen oder eine Benzoylaminogruppe, die durch 1 oder 2 Substituenten aus der Gruppe Sulfo, Carboxy, Methyl, Ethyl, Methoxy, Ethoxy und Chlor substituiert sein kann, ist oder eine Gruppe der allgemeinen Formel $-SO_2-Y^2$ bedeutet, in welcher

$Y^2$ eine der obigen für Y angegebenen Bedeutungen besitzt oder eine β-Hydroxyethyl-Gruppe darstellt, wobei $Y^2$ mit Y gleich oder verschieden sein kann,

k für die Zahl Null, 1 oder 2 steht,

k* die Zahl Null, 1, 2, 3 oder 4 bedeutet,

X zusammen mit dem N-Atom und 1 oder 2 Alkylengruppen von 1 bis 5 C-Atomen und gegebenenfalls 1 oder 2 Heteroatomen den bivalenten Rest eines heterocyclischen Ringes bildet,

$Y^1$ eine der oben für Y angegebenen Bedeutungen besitzt, wobei $Y^1$ mit Y gleich oder verschieden sein kann, und

W ein Wasserstoffatom, die Methyl-, Sulfomethyl- oder Carboxymethylgruppe oder eine geradkettige oder verzweigte Alkylgruppe von 2 bis 6 C-Atomen ist, die durch 1 oder 2 Substituenten aus der Gruppe Methoxy, Ethoxy, Carboxy, Sulfo, Hydroxy und Halogen substituiert sein kann, oder ein gegebenenfalls methyl-substituierter Cycloalkylenrest von 5 bis 8 C-Atomen ist oder ein Phenylrest ist, der durch Substituenten aus der Gruppe Alkyl von 1 bis 4 C-Atomen, Alkoxy von 1 bis 4 C-Atomen, Carboxy, Sulfo und Halogen substituiert sein kann;

B hat eine der für A angegebenen Bedeutungen, wobei A und B zueinander gleiche oder voneinander verschiedene Bedeutungen besitzen können;

dadurch gekennzeichnet, daß man analog üblichen Verfahrensweisen der Synthese von Mono- und Disazofarbstoffen und deren Schwermetallkomplex-Verbindungen Farbstoffvorprodukte, von denen mindestens eines eine faserreaktive Gruppierung der oben genannten und definierten allgemeinen Formel (4) und mindestens eines eine faserreaktive Gruppierung der oben genannten und definierten allgemeinen Formel $-SO_2-Y$ enthält, miteinander umsetzt, oder daß man ein Cyanurhalogenid mit einer Verbindung der allgemeinen Formel (15)

$$(Y\text{-}SO_2)_n\text{—}F\text{—}\underset{}{\overset{R^{\alpha}}{\overset{|}{N}}}\text{-}H \qquad (15)$$

in welcher F, Y, $R^{\alpha}$ und n die oben genannten Bedeutungen haben, und einer oder zwei Aminoverbindungen der allgemeinen Formel (16)

$H_2N\text{-}A$ (16)

in welcher A eine der oben genannten Bedeutungen hat, wobei A auch eine andere Bedeutung gemäß dem Rest B darstellen kann, in beliebiger Folge umsetzt,
oder daß man zur Herstellung eines Farbstoffes der allgemeinen Formel (1), in welcher jedoch Y für die β-Sulfatoethyl- oder β-Phosphatoethyl-Gruppe steht, den Farbstoff entsprechend der allgemeinen Formel (1), in welcher jedoch eine oder mehrere der Gruppen Y, $Y^1$ und $Y^2$ β-Hydroxyethyl-Gruppe(n) darstellen, mit einem Sulfatierungsmittel bzw. Phospatierungsmittel umsetzt.

**2.** Verfahren nach Anspruch 1, dadurch gekennzeichnet, daß der Farbstoff der Formel (1) ein Farbstoff entsprechend der allgemeinen Formel (3a) oder (3b)

$$(Y-SO_2-X^1)_n-D-N=N-(E-N=N)_v-K-Z \qquad (3a)$$

$$Z-D-N=N-(E-N=N)_v-K-X^1-SO_2-Y \qquad (3b)$$

ist, in welchen bedeuten:

- Y und n: haben eine der in Anspruch 1 genannten Bedeutungen;
- $X^1$: ist eine direkte Bindung oder ein Brückenglied, wie bspw. eine Alkylengruppe von 1 bis 4 C-Atomen oder der bivalente Rest einer Alkanoylamido-Gruppe von 2 bis 5 C-Atomen;
- n: ist die Zahl 1 oder 2, vorzugsweise 1;
- Z: ist eine Gruppe der allgemeinen Formel (4)

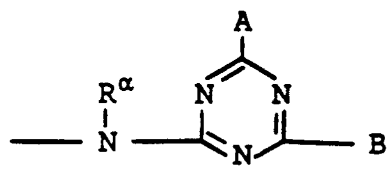

(4)

in welcher $R^\alpha$, A und B eine der in Anspruch 1 genannten Bedeutungen besitzen;

- D: ist der Rest einer in der Azochemie üblichen Diazokomponente aus der Benzol- oder Naphthalinreihe, die für Azofarbstoffe übliche Substituenten enthalten kann, wie beispielsweise Sulfo-, Carboxy-, Hydroxy-, Amino-, Methyl-, Ethyl-, Methoxy-und Ethoxygruppen und gegebenenfalls substituierte Alkanoylaminogruppen von 2 bis 4 C-Atomen, gegebenenfalls substituierte Benzoylaminogruppen und Halogenatome;
- K: ist der Rest einer in der Azochemie üblichen Kupplungskomponente der Benzol-, Naphthalin-, Pyrazolon-, 6-Hydroxy-2-pyridon oder Acetessigsäurearylamid-Reihe, die für Azofarbstoffe übliche Substituenten, wie beispielsweise Hydroxy, Sulfo-, Carboxy-, Amino-, Methyl-, Ethyl-, Methoxy- und Ethoxygruppen und gegebenenfalls substituierte Alkanoylaminogruppen von 2 bis 4 C-Atomen, gegebenenfalls substituierte Benzoylaminogruppen und Halogenatome, enthalten kann;
- E: ist der Rest einer in Disazofarbstoffen üblichen Mittelkomponente der Benzol- und Naphthalinreihe, der durch für Azofarbstoffe übliche Substituenten substituiert sein kann, wie beispielsweise Sulfo-, Carboxy-, Hydroxy-, Methyl-, Ethyl, Methoxy- und Ethoxygruppen und gegebenenfalls substituierte Alkanoylaminogruppen von 2 bis 4 C-Atomen, einer gegebenenfalls substituierten Ureidogruppe, gegebenenfalls substituierten Benzoylaminogruppen und Halogenatome;
- v: steht für die Zahl Null oder 1;

die Reste D, E und K enthalten zusammen mindestens zwei Sulfogruppen, vorzugsweise 3 bis 4 Sulfogruppen.

**3.** Verfahren nach Anspruch 1, dadurch gekennzeichnet, daß der Farbstoff der Formel (1) ein Farbstoff entsprechend der allgemeinen Formel (5a)

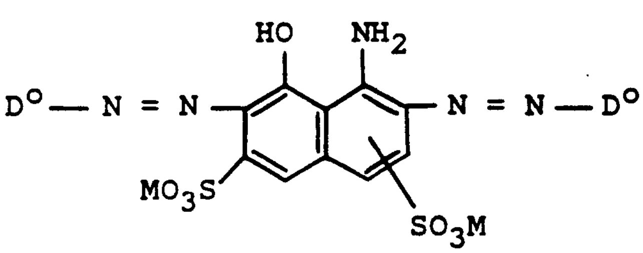

(5a)

ist, in welcher bedeuten:

M ist ein Wasserstoffatom oder ein Alkalimetall;

D° ist ein Rest der allgemeinen Formel (6a), (6b) oder (6c)

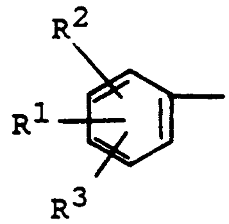
(6a)

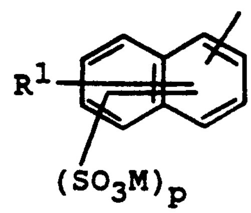
(6b)

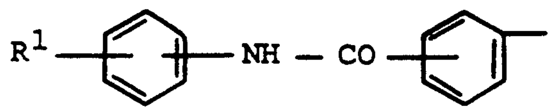
(6c)

in welchen

$R^1$ in dem einen Rest D° eine oder zwei Gruppen der allgemeinen Formel $Y\text{-}SO_2\text{-}X^1\text{-}$ darstellt, in welcher Y die Anspruch 1 genannte Bedeutung besitzt und $X^1$ eine direkte Bindung oder eine Alkylengruppe von 1 bis 4 C-Atomen oder der bivalente Rest einer Alkanoylamido-Gruppe von 2 bis 5 C-Atomen, bevorzugt hiervon der bivalente Rest der Propionylamido-Gruppe, ist, und $R^1$ in dem anderen D° einen Rest Z der allgemeinen Formel (4)

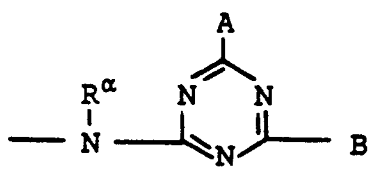
(4)

bedeutet, in welcher $R^\alpha$, A und B eine der in Anspruch 1 genannten Bedeutungen haben,

$R^2$ Wasserstoff, Methyl, Ethyl, Methoxy, Ethoxy, Alkanoyl von 2 bis 5 C-Atomen, Cyano, Carboxy, Sulfo, Alkoxycarbonyl von 2 bis 5 C-Atomen, Carbamoyl, N-($C_1$-$C_4$-Alkyl)-carbamoyl, Fluor, Chlor, Brom oder Trifluormethyl ist,

$R^3$ Wasserstoff, Methyl, Ethyl, Methoxy, Ethoxy, Cyano, Carboxy, Sulfo, Alkanoylamino von 2 bis 5 C-Atomen, Alkoxycarbonyl von 2 bis 5 C-Atomen, Carbamoyl, N-($C_1$-$C_4$-Alkyl)-carbamoyl, Fluor, Chlor, Nitro, Sulfamoyl, N-($C_1$-$C_4$-Alkyl)-sulfamoyl, Alkylsulfonyl von 1 bis 4 C-Atomen, Phenylsulfonyl oder Phenoxy ist,

p die Zahl Null, 1 oder 2 bedeutet (wobei diese Gruppe im Falle von p gleich Null ein Wasserstoffatom bedeutet) und

M die obengenannte Bedeutung hat.

**4.** Verfahren nach Anspruch 1, dadurch gekennzeichnet, daß der Farbstoff der Formel (1) ein Farbstoff entsprechend der allgemeinen Formel (5b)

$$(Y\text{-}SO_2\text{-}X^1)_n\!-\!D^1-N=N-(E^1-N=N)_v-K^*-Z \qquad (5b)$$

ist, in welcher bedeuten:

$X^1$ ist eine direkte Bindung oder eine Alkylengruppe von 1 bis 4 C-Atomen oder bivalente Rest einer Alkanoylamido-Gruppe von 2 bis 5 C-Atomen, hiervon vorzugsweise die Gruppe der Formel $-(CH_2)_3\text{-}CO\text{-}NH\text{-}$ ;

$D^1$ ist ein Phenylenrest, der die Substituenten $R^2$ und $R^3$ besitzt, welche bedeuten:

$R^2$ ist Wasserstoff, Methyl, Ethyl, Methoxy, Ethoxy, Alkanoyl von 2 bis 5 C-Atomen, Cyano, Carboxy, Sulfo, Alkoxycarbonyl von 2 bis 5 C-Atomen, Carbamoyl, N-($C_1$-$C_4$-Alkyl)-carbamoyl, Fluor, Chlor, Brom oder Trifluormethyl;

$R^3$ ist Wasserstoff, Methyl, Ethyl, Methoxy, Ethoxy, Cyan, Carboxy, Sulfo, Alkanoylamino von 2 bis 5 C-Atomen, Alkoxycarbonyl von 2 bis 5 C-Atomen, Carbamoyl, N-($C_1$-$C_4$-Alkyl)-carbamoyl, Fluor, Chlor, Nitro, Sulfamoyl, N-($C_1$-$C_4$-Alkyl)-sulfamoyl,Alkylsulfonyl von 1 bis 4 C-Atomen Phenylsulfonyl oder Phenoxy;

$E^1$ ist ein Rest der allgemeinen Formel (7a), (7b), (7c) oder (7d)

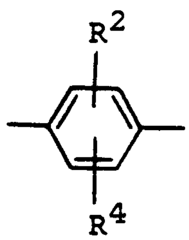
(7a)

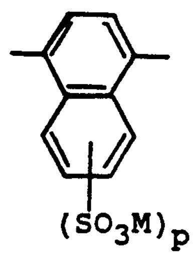
(7b)

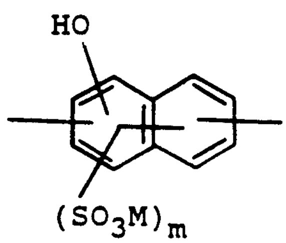
(7c)

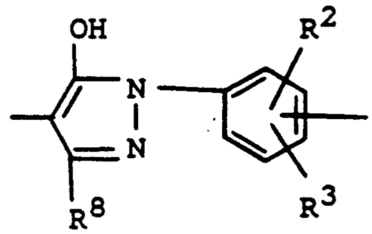
(7d)

in welchen

$R^2$ und $R^3$ eine der oben angegebenen Bedeutungen haben,

$R^4$ ein Wasserstoffatom, eine Alkylgruppe von 1 bis 4 C-Atomen, eine Alkoxygruppe von 1 bis 4 C-Atomen, ein Chloratom, eine Alkanoylaminogruppe von 2 bis 5 C-Atomen, die Benzoylaminogruppe, die Ureidogruppe, eine N′-Phenyl-ureidogruppe, eine N′-Alkyl-ureidogruppe mit 1 bis 4 C-Atomen im Alkylrest, eine Phenylsulfonylgruppe oder eine Alkylsulfonylgruppe von 1 bis 4 C-Atomen ist,

M ein Wasserstoffatom oder ein Alkalimetall ist,

m die Zahl 1 oder 2 bedeutet,

p die Zahl Null, 1 oder 2 bedeutet und

$R^8$ für Wasserstoff, Alkyl von 1 bis 4 C-Atomen, Cyano, Carboxy, Carbalkoxy von 2 bis 5 C-Atomen, Carbamoyl oder Phenyl steht;

v ist die Zahl Null oder 1;

-K*-Z ist ein Rest der allgemeinen Formel (8a), (8b), (8c), (8d), (8e) oder (8f)

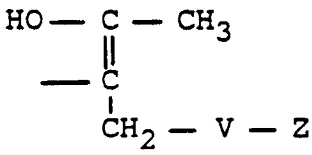

(8a)

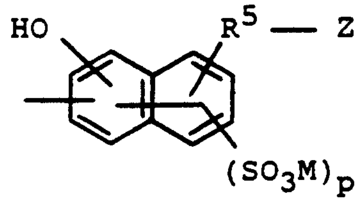

(8b)

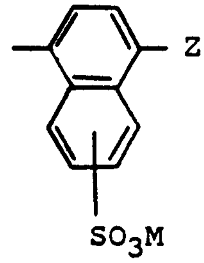

(8c)

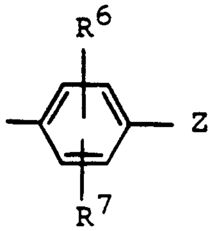

(8d)

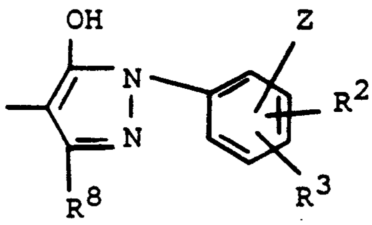

(8e)

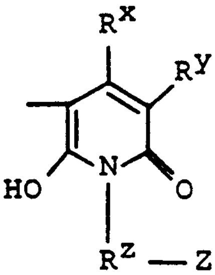

(8f)

in welchen

| | |
|---|---|
| $R^2$ und $R^3$, p und M | die obengenannten Bedeutungen haben und die Hydroxygruppe in Formel (8b) in ortho-Stellung zur freien Bindung, die mit der Azogruppe verbunden ist, steht, |
| V | ein Phenylenrest ist, der die obengenannten und definierten Reste $R^2$ und $R^3$ enthält, oder ein Naphthylenrest ist, der durch 1 oder 2 Sulfogruppen substituiert sein kann, |
| Z | ein Rest der allgemeinen Formel (4) |

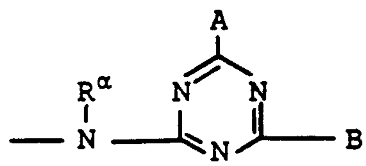

(4)

ist, in welcher

$R^\alpha$, A und B die in Anspruch 1 genannten Bedeutungen haben,

| | |
|---|---|
| $R^5$ | eine direkte Bindung oder ein Rest der Formel -NH-CO-phenylen- , -NH-CO-NH-phenylen- , -N($CH_3$)-CO-phenylen- oder -N($CH_3$)-CO-NH-phenylen-ist, |
| $R^6$ | Wasserstoff, Alkyl von 1 bis 4 C-Atomen, Alkoxy von 1 bis 4 C-Atomen, Brom, Chlor oder Alkanoylamino von 2 bis 7 C-Atomen ist, |
| $R^7$ | Wasserstoff, Alkyl von 1 bis 4 C-Atomen, Alkoxy von 1 bis 4 C-Atomen, Chlor, Alkanoylamino von 2 bis 7 C-Atomen, Ureido oder Phenylureido ist, |
| $R^8$ | eine der oben genannten Bedeutungen besitzt, |
| $R^x$ | ein Wasserstoffatom oder eine Alkylgruppe von 1 bis 4 C-Atomen oder eine durch Alkoxy von 1 bis 4 C-Atomen oder Cyano substituierte Alkylgruppe von 1 bis 4 C-Atomen ist, |
| $R^y$ | ein Wasserstoffatom, eine Sulfogruppe oder eine Sulfoalkylgruppe mit einem Alkylenrest von 1 bis 4 C-Atomen oder eine Cyano oder Carbamoylgruppe ist und |
| $R^z$ | eine Alkylengruppe von 1 bis 6 C-Atomen, bevorzugt von 1 bis 4 C-Atomen, oder ein Phenylenrest ist, der durch Substituenten aus der Gruppe Methyl, Ethyl, Chlor, Carboxy und Sulfo substituiert sein kann, oder eine Alkylenphenylen-Rest mit 2 bis 4 C-Atomen im Alkylenrest ist. |

5. Verfahren nach Anspruch 1, dadurch gekennzeichnet, daß der Farbstoff der Formel (1) ein Farbstoff entsprechend der allgemeinen Formel (5c)

$$Z - D^{*} - N = N -\!\!\left(E^{1} - N = N\right)_{v}\!\!- K^{1} - X^{2} - SO_{2} - Y \qquad (5c)$$

ist, in welcher bedeuten:

Z ist ein Rest der allgemeinen Formel (4)

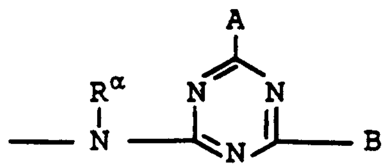

(4)

in welcher $R^{\alpha}$ A und B die in Anspruch 1 genannten Bedeutungen haben;

D* ist ein Phenylenrest, der durch 1 oder 2 Substituenten aus der Gruppe Wasserstoff, Methyl, Ethyl, Methoxy, Brom, Chlor, Carboxy und Sulfo substituiert sein kann, oder ist ein Naphthylenrest, der durch 1 oder 2 Sulfogruppen substituiert sein kann;

$E^1$ ist ein Rest der allgemeinen Formel (7a), (7b), (7c) oder (7d)

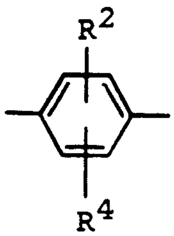

(7a)

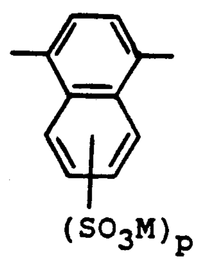

(7b)

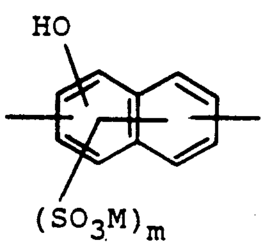

(7c)

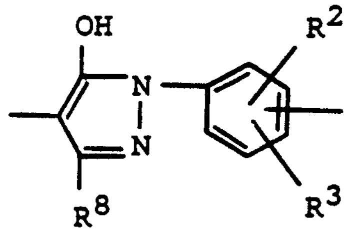

(7d)

in welchen

$R^2$ Wasserstoff, Methyl, Methoxy, Ethoxy, Alkanoyl von 2 bis 5 C-Atomen, Cyano, Carboxy, Sulfo, Alkoxycarbonyl von 2 bis 5 C-Atomen, Carbamoyl, N-($C_1$-$C_4$-Alkyl)-carbamoyl, Fluor, Chlor, Brom oder Trifluormethyl ist,

$R^3$ Wasserstoff, Methyl, Ethyl, Methoxy, Ethoxy, Cyano, Carboxy, Sulfo, Alkanoylamino von 2 bis 5 C-Atomen, Alkoxycarbonyl von 2 bis 5 C-Atomen, Carbamoyl, N-($C_1$-$C_4$-Alkyl)-carbamoyl, Fluor, Chlor, Nitro, Sulfamoyl, N-($C_1$-$C_4$-Alkyl)-sulfamoyl, Alkylsulfonyl von 1 bis 4 C-Atomen, Phenylsulfonyl oder Phenoxy ist,

$R^4$ ein Wasserstoffatom, eine Alkylgruppe von 1 bis 4 C-Atomen, eine Alkoxygruppe von 1 bis 4 C-Atomen, ein Chloratom, eine Alkanoylaminogruppe Von 2 bis 5 C-Atomen, die Benzoylaminogruppe, die Ureidogruppe, eine N'-Phenyl-ureidogruppe, eine N'-Alkyl-ureidogruppe mit 1 bis 4 C-Atomen im Alkylrest, eine Phenylsulfonylgruppe oder eine Alkylsulfonylgruppe von 1 bis 4 C-Atomen ist,

M ein Wasserstoffatom oder ein Alkalimetall ist,
m die Zahl 1 oder 2 bedeutet,
p die Zahl Null, 1 oder 2 bedeutet und
$R^8$ für Wasserstoff, Alkyl von 1 bis 4 C-Atomen, Cyano, Carboxy, Carbalkoxy von 2 bis 5 C-Atomen, Carbamoyl oder Phenyl steht;
v ist die Zahl Null oder 1;
$K^1$ ist ein Rest der allgemeinen Formel (9a), (9b) oder (9c)

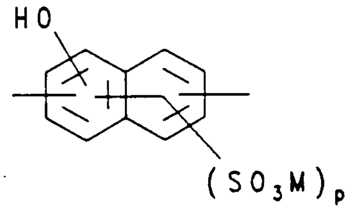

(9a)

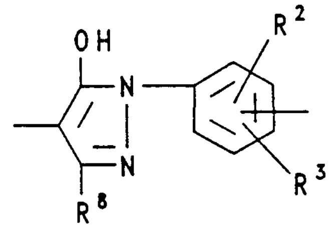

(9b)

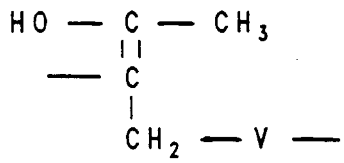

.(9c)

in welchen M, p, $R^2$, $R^3$ und $R^8$ die obengenannten Bedeutungen haben und die Hydroxygruppe in Formel (9a) in ortho-Stellung zur freien Bindung steht, die mit der Azogruppe verbunden ist, und
V ein Phenylenrest ist, der die obengenannten und definierten Reste $R^2$ und $R^3$ enthält, oder ein Naphthylenrest ist, der durch 1 oder 2 Sulfogruppen substituiert sein kann;
$X^2$ ist eine direkte Bindung oder eine Alkylengruppe von 1 bis 4 C-Atomen oder der bivalente Rest einer Alkanoylamido-Gruppe von 2 bis 5 C-Atomen, hiervon bevorzugt die Gruppe $-NH-CO-(CH_2)_3-$;
Y hat eine der in Anspruch 1 genannten Bedeutungen.

**6.** Verfahren nach Anspruch 1, dadurch gekennzeichnet, daß der Farbstoff der Formel (1) ein Farbstoff entsprechend der allgemeinen Formel (5d)

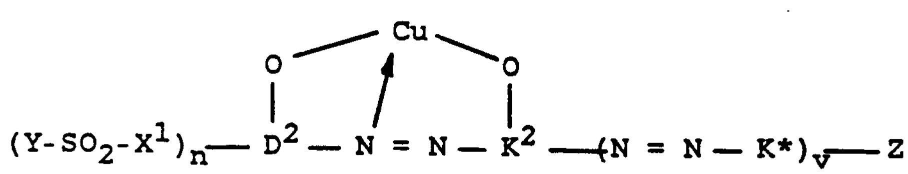

(5d)

ist, in welcher bedeuten:

| | |
|---|---|
| Y und n | haben die in Anspruch 1 genannten Bedeutungen; |
| $X^1$ | ist eine direkte Bindung oder eine Alkylengruppe von 1 bis 4 C-Atomen oder bivalente Rest einer Alkanoylamido-Gruppe von 2 bis 5 C-Atomen, hiervon vorzugsweise die Gruppe der Formel $-(CH_2)_3-CONH-$ ; |
| $D^2$ | ist ein Benzolrest, der durch 1 oder 2 Substituenten aus der Gruppe Methyl, Ethyl, Methoxy, Ethoxy, Brom, Chlor, Carboxy und Sulfo substltuiert sein kann, oder ist ein Naphthalinrest, der durch eine Sulfogruppe substituiert sein kann; |
| $K^2$ | ist ein Rest der allgemeinen Formel (10a) oder (10b) |

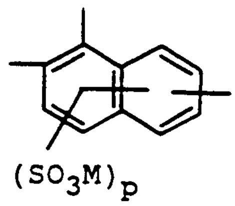

(10a)

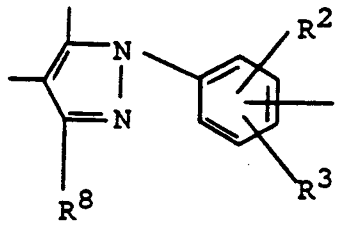

(10b)

in welchen

| | |
|---|---|
| M | ein Wasserstoffatom oder ein Alkalimetall ist, |
| p | für die Zahl Null, 1 oder 2 steht, |
| $R^2$ | Wasserstoff, Methyl, Methoxy, Ethoxy, Alkanoyl von 2 bis 5 C-Atomen, Cyano, Carboxy, Sulfo, Alkoxycarbonyl von 2 bis 5 C-Atomen, Carbamoyl, N-($C_1$-$C_4$-Alkyl)-carbamoyl, Fluor, Chlor, Brom oder Trifluormethyl ist, |
| $R^3$ | Wasserstoff, Methyl, Ethyl, Methoxy, Ethoxy, Cyano, Carboxy, Sulfo, Alkanoylamino von 2 bis 5 C-Atomen, Alkoxycarbonyl von 2 bis 5 C-Atomen, Carbamoyl, N-($C_1$-$C_4$-Alkyl)-carbamoyl, Fluor, Chlor, Nitro, Sulfamoyl, N-($C_1$-$C_4$-Alkyl)-sulfamoyl, Alkylsulfonyl von 1 bis 4 C-Atomen, Phenysulfonyl oder Phenoxy ist und |
| $R^8$ | für Wasserstoff, Alkyl von 1 bis 4 C-Atomen, Cyano, Carboxy, Carbalkoxy von 2 bis 5 C-Atomen, Carbamoyl oder Phenyl steht; |
| Z | ist ein Rest der allgemeinen Formel (4) |

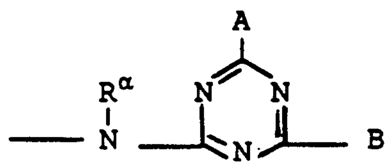

(4)

in welcher $R^\alpha$, A und B eine die in Anspruch 1 genannten Bedeutungen haben;

| | |
|---|---|
| v | ist die Zahl Null oder 1; |
| -K*-Z | ist ein Rest der allgemeinen Formel (8a), (8b), (8c), (8d), (8e) oder (8f) |

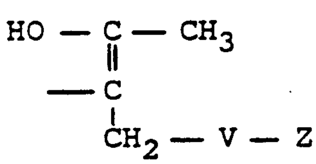

(8a)

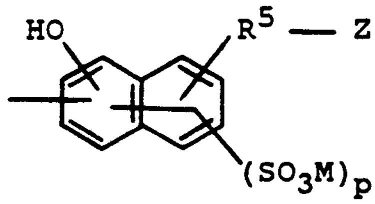

(8b)

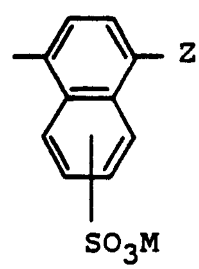

(8c)

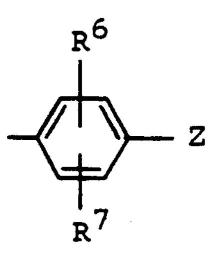

(8d)

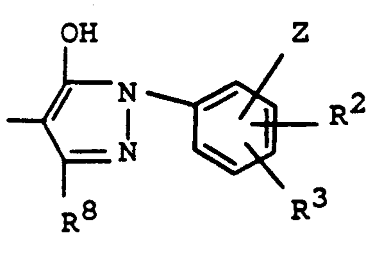

(8e)

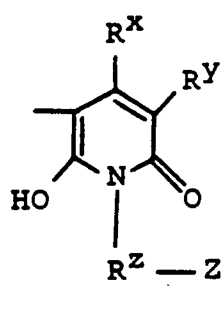

(8f)

in welchen

| | |
|---|---|
| $R^2$, $R^3$, R8, Z, p und M | die obengenannten Bedeutungen haben und die Hydroxygrupe in Formel (8b) in ortho-Stellung zur freien Bindung, die mit der Azogruppe verbunden ist, steht, |
| V | ein Phenylenrest ist, der die obengenannten und definierten Reste $R^2$ und $R^3$ enthält, oder ein Naphthylenrest ist, der durch 1 oder 2 Sulfogruppen substituiert sein kann, |
| $R^5$ | eine direkte Bindung oder ein Rest der Formel -NH-CO-phenylen , -NH-CO-NH-phenylen- , -N($CH_3$)-CO-phenylen- oder -N($CH_3$)-CO-NH-phenylen-ist, |
| $R^6$ | Wasserstoff, Alkyl von 1 bis 4 C-Atomen, Alkoxy von 1 bis 4 C-Atomen, Brom, Chlor oder Alkanoylamino von 2 bis 7 C-Atomen ist, |
| $R^7$ | Wasserstoff, Alkyl von 1 bis 4 C-Atomen, Alkoxy von 1 bis 4 C-Atomen, Chlor oder Alkanoylamino von 2 bis 7 C-Atomen, oder eine Ureido- oder Phenylureidogruppe ist, |
| $R^x$ | ein Wasserstoffatom oder eine Alkylgruppe von 1 bis 4 C-Atomen oder eine durch Alkoxy von 1 bis 4 C-Atomen oder Cyano substituierte Alkylgruppe von 1 bis 4 C-Atomen ist, |
| $R^y$ | ein Wasserstoffatom, eine Sulfogruppe oder eine Sulfoalkylgruppe mit einem Alkylenrest von 1 bis 4 C-Atomen oder eine Cyano- oder Carbamoylgruppe ist und |
| $R^z$ | eine Alkylengruppe von 1 bis 6 C-Atomen, bevorzugt von 1 bis 4 C-Atomen, oder ein Phenylenrest ist, der durch Substituenten aus der Gruppe Methyl, Ethyl, Chlor, Carboxy und Sulfo substituiert sein kann, oder eine Alkylenphenylen-Rest mit 2 bis 4 C-Atomen im Alkylenrest ist. |

**7.** Verfahren nach mindestens einem der Ansprüche 1 bis 6, dadurch gekennzeichnet, daß $X^1$ und $X^2$ eine direkte Bindung bedeuten.

**8.** Verfahren nach mindestens einem der Ansprüche 1 bis 7, dadurch gekennzeichnet, daß $R^\alpha$ die Methylgruppe oder bevorzugt ein Wasserstoffatom ist.

**9.** Verfahren nach mindestens einem der Ansprüche 1 bis 8, dadurch gekennzeichnet, daß A eine Gruppe der allgemeinen Formel (2a) mit der im Anspruch 1 genannten Bedeutung ist.

**10.** Verfahren nach mindestens einem der Ansprüche 1 bis 9, dadurch gekennzeichnet, daß B die gleiche Bedeutung wie A besitzt.

**11.** Verfahren nach Anspruch 9 oder 10 oder 9 und 10, dadurch gekennzeichnet, daß W ein Wasserstoffatom oder eine Methylgruppe ist, R ein Wasserstoffatom bedeutet, k für die Zahl Null steht und $Y^1$ eine $\beta$-Sulfatoethyl- oder $\beta$-Chloroethyl-Gruppe ist.

**12.** Verfahren nach Anspruch 11, dadurch gekennzeichnet, daß G die n-Propylen-Gruppe bedeutet.

**13.** Verfahren nach mindestens einem der Ansprüche 1 bis 12, dadurch gekennzeichnet, daß Y die Vinylgruppe oder eine $\beta$-Sulfatoethyl-Gruppe bedeutet.

**14.** Verfahren nach mindestens einem der Ansprüche 1 bis 10, dadurch gekennzeichnet, daß die Gruppe der allgemeinen Formel (4)

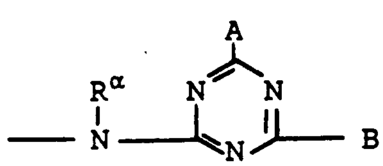

(4)

eine Gruppe der allgemeinen Formel (4A)

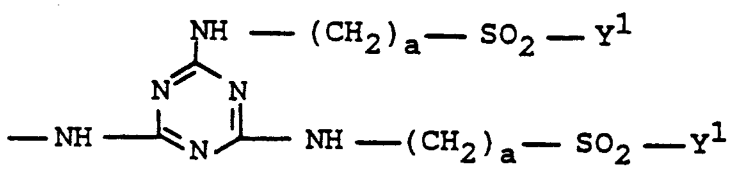

(4A)

ist, in welcher $Y^1$ die Vinylgruppe, eine β-Sulfatoethyl-, β-Halogenethyl-, β-Thiosulfatoethyl-, β-Phosphatoethyl- oder β-Acetoxyethylgruppe ist und a für die Zahl 2 oder 3 steht.

**15.** Verfahren nach mindestens einem der Ansprüche 1 bis 10 und 12 bis 14, dadurch gekennzeichnet, daß $Y^1$ die Vinyl-, β-Chlorethyl- oder β-Sulfatoethyl-Gruppe ist.

**16.** Verfahren nach Anspruch 14 oder 15, dadurch gekennzeichnet, daß a die Zahl 3 ist.

**17.** Verwendung eines in Anspruch 1 genannten und definierten Farbstoffes der allgemeinen Formel (1) zum Färben (einschließlich Bedrucken) von hydroxy- und/oder carbonamidgruppenhaltigem Material, insbesondere Fasermaterial.

**18.** Verfahren zum Färben (einschließlich Bedrucken) von hydroxy- und/oder carbonamidgruppenhaltigem Material, insbesondere Fasermaterial, bei welchem man einen Farbstoff auf das Material aufbringt oder in das Material einbringt und ihn mittels Wärme und/oder mit Hilfe eines alkalisch wirkenden Mittels fixiert, dadurch gekennzeichnet, daß man als Farbstoff einen Farbstoff entsprechend der in Anspruch 1 genannten und definierten Formel (1) einsetzt.

**Claims**

**Claims for the following Contracting States : BE, CH, DE, FR, GB, IT, LI**

**1.** A dye conforming to the general formula (1)

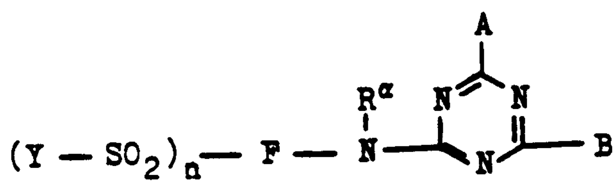

(1)

where

| | |
|---|---|
| F | is the radical of a metal-free or heavy metal complex monoazo or disazo dye which contains at least one sulfo group, |
| n | is 1 or 2, preferably 1, |
| Y | is vinyl, β-sulfatoethyl, β-haloethyl, β-thiosulfatoethyl, β-phosphatoethyl or β-acetoxyethyl, |
| $R^\alpha$ | is hydrogen or straight-chain or branched alkyl of 1 to 4 carbon atoms which may be substituted by carboxyl, sulfo, cyano, hydroxyl or chlorine, |
| A | is a group of the general formula (2a) or (2b) |

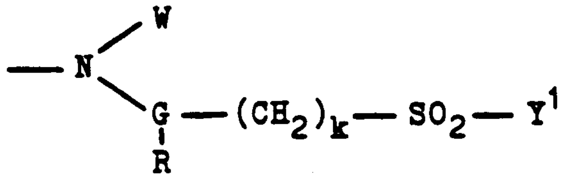

(2a)

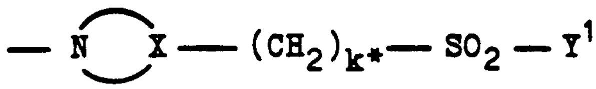

(2b)

where

| | |
|---|---|
| G | is straight-chain or branched alkylene of 1 to 6 carbon atoms, preferably of 2 to 4 carbon atoms, alkylene of 2 to 6 carbon atoms which is interrupted by 1 or 2 hetero groups, the alkylene moieties being straight-chain or branched and preferably having 2 or 3 carbon atoms, or unsubstituted or methyl-substituted cycloalkylene of 5 to 8 carbon atoms, |
| R | is hydrogen, chlorine, bromine, fluorine, hydroxyl, sulfato, cyano, carboxyl, carbamoyl, carbalkoxy of 2 to 5 carbon atoms, alkanoyloxy of 2 to 5 carbon atoms, benzoylamino which may be substituted by 1 or 2 substituents from the group consisting of sulfo, carboxyl, methyl, ethyl, methoxy, ethoxy and chlorine, or a group of the general formula $-SO_2-Y^2$ where |
| $Y^2$ | has one of the meanings specified above for Y or is $\beta$-hydroxyethyl, $Y^2$ being identical to or different from Y, |
| k | is zero, 1 or 2, |
| $k^*$ | is zero, 1, 2, 3 or 4, |
| X | forms together with the N-atom the bivalent radical of a heterocyclic ring consisting of 1 or 2 alkylene groups of 1 to 5 carbon atoms with or without 1 or 2 heteroatoms, |
| $Y^1$ | has one of the meanings specified above for Y, $Y^1$ being identical to or different from Y, and |
| W | is hydrogen, methyl, sulfomethyl, carboxymethyl, straight-chain or branched alkyl of 2 to 6 carbon atoms which may be substituted by 1 or 2 substituents from the group consisting of methoxy, ethoxy, carboxyl, sulfo, hydroxyl and halogen, unsubstituted or methyl-substituted cycloalkylene of 5 to 8 carbon atoms, or phenyl which may be substituted by substituents from the group consisting of alkyl of 1 to 4 carbon atoms, alkoxy of 1 to 4 carbon atoms, carboxyl, sulfo and halogen, and |
| B | has one of the meanings specified for A, A and B having meanings identical to or different from each other. |

**2.** A dye as claimed in claim 1, conforming to the general formula (3a) or (3b)

$$(Y-SO_2-X^1)_n-D-N=N-(E-N=N)_v-K-Z \quad (3a)$$

$$Z-D-N=N-(E-N=N)_v-K-X^1-SO_2-Y \quad (3b)$$

where

| | |
|---|---|
| Y and n | are each as defined in claim 1, |
| $X^1$ | is a direct bond or a bridge member, for example an alkylone group of 1 to 4 carbon atoms or the bivalent radical of an alkanoylamido group of 2 to 5 carbon atoms, |
| n | is 1 or 2, preferably 1, |
| Z | is a group of the general formula (4) |

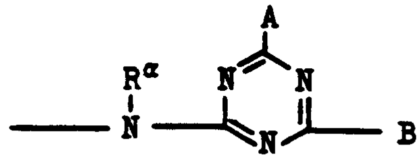

(4)

where

$R^{\alpha}$, A and B are each as defined in claim 1,

D is the radical of a benzene or naphthalene series diazo component customary in azo chemistry which may contain substituents customary for azo dyes, for example sulfo, carboxyl, hydroxyl, amino, methyl, ethyl, methoxy or ethoxy, substituted or unsubstituted alkanoylamino of 2 to 4 carbon atoms, substituted or unsubstituted benzoylamino or halogen,

K is the radical of a benzene, naphthalene, pyrazolone, 6-hydroxy-2-pyridone or acetoacetarylamide series coupling component customary in azo chemistry which may contain substituents customary for azo dyes, for example hydroxyl, sulfo, carboxyl, amino, methyl, ethyl, methoxy, ethoxy, substituted or unsubstituted alkanoylamino of 2 to 4 carbon atoms, substituted or unsubstituted benzoylamino or halogen,

E is the radical of a benzene or naphthalene series middle component customary in disazo dyes which may be substituted by substituents customary for azo dyes, for example sulfo, carboxyl, hydroxyl, methyl, ethyl, methoxy, ethoxy, substituted or unsubstituted alkanoylamino of 2 to 4 carbon atoms, substituted or unsubstituted ureido, substituted or unsubstituted benzoylamino or halogen,

v is zero or 1,

and

the radicals D, E and K together contain at least two sulfo groups, preferably 3 or 4 sulfo groups.

**3.** A dye as claimed in claim 1, conforming to the general formula (5a)

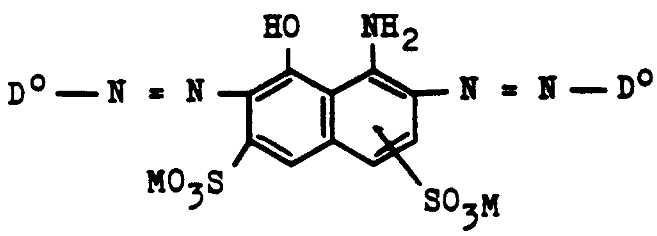

(5a)

where

M is hydrogen or an alkali metal,

$D^{o}$ is a radical of the general formula (6a), (6b) or (6c)

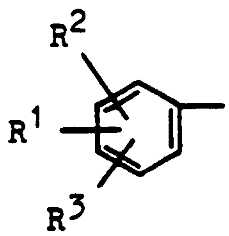 (6a)

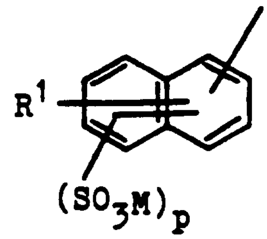 (6b)

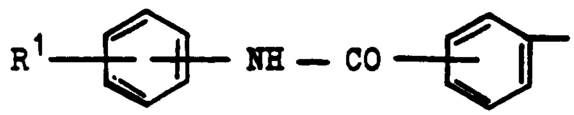 (6c)

where

$R^1$ in one D° is one or two groups of the general formula $Y\text{-}SO_2\text{-}X^1\text{-}$, where Y is as defined in claim 1 and $X^1$ is a direct bond, alkylene of 1 to 4 carbon atoms or the bivalent radical of an alkanoylamido group of 2 to 5 carbon atoms, preferably the bivalent radical of propionylamido, and $R^1$ in the other D° is a radical Z of the general formula (4),

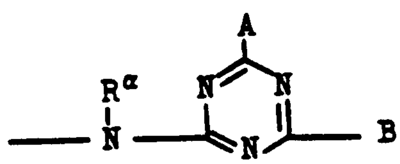 (4)

where $R^\alpha$, A and B are each as defined in claim 1,

$R^2$ is hydrogen, methyl, ethyl, methoxy, ethoxy, alkanoyl of 2 to 5 carbon atoms, cyano, carboxyl, sulfo, alkoxycarbonyl of 2 to 5 carbon atoms, carbamoyl, N-($C_1$-$C_4$-alkyl)carbamoyl, fluorine, chlorine, bromine or trifluoromethyl,

$R^3$ is hydrogen, methyl, ethyl, methoxy, ethoxy, cyano, carboxyl, sulfo, alkanoylamino of 2 to 5 carbon atoms, alkoxycarbonyl of 2 to 5 carbon atoms, carbamoyl, N-($C_1$-$C_4$-alkyl)carbamoyl, fluorine, chlorine, nitro, sulfamoyl, N-($C_1$-$C_4$-alkyl)sulfamoyl, alkylsulfonyl of 1 to 4 carbon atoms, phenylsulfonyl or phenoxy,

p is zero, 1 or 2 (if zero, the group being hydrogen) and

M is as defined above.

**4.** A dye as claimed in claim 1, conforming to the general formula (5b)

$$(Y\text{-}SO_2\text{-}X^1)_n\text{—}D^1\text{—}N=N\text{—}(E^1\text{—}N=N)_v\text{—}K^*\text{—}Z \qquad (5b)$$

where

Y and n are each as defined in claim 1,

$X^1$ is a direct bond, alkylene of 1 to 4 carbon atoms or the bivalent radical of an alkanoylamido group of 2 to 5 carbon atoms, preferably the group of the formula $-(CH_2)_3\text{-}CO\text{-}NH\text{-}$,

$D^1$ is a phenylene radical substituted by substituents $R^2$ and $R^3$ which have the following meanings:

$R^2$ is hydrogen, methyl, ethyl, methoxy, ethoxy, alkanoyl of 2 to 5 carbon atoms, cyano, carboxyl, sulfo, alkoxycarbonyl of 2 to 5 carbon atoms, carbamoyl, N-($C_1$-$C_4$)carbamoyl, fluorine, chlorine, bromine or trifluoromethyl,

$R^3$ is hydrogen, methyl, ethyl, methoxy, ethoxy, cyano, carboxyl, sulfo, alkanoylamino of 2

to 5 carbon atoms, alkoxycarbonyl of 2 to 5 carbon atoms, carbamoyl, N-($C_1$-$C_4$)-carbamoyl, fluorine, chlorine, nitro, sulfamoyl, N-($C_1$-$C_4$-alkyl)-sulfamoyl, alkylsulfonyl of 1 to 4 carbon atoms, phenylsulfonyl or phenoxy,

$E^1$ is a radical of the general formula (7a), (7b), (7c) or (7d)

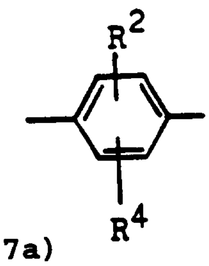

(7a)

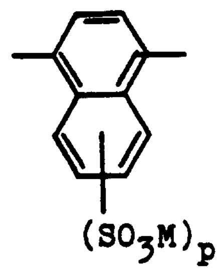

(7b)

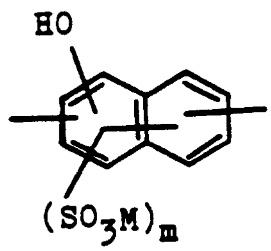

(7c)

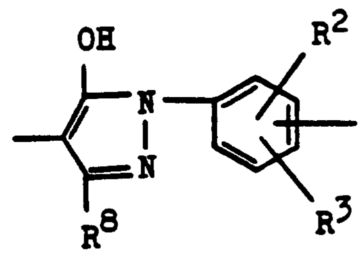

(7d)

where

- $R^2$ and $R^3$ are each as defined above,
- $R^4$ is hydrogen, alkyl of 1 to 4 carbon atoms, alkoxy of 1 to 4 carbon atoms, chlorine, alkanoylamino of 2 to 5 carbon atoms, benzoylamino, ureido, N'-phenylureido, N'-alkylureido of 1 to 4 carbon atoms in the alkyl moiety, phenylsulfonyl or alkylsulfonyl of 1 to 4 carbon atoms,
- M is hydrogen or an alkali metal,
- m is 1 or 2,
- p is zero, 1 or 2 and
- $R^8$ is hydrogen, alkyl of 1 to 4 carbon atoms, cyano, carboxyl, carbalkoxy of 2 to 5 carbon atoms, carbamoyl or phenyl,
- v is zero or 1,
- -K*-Z is a radical of the general formula (8a), (8b), (8c), (8d), (8e) or (8f)

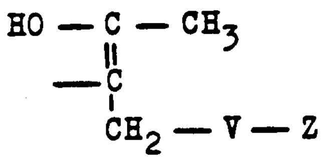

(8a)

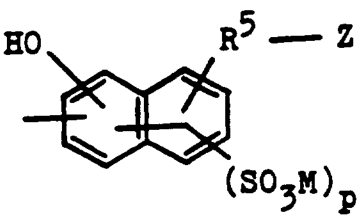

(8b)

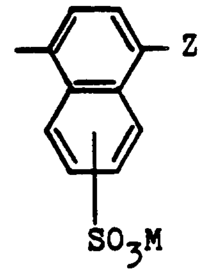

(8c)

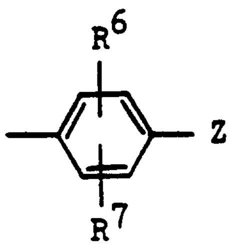

(8d)

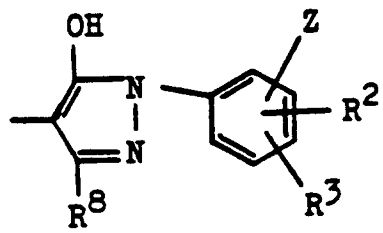

(8e)

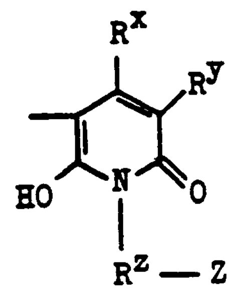

(8f)

where

$R^2$, $R^3$, p and M are each as defined above and the hydroxyl group in the formula (8b) is ortho to the free bond attached to the azo group,

V is a phenylene radical which contains the above-mentioned and above-defined radicals $R^2$ and $R^3$ or is a naphthylene radical which may be substituted by 1 or 2 sulfo groups,

Z is a radical of the general formula (4)

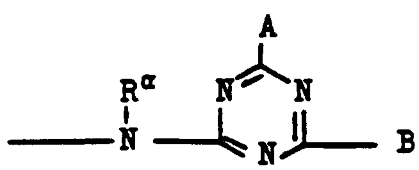

(4)

where

$R^\alpha$, A and B are each as defined in claim 1,

$R^5$ is a direct bond or a radical of the formula -NH-CO-phenylene-, -NH-CO-NH-phenylene-, $-N(CH_3)-CO-$phenylene- or $-N(CH_3)-CO-NH-$phenylene-,

$R^6$ is hydrogen, alkyl of 1 to 4 carbon atoms, alkoxy of 1 to 4 carbon atoms, bromine, chlorine or alkanoylamino of 2 to 7 carbon atoms,

$R^7$ is hydrogen, alkyl of 1 to 4 carbon atoms, alkoxy of 1 to 4 carbon atoms, chlorine, alkanoylamino of 2 to 7 carbon atoms, ureido or phenylureido,

$R^8$ has one of the abovementioned meanings,

$R^x$ is hydrogen, alkyl of 1 to 4 carbon atoms, or alkyl of 1 to 4 carbon atoms substituted by alkoxy of 1 to 4 carbon atoms or by cyano,

$R^y$ is hydrogen, sulfo, sulfoalkyl having an alkylene moiety of 1 to 4 carbon atoms, cyano or carbamoyl,

$R^z$ is alkylene of 1 to 6 carbon atoms, preferably of 1 to 4 carbon atoms, phenylene which may be substituted by substituents from the group consisting of methyl, ethyl, chlorine, carboxyl and sulfo, or alkylenephenylene having 2 to 4 carbon atoms in the alkylene moiety.

**5.** A dye as claimed in claim 1, conforming to the general formula (5c)

$$Z-D^*-N=N-(E^1-N=N)_v-K^1-X^2-SO_2-Y \quad (5c)$$

where

Z is a radical of the general formula (4)

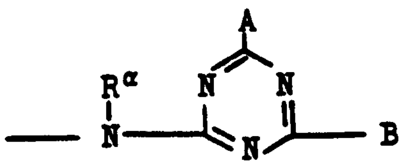

(4)

where $R^\alpha$, A and B are each as defined in claim 1,

D* is a phenylene radical which may be substituted by 1 or 2 substituents from the group consisting of hydrogen, methyl, ethyl, methoxy, bromine, chlorine, carboxyl and sulfo, or is a naphthylene radical which may be substituted by 1 or 2 sulfo groups,

$E^1$ is a radical of the general formula (7a), (7b), (7c) or (7d)

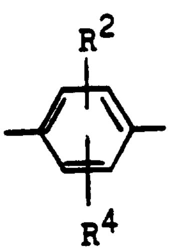

(7a)

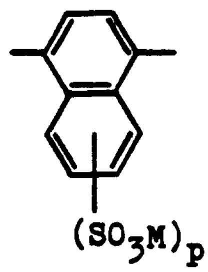

(7b)

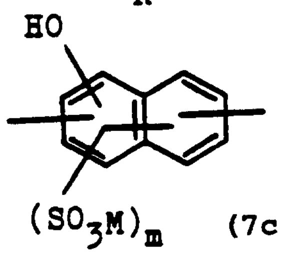

(7c)

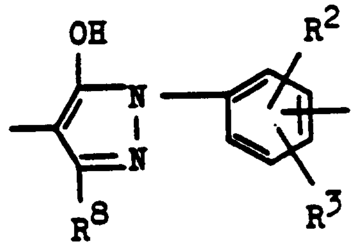

(7d)

where

$R^2$ is hydrogen, methyl, methoxy, ethoxy, alkanoyl of 2 to 5 carbon atoms, cyano, carboxyl, sulfo, alkoxycarbonyl of 2 to 5 carbon atoms, carbamoyl, N-($C_1$-$C_4$-alkyl)carbamoyl, fluorine, chlorine, bromine or trifluoromethyl,

$R^3$ is hydrogen, methyl, ethyl, methoxy, ethoxy, cyano, carboxyl, sulfo, alkanoylamino of 2 to 5 carbon atoms, alkoxycarbonyl of 2 to 5 carbon atoms, carbamoyl, N-($C_1$-$C_4$-alkyl)carbamoyl, fluorine, chlorine, nitro, sulfamoyl, N-($C_1$-$C_4$-alkyl)sulfamoyl, alkylsulfonyl of 1 to 4 carbon atoms, phenylsulfonyl or phenoxy,

$R^4$ is hydrogen, alkyl of 1 to 4 carbon atoms, alkoxy of 1 to 4 carbon atoms, chlorine, alkanoylamino of 2 to 5 carbon atoms, benzoylamino, ureido, N'-phenylureido, N'-alkylureido of 1 to 4 carbon atoms in the alkyl moiety, phenylsulfonyl or alkylsulfonyl of 1 to 4 carbon atoms,

M is hydrogen or an alkali metal,

m is 1 or 2,

p is zero, 1 or 2 and

$R^8$ is hydrogen, alkyl of 1 to 4 carbon atoms, cyano, carboxyl, carbalkoxy of 2 to 5 carbon

atoms, carbamoyl or phenyl,

v is zero or 1,

$K^1$ is a radical of the general formula (9a), (9b) or (9c)

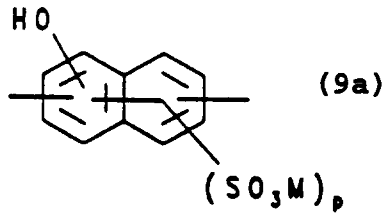

(9a)

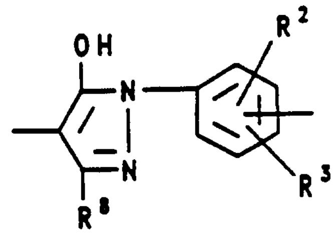

(9b)

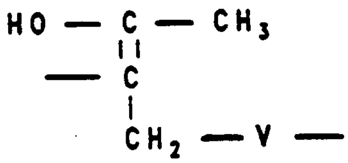

(9c)

where M, p, $R^2$, $R^3$ and $R^8$ are each as defined above and the hydroxyl group in the formula (9a) is ortho to the free bond attached to the azo group,

V is a phenylene radical which contains the above-mentioned and above-defined radicals $R^2$ and $R^3$ or is a naphthylene radical which may be substituted by 1 or 2 sulfo groups,

$X^2$ is a direct bond, alkylene of 1 to 4 carbon atoms or the bivalent radical of an alkanoylamido group of 2 to 5 carbon atoms, of the last preferably the group $-NH-CO-(CH_2)_3-$, and

Y is as defined in claim 1.

6. A dye as claimed in claim 1, conforming to the general formula (5d)

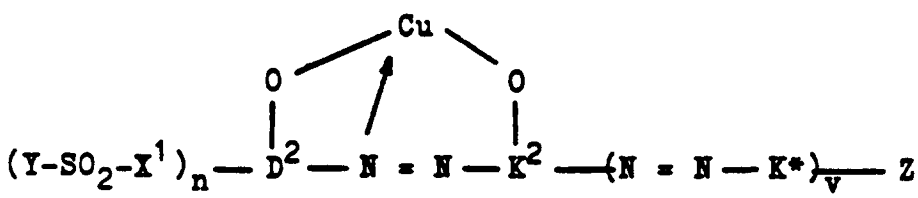

(5d)

where

Y and n are each as defined in claim 1,

$X^1$ is a direct bond, alkylene of 1 to 4 carbon atoms or the bivalent radical of an alkanoylamido group of 2 to 5 carbon atoms, of the last preferably the group of the formula $-(CH_2)_3-CONH-$,

$D^2$ is a benzene radical which may be substituted by 1 or 2 substituents from the group consisting of methyl, ethyl, methoxy, ethoxy, bromine, chlorine, carboxyl and sulfo, or is a naphthalene radical which may be substituted by a sulfo group,

$K^2$ is a radical of the general formula (10a) or (10b)

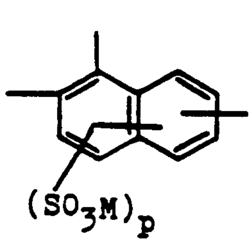

(10a)

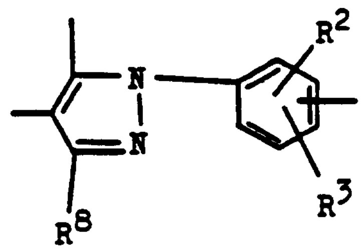

(10b)

where

- M is hydrogen or an alkali metal,
- p is zero, 1 or 2,
- $R^2$ is hydrogen, methyl, methoxy, ethoxy, alkanoyl of 2 to 5 carbon atoms, cyano, carboxyl, sulfo, alkoxycarbonyl of 2 to 5 carbon atoms, carbamoyl, N-($C_1$-$C_4$-alkyl)carbamoyl, fluorine, chlorine, bromine or trifluoromethyl,
- $R^3$ is hydrogen, methyl, ethyl, methoxy, ethoxy, cyano, carboxyl, sulfo, alkanoylamino of 2 to 5 carbon atoms, alkoxycarbonyl of 2 to 5 carbon atoms, carbamoyl, N-($C_1$-$C_4$-alkyl)-carbamoyl, fluorine, chlorine, nitro, sulfamoyl, N-($C_1$-$C_4$-alkyl)sulfamoyl, alkylsulfonyl of 1 to 4 carbon atoms, phenylsulfonyl or phenoxy, and
- $R^8$ is hydrogen, alkyl of 1 to 4 carbon atoms, cyano, carboxyl, carbalkoxy of 2 to 5 carbon atoms, carbamoyl or phenyl,
- Z is a radical of the general formula (4)

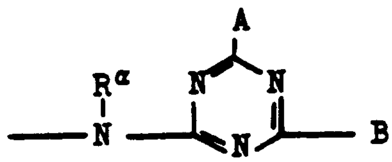

(4)

where $R^\alpha$, A and B are each as defined in claim 1,

- v is zero or 1,
- -K*-Z is a radical of the general formula (8a), (8b), (8c), (8d), (8e) or (8f)

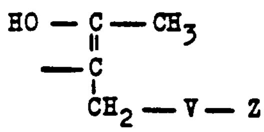

(8a)

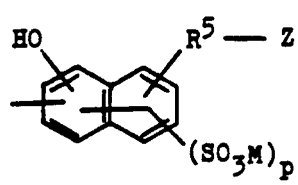

(8b)

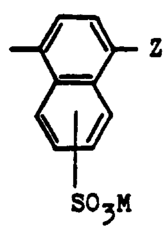

(8c)

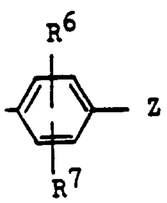

(8d)

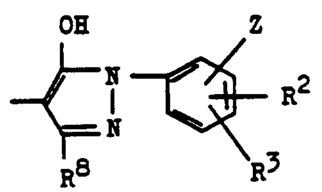

(8e)

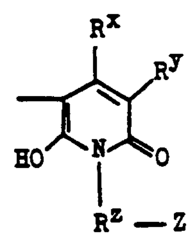

(8f)

where

- $R^2$, $R^3$, $R^8$, Z, p and M are each as defined above and the hydroxyl group in the formula (8b) is ortho to the free bond attached to the azo group,
- V is a phenylene radical which contains the above-mentioned and above-defined radicals $R^2$ and $R^3$ or is a naphthylene radical which may be substituted by 1 or 2 sulfo groups,
- $R^5$ is a direct bond or a radical of the formula -NH-CO-phenylene-, -NH-CO-NH-phenylene-, -N($CH_3$)-CO-phenylene- or -N($CH_3$)-CO-NH-phenylene,
- $R^6$ is hydrogen, alkyl of 1 to 4 carbon atoms, alkoxy of 1 to 4 carbon atoms, bromine, chlorine or alkanoylamino of 2 to 7 carbon atoms,
- $R^7$ is hydrogen, alkyl or 1 to 4 carbon atoms, alkoxy of 1 to 4 carbon atoms, chlorine or alkanoylamino of 2 to 7 carbon atoms, ureido or phenylureido,
- $R^x$ is hydrogen, alkyl of 1 to 4 carbon atoms or alkyl of 1 to 4 carbon atoms which is substituted by alkoxy of 1 to 4 carbon atoms or by cyano,
- $R^y$ is hydrogen, sulfo, sulfoalkyl having an alkylene moiety of 1 to 4 carbon

atoms, cyano or carbamoyl, and

$R^z$ is alkylene of 1 to 6 carbon atoms, preferably of 1 to 4 carbon atoms, phenylene which may be substituted by substituents from the group consisting of methyl, ethyl, chlorine, carboxyl and sulfo, or alkylenephenylene having 2 to 4 carbon atoms in the alkylene moiety.

**7.** A dye as claimed in at least one of claims 1 to 6, wherein $X^1$ and $X^2$ are each a direct bond.

**8.** A compound as claimed in at least one of claims 1 to 7, wherein $R^\alpha$ is methyl or preferably hydrogen.

**9.** A dye as claimed in at least one of claims 1 to 8, wherein A is a group of the general formula (2a) having the meaning mentioned in claim 1.

**10.** A dye as claimed in at least one of claims 1 to 9, wherein B has the same meaning as A.

**11.** A dye as claimed in claim 9 or 10 or in claims 9 and 10, wherein W is hydrogen or methyl, R is hydrogen, k is zero and $Y^1$ is β-sulfatoethyl or β-chloroethyl.

**12.** A dye as claimed in claim 11, wherein G is n-propylene.

**13.** A dye as claimed in at least one of claims 1 to 12, wherein Y is vinyl or β-sulfatoethyl.

**14.** A dye as claimed in at least one of claims 1 to 10, wherein the group of the general formula (4)

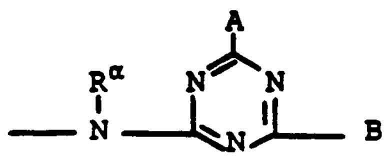

(4)

is a group of the general formula (4A)

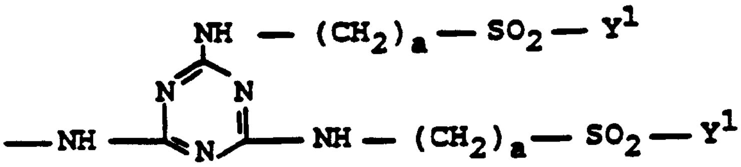

(4A)

where $Y^1$ is vinyl, β-sulfatoethyl, β-haloethyl, β-thiosulfatoethyl, β-phosphatoethyl or β-acetoxyethyl, and a is 2 or 3.

**15.** A dye as claimed in at least one of claims 1 to 10 and 12 to 14, wherein $Y^1$ is vinyl, β-chloroethyl or β-sulfatoethyl.

**16.** A dye as claimed in claim 14 or 15, wherein a is 3.

**17.** A process for preparing a dye of claim 1, which comprises reacting, in accordance with customary procedures for synthesizing monoazo and disazo dyes and heavy metal complexes thereof, dye intermediates of which at least one contains a fiber-reactive grouping of the general formula (4) mentioned and defined in claim 1 and at least one contains a fiber-reactive grouping of the general formula $-SO_2-Y$ mentioned and defined in claim 1 with one another, or a cyanuric halide with a compound of the general formula (15)

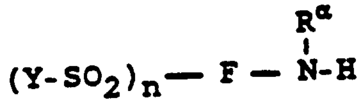 (15)

where F, Y, $R^{\alpha}$ and n are each as defined in claim 1, and one or two amino compounds of the general formula (16)

$H_2N$-A (16)

where A is as defined in claim 1 or else may have a meaning as per the radical B, in any desired order.

**18.** A process for preparing a dye of the general formula (1) mentioned and defined in claim 1 where Y is $\beta$-sulfatoethyl or $\beta$-phosphatoethyl, which comprises reacting the dye conforming to the general formula (1) where however one or more of Y, $Y^1$ and $Y^2$ is $\beta$-hydroxyethyl with a sulfating or phosphating agent.

**19.** The use of a dye of the general formula (1) mentioned and defined in claim 1 for dyeing (including printing) hydroxyl- and/or carboxamido-containing material, in particular fiber material.

**20.** A process for dyeing (including printing) hydroxyl-and/or carboxamido-containing material, in particular fiber material, wherein a dye is applied to or introduced into the material and fixed by means of heat and/or with the aid of an alkaline agent, which comprises using as the dye a dye conforming to the formula (1) mentioned and defined in claim 1.

**Claims for the following Contracting State : ES**

**1.** A process for preparing a dye conforming to the general formula (1)

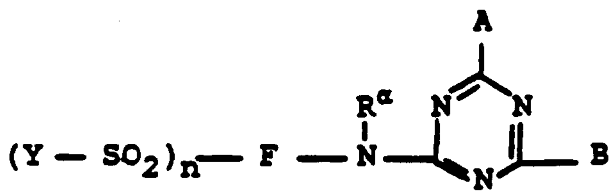 (1)

where

F is the radical of a metal-free or heavy metal complex monoazo or disazo dye which contains at least one sulfo group,

n is 1 or 2, preferably 1,

Y is vinyl, $\beta$-sulfatoethyl, $\beta$-haloethyl, $\beta$-thiosulfatoethyl, $\beta$-phosphatoethyl or $\beta$-acetoxyethyl,

$R^{\alpha}$ is hydrogen or straight-chain or branched alkyl of 1 to 4 carbon atoms which may be substituted by carboxyl, sulfo, cyano, hydroxyl or chlorine,

A is a group of the general formula (2a) or (2b)

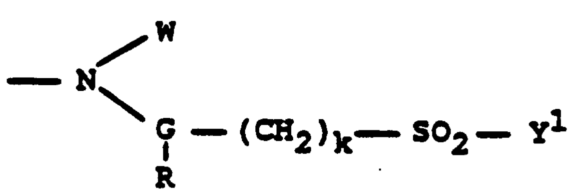 (2a)

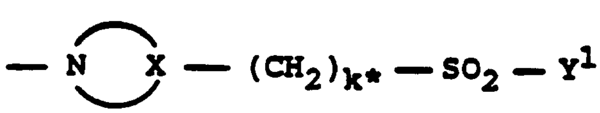 (2b)

where

G is straight-chain or branched alkylene of 1 to 6 carbon atoms, preferably of 2 to 4 carbon atoms, alkylene of 2 to 6 carbon atoms which is interrupted by 1 or 2 hetero groups, the alkylene moieties being straight-chain or branched and preferably having 2 or 3 carbon atoms, or unsubstituted or methyl-substituted cycloalkylene of 5 to 8 carbon atoms,

R is hydrogen, chlorine, bromine, fluorine, hydroxyl, sulfato, cyano, carboxyl, carbamoyl, carbalkoxy of 2 to 5 carbon atoms, alkanoyloxy of 2 to 5 carbon atoms, benzoylamino which may be substituted by 1 or 2 substituents from the group consisting of sulfo, carboxyl, methyl, ethyl, methoxy, ethoxy and chlorine, or a group of the general formula $-SO_2-Y^2$ where

$Y^2$ has one of the meanings specified above for Y or is $\beta$-hydroxyethyl, $Y^2$ being identical to or different from Y,

k is zero, 1 or 2,

$k^*$ is zero, 1, 2, 3 or 4,

X forms together with the N-atom the bivalent radical of a heterocyclic ring consisting of 1 or 2 alkylene groups of 1 to 5 carbon atoms with or without 1 or 2 heteroatoms,

$Y^1$ has one of the meanings specified above for Y, $Y^1$ being identical to or different from Y, and

W is hydrogen, methyl, sulfomethyl, carboxymethyl, straight-chain or branched alkyl of 2 to 6 carbon atoms which may be substituted by 1 or 2 substituents from the group consisting of methoxy, ethoxy, carboxyl, sulfo, hydroxyl and halogen, unsubstituted or methyl-substituted cycloalkylene of 5 to 8 carbon atoms, or phenyl which may be substituted by substituents from the group consisting of alkyl of 1 to 4 carbon atoms, alkoxy of 1 to 4 carbon atoms, carboxyl, sulfo and halogen, and

B has one of the meanings specified for A, A and B having meanings identical to or different from each other, which comprises reacting, in accordance with customary procedures for synthesizing monoazo and disazo dyes and heavy metal complexes thereof, dye intermediates of which at least one contains a fiber-reactive grouping of the general formula (4) mentioned and defined above and at least one contains a fiber-reactive grouping of the general formula $-SO_2-Y$ mentioned and defined above with one another, or a cyanuric halide with a compound of the general formula (15)

$$(Y-SO_2)_n-F-N(R^\alpha)-H \qquad (15)$$

where F, Y, $R^\alpha$ and n are each as defined above, and one or two amino compounds of the general formula (16)

$H_2N-A$ (16)

where A is as defined above or else may have a meaning as per the radical B, in any desired order, or, for preparing a dye of the general formula (1) where Y is $\beta$-sulfatoethyl or $\beta$-phosphatoethyl, comprises reacting the dye conforming to the general formula (1) where however one or more of Y, $Y^1$ and $Y^2$ is $\beta$-hydroxyethyl with a sulfating or phosphating agent.

**2.** The process as claimed in claim 1, wherein the dye of the formula (1) is a dye conforming to the general formula (3a) or (3b)

$$(Y-SO_2-X^1)_n-D-N=N-(E-N=N)_v-K-Z \qquad (3a)$$

$$Z-D-N=N-(E-N=N)_v-K-X^1-SO_2-Y \qquad (3b)$$

where

Y and n are each as defined in claim 1,

$X^1$ is a direct bond or a bridge member, for example an alkylene group of 1 to 4 carbon atoms or the bivalent radical of an alkanoylamido group of 2 to 5 carbon atoms,

n is 1 or 2, preferably 1,

Z is a group of the general formula (4)

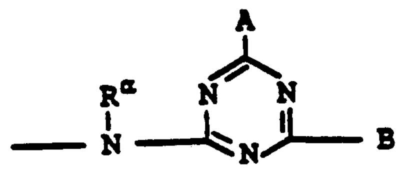

(4)

where

$R^{\alpha}$, A and B are each as defined in claim 1,

D is the radical of a benzene or naphthalene series diazo component customary in azo chemistry which may contain substituents customary for azo dyes, for example sulfo, carboxyl, hydroxyl, amino, methyl, ethyl, methoxy or ethoxy, substituted or unsubstituted alkanoylamino of 2 to 4 carbon atoms, substituted or unsubstituted benzoylamino or halogen,

K is the radical of a benzene, naphthalene, pyrazolone, 6-hydroxy-2-pyridone or acetoacetarylamide series coupling component customary in azo chemistry which may contain substituents customary for azo dyes, for example hydroxyl, sulfo, carboxyl, amino, methyl, ethyl, methoxy, ethoxy, substituted or unsubstituted alkanoylamino of 2 to 4 carbon atoms, substituted or unsubstituted benzoylamino or halogen,

E is the radical of a benzene or naphthalene series middle component customary in disazo dyes which may be substituted by substituents customary for azo dyes, for example sulfo, carboxyl, hydroxyl, methyl, ethyl, methoxy, ethoxy, substituted or unsubstituted alkanoylamino of 2 to 4 carbon atoms, substituted or unsubstituted ureido, substituted or unsubstituted benzoylamino or halogen,

v is zero or 1,

and

the radicals D, E and K together contain at least two sulfo groups, preferably 3 or 4 sulfo groups.

**3.** The process as claimed in claim 1, wherein the dye of the formula (1) is a dye conforming to the general formula (5a)

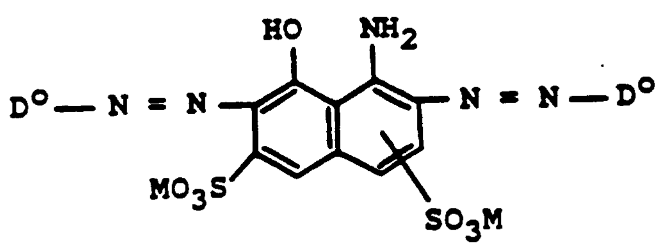

(5a)

where

M is hydrogen or an alkali metal,

$D^o$ is a radical of the general formula (6a), (6b) or (6c)

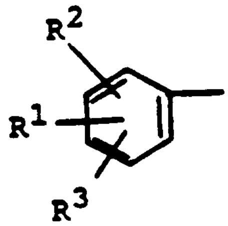

(6a)

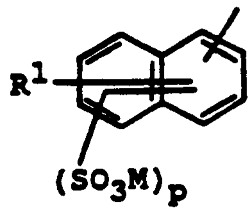

(6b)

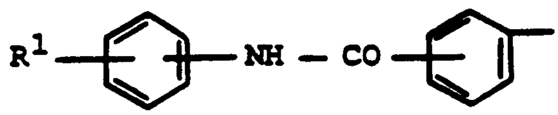

(6c)

where

$R^1$ in one $D^o$ is one or two groups of the general formula $Y-SO_2-X^1-$, where Y is as defined in claim 1 and $X^1$ is a direct bond, alkylene of 1 to 4 carbon atoms or the bivalent radical of an alkanoylamido group of 2 to 5 carbon atoms, preferably the bivalent radical of propionylamido, and $R^1$ in the other $D^o$ is a radical Z of the general formula (4),

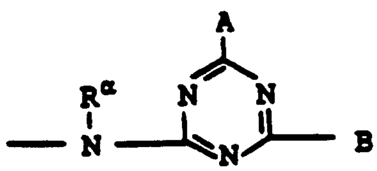

(4)

where $R^\alpha$, A and B are each as defined in claim 1,

$R^2$ is hydrogen, methyl, ethyl, methoxy, ethoxy, alkanoyl of 2 to 5 carbon atoms, cyano, carboxyl, sulfo, alkoxycarbonyl of 2 to 5 carbon atoms, carbamoyl, N-($C_1$-$C_4$-alkyl)carbamoyl, fluorine, chlorine, bromine or trifluoromethyl,

$R^3$ is hydrogen, methyl, ethyl, methoxy, ethoxy, cyano, carboxyl, sulfo, alkanoylamino of 2 to 5 carbon atoms, alkoxycarbonyl of 2 to 5 carbon atoms, carbamoyl, N-($C_1$-$C_4$-alkyl)carbamoyl, fluorine, chlorine, nitro, sulfamoyl, N-($C_1$-$C_4$-alkyl)sulfamoyl, alkylsulfonyl of 1 to 4 carbon atoms, phenylsulfonyl or phenoxy,

p is zero, 1 or 2 (if zero, the group being hydrogen) and

M is as defined above.

4. The process as claimed in claim 1, wherein the dye of the formula (1) is a dye conforming to the general formula (5b)

$$(Y-SO_2-X^1)_n - D^1 - N = N - (E^1 - N = N)_v - K^* - Z \quad (5b)$$

where

$X^1$ is a direct bond, alkylene of 1 to 4 carbon atoms or the bivalent radical of an alkanoylamido group of 2 to 5 carbon atoms, preferably the group of the formula $-(CH_2)_3-CO-NH-$,

$D^1$ is a phenylene radical substituted by substituents $R^2$ and $R^3$ which have the following meanings:

$R^2$ is hydrogen, methyl, ethyl, methoxy, ethoxy, alkanoyl of 2 to 5 carbon atoms, cyano, carboxyl, sulfo, alkoxycarbonyl of 2 to 5 carbon atoms, carbamoyl, N-($C_1$-$C_4$)carbamoyl, fluorine, chlorine, bromine or trifluoromethyl,

$R^3$ is hydrogen, methyl, ethyl, methoxy, ethoxy, cyano, carboxyl, sulfo, alkanoylamino of 2 to 5 carbon atoms, alkoxycarbonyl of 2 to 5 carbon atoms, carbamoyl, N-($C_1$-$C_4$)carbamoyl, fluorine, chlorine, nitro, sulfamoyl, N-($C_1$-$C_4$-

alkyl)-sulfamoyl, alkylsulfonyl of 1 to 4 carbon atoms, phenylsulfonyl or phenoxy,

$E^1$ is a radical of the general formula (7a), (7b), (7c) or (7d)

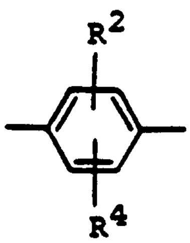
(7a)

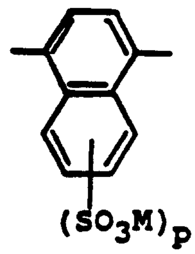
(7b)

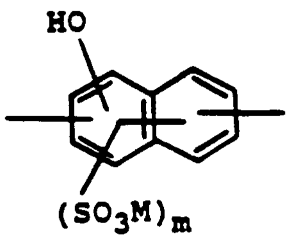
(7c)

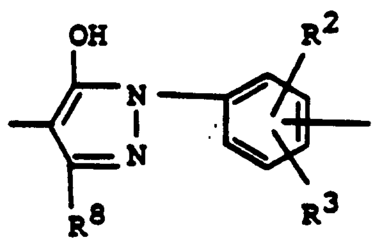
(7d)

where

$R^2$ and $R^3$ are each as defined above,

$R^4$ is hydrogen, alkyl of 1 to 4 carbon atoms, alkoxy of 1 to 4 carbon atoms, chlorine, alkanoylamino of 2 to 5 carbon atoms, benzoylamino, ureido, N'-phenylureido, N'-alkylureido of 1 to 4 carbon atoms in the alkyl moiety, phenylsulfonyl or alkylsulfonyl of 1 to 4 carbon atoms,

M is hydrogen or an alkali metal,

m is 1 or 2,

p is zero, 1 or 2 and

$R^8$ is hydrogen, alkyl of 1 to 4 carbon atoms, cyano, carboxyl, carbalkoxy of 2 to 5 carbon atoms, carbamoyl or phenyl,

v is zero or 1,

-K*-Z is a radical of the general formula (8a), (8b), (8c), (8d), (8e) or (8f)

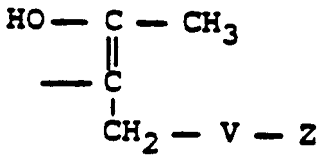

(8a)

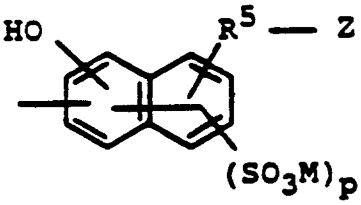

(8b)

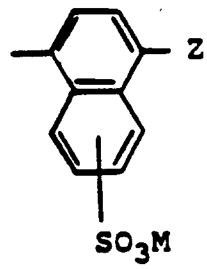

(8c)

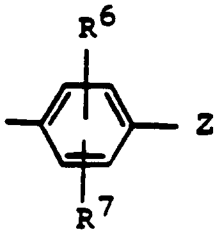

(8d)

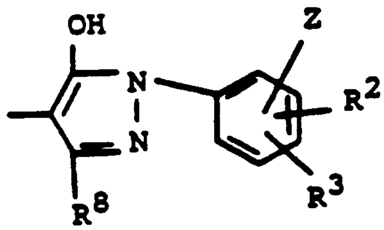

(8e)

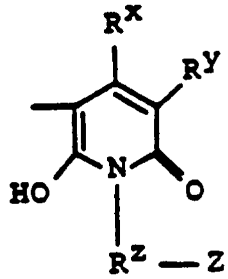

(8f)

where

$R^2$, $R^3$, p and M are each as defined above and the hydroxyl group in the formula (8b) is ortho to the free bond attached to the azo group,

V is a phenylene radical which contains the above-mentioned and above-defined radicals $R^2$ and $R^3$ or is a naphthylene radical which may be substituted by 1 or 2 sulfo groups,

Z is a radical of the general formula (4)

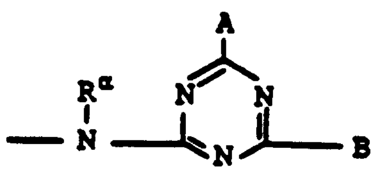

(4)

where

$R^\alpha$, A and B are each as defined in claim 1,

$R^5$ is a direct bond or a radical of the formula -NH-CO-phenylene-, -NH-CO-NH-phenylene-, $-N(CH_3)$-CO-phenylene- or $-N(CH_3)$-CO-NH-phenylene-,

$R^6$ is hydrogen, alkyl of 1 to 4 carbon atoms, alkoxy of 1 to 4 carbon atoms, bromine, chlorine or alkanoylamino of 2 to 7 carbon atoms,

$R^7$ is hydrogen, alkyl of 1 to 4 carbon atoms, alkoxy of 1 to 4 carbon atoms, chlorine, alkanoylamino of 2 to 7 carbon atoms, ureido or phenylureido,

$R^8$ has one of the abovementioned meanings,

$R^x$ is hydrogen, alkyl of 1 to 4 carbon atoms, or alkyl of 1 to 4 carbon atoms substituted by alkoxy of 1 to 4 carbon atoms or by cyano,

$R^y$ is hydrogen, sulfo, sulfoalkyl having an alkylene mniety of 1 to 4 carbon atoms, cyano or carbamoyl,

$R^z$ is alkylene of 1 to 6 carbon atoms, preferably of 1 to 4 carbon atoms, phenylene which may be substituted by substituents from the group consisting of methyl, ethyl, chlorine, carboxyl and sulfo, or alkylenephenylene having 2 to 4 carbon atoms in the alkylene moiety.

**5.** The process as claimed in claim 1, wherein the dye of the formula (1) is a dye conforming to the general formula (5c)

$$Z - D^{*} - N = N - (E^{1} - N = N)_{v} - K^{1} - X^{2} - SO_2 - Y \quad (5c)$$

where

Z is a radical of the general formula (4)

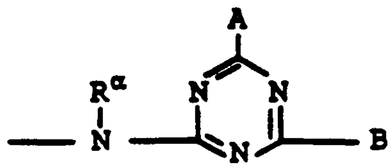

(4)

where $R^{\alpha}$, A and B are each as defined in claim 1,

D* is a phenylene radical which may be substituted by 1 or 2 substituents from the group consisting of hydrogen, methyl, ethyl, methoxy, bromine, chlorine, carboxyl and sulfo, or is a naphthylene radical which may be substituted by 1 or 2 sulfo groups,

$E^1$ is a radical of the general formula (7a), (7b), (7c) or (7d)

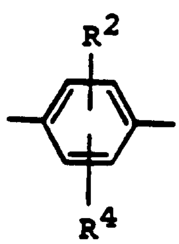

(7a)

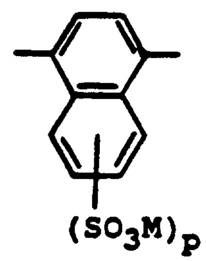

(7b)

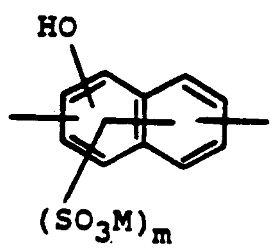

(7c)

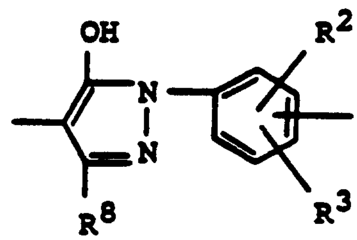

(7d)

where

$R^2$ is hydrogen, methyl, methoxy, ethoxy, alkanoyl of 2 to 5 carbon atoms, cyano, carboxyl, sulfo, alkoxycarbonyl of 2 to 5 carbon atoms, carbamoyl, N-($C_1$-$C_4$-alkyl)carbamoyl, fluorine, chlorine, bromine or trifluoromethyl,

$R^3$ is hydrogen, methyl, ethyl, methoxy, ethoxy, cyano, carboxyl, sulfo, alkanoylamino of 2 to 5 carbon atoms, alkoxycarbonyl of 2 to 5 carbon atoms, carbamoyl, N-($C_1$-$C_4$-alkyl)carbamoyl, fluorine, chlorine, nitro, sulfamoyl, N-($C_1$-$C_4$-alkyl)sulfamoyl, alkylsulfonyl of 1 to 4 carbon atoms, phenylsulfonyl or phenoxy,

$R^4$ is hydrogen, alkyl of 1 to 4 carbon atoms, alkoxy of 1 to 4 carbon atoms, chlorine, alkanoylamino of 2 to 5 carbon atoms, benzoylamino, ureido, N'-phenylureido, N'-alkylureido of 1 to 4 carbon atoms in the alkyl moiety, phenylsulfonyl or alkylsulfonyl of 1 to 4 carbon atoms,

M is hydrogen or an alkali metal,

m is 1 or 2,

p is zero, 1 or 2 and

$R^8$ is hydrogen, alkyl of 1 to 4 carbon atoms, cyano, carboxyl, carbalkoxy of 2 to 5 carbon atoms, carbamoyl or phenyl,

v is zero or 1,

$K^1$ is a radical of the general formula (9a), (9b) or (9c)

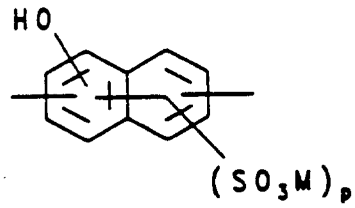

(9a)

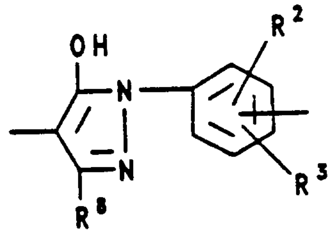

(9b)

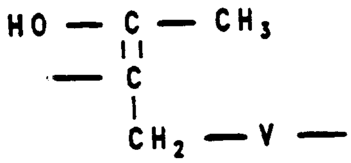

(9c)

where M, p, $R^2$, $R^3$ and $R^8$ are each as defined above and the hydroxyl group in the formula (9a) is ortho to the free bond attached to the azo group,

V is a phenylene radical which contains the above-mentioned and above-defined radicals $R^2$ and $R^3$ or is a naphthylene radical which may be substituted by 1 or 2 sulfo groups,

$X^2$ is a direct bond, alkylene of 1 to 4 carbon atoms or the bivalent radical of an alkanoylamido group of 2 to 5 carbon atoms, of the last preferably the group $-NH-CO-(CH_2)_3-$, and

Y is as defined in claim 1.

**6.** The process as claimed in claim 1, wherein the dye of the formula (1) is a dye conforming to the general formula (5d)

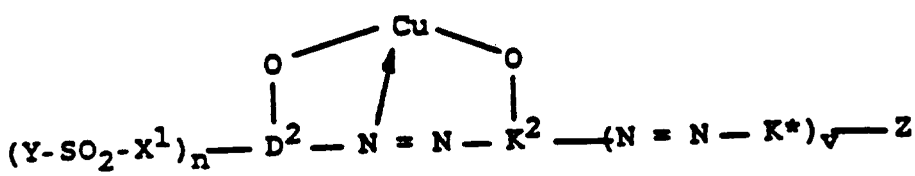

(5d)

where

Y and n are each as defined in claim 1,

$X^1$ is a direct bond, alkylene of 1 to 4 carbon atoms or the bivalent radical of an alkanoylamido group of 2 to 5 carbon atoms, of the last preferably the group of the formula $-(CH_2)_3-CONH-$,

$D^2$ is a benzene radical which may be substituted by 1 or 2 substituents from the group consisting of methyl, ethyl, methoxy, ethoxy, bromine, chlorine, carboxyl and sulfo, or is a naphthalene radical which may be substituted by a sulfo group,

$K^2$ is a radical of the general formula (10a) or (10b)

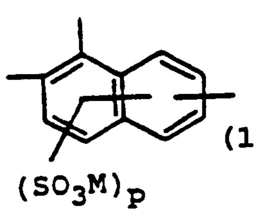

(10a)

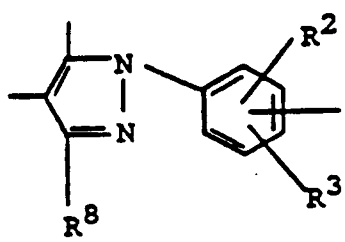

(10b)

where

M is hydrogen or an alkali metal,

p is zero, 1 or 2,

$R^2$ is hydrogen, methyl, methoxy, ethoxy, alkanoyl of 2 to 5 carbon atoms, cyano, carboxyl, sulfo, alkoxycarbonyl of 2 to 5 carbon atoms, carbamoyl, N-($C_1$-$C_4$-alkyl)carbamoyl, fluorine, chlorine, bromine or trifluoromethyl,

$R^3$ is hydrogen, methyl, ethyl, methoxy, ethoxy, cyano, carboxyl, sulfo, alkanoylamino of 2 to 5 carbon atoms, alkoxycarbonyl of 2 to 5 carbon atoms, carbamoyl, N-($C_1$-$C_4$-alkyl)-carbamoyl, fluorine, chlorine, nitro, sulfamoyl, N-($C_1$-$C_4$-alkyl)sulfamoyl, alkylsulfonyl of 1 to 4 carbon atoms, phenylsulfonyl or phenoxy, and

$R^8$ is hydrogen, alkyl of 1 to 4 carbon atoms, cyano, carboxyl, carbalkoxy of 2 to 5 carbon atoms, carbamoyl or phenyl,

Z is a radical of the general formula (4)

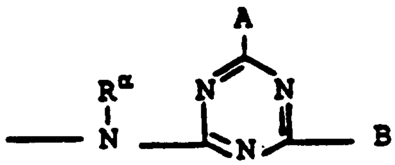

(4)

where $R^\alpha$, A and B are each as defined in claim 1,

v is zero or 1,

-K*-Z is a radical of the general formula (8a), (8b), (8c), (8d), (8e) or (8f)

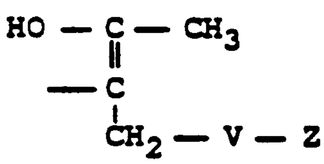

(8a)

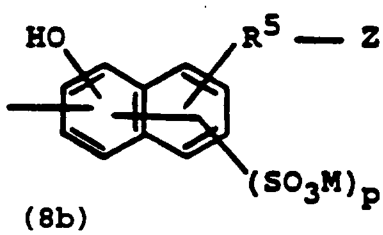

(8b)

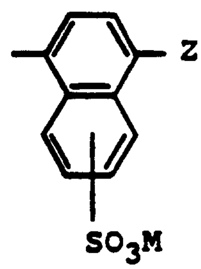

(8c)

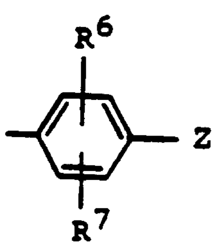

(8d)

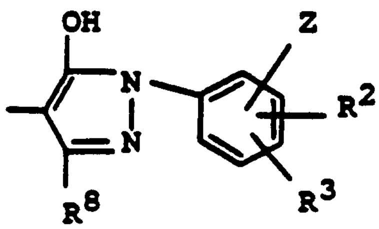

(8e)

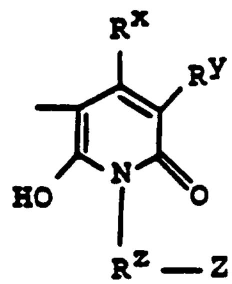

(8f)

where

$R^2$, $R^3$, $R^8$, Z, p and M are each as defined above and the hydroxyl group in the formula (8b) is ortho to the free bond attached to the azo group,

V is a phenylene radical which contains the above-mentioned and above-defined radicals $R^2$ and $R^3$ or is a naphthylene radical which may be substituted by 1 or 2 sulfo groups,

$R^5$ is a direct bond or a radical of the formula -NH-CO-phenylene-, -NH-CO-NH-phenylene-, -N($CH_3$)-CO-phenylene or -N($CH_3$)-CO-NH-phenylene,

$R^6$ is hydrogen, alkyl of 1 to 4 carbon atoms, alkoxy of 1 to 4 carbon atoms, bromine, chlorine or alkanoylamino of 2 to 7 carbon atoms,

$R^7$ is hydrogen, alkyl or 1 to 4 carbon atoms, alkoxy of 1 to 4 carbon atoms, chlorine or alkanoylamino of 2 to 7 carbon atoms, ureido or phenylureido,

| | |
|---|---|
| $R^x$ | is hydrogen, alkyl of 1 to 4 carbon atoms or alkyl of 1 to 4 carbon atoms which is substituted by alkoxy of 1 to 4 carbon atoms or by cyano, |
| $R^y$ | is hydrogen, sulfo, sulfoalkyl having an alkylene moiety of 1 to 4 carbon atoms, cyano or carbamoyl, |
| $R^z$ | is alkylene of 1 to 6 carbon atoms, preferably of 1 to 4 carbon atoms, phenylene which may be substituted by substituents from the group consisting of methyl, ethyl, chlorine, carboxyl and sulfo, or alkylenephenylene having 2 to 4 carbon atoms in the alkylene moiety. |

**7.** The process as claimed in at least one of claims 1 to 6, wherein $X^1$ and $X^2$ are each a direct bond.

**8.** The process as claimed in at least one of claims 1 to 7, wherein $R^\alpha$ is methyl or preferably hydrogen.

**9.** The process as claimed in at least one of claims 1 to 8, wherein A is a group of the general formula (2a) having the meaning mentioned in claim 1.

**10.** The process as claimed in at least one of claims 1 to 9, wherein B has the same meaning as A.

**11.** The process as claimed in claim 9 or 10 or in claims 9 and 10, wherein W is hydrogen or methyl, R is hydrogen, k is zero and $Y^1$ is $\beta$-sulfatoethyl or $\beta$-chloroethyl.

**12.** The process as claimed in claim 11, wherein G is n-propylene.

**13.** The process as claimed in at least one of claims 1 to 12, wherein Y is vinyl or $\beta$-sulfatoethyl.

**14.** The process as claimed in at least one of claims 1 to 10, wherein the group of the general formula (4)

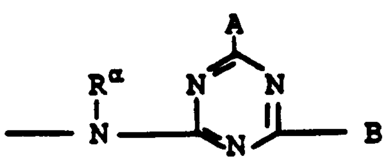

(4)

is a group of the general formula (4A)

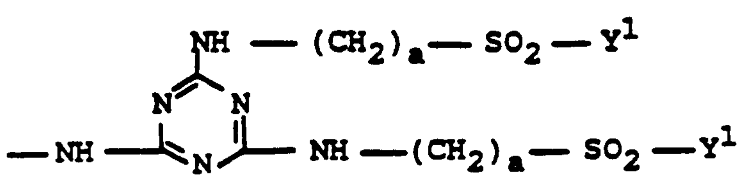

(4A)

where $Y^1$ is vinyl, $\beta$-sulfatoethyl, $\beta$-haloethyl, $\beta$-thiosulfatoethyl, $\beta$-phosphatoethyl or $\beta$-acetoxyethyl, and a is 2 or 3.

**15.** The process as claimed in at least one of claims 1 to 10 and 12 to 14, wherein $Y^1$ is vinyl, $\beta$-chloroethyl or $\beta$-sulfatoethyl.

**16.** The process as claimed in claim 14 or 15, wherein a is 3.

**17.** The use of a dye of the general formula (1) mentioned and defined in claim 1 for dyeing (including printing) hydroxyl- and/or carboxamido-containing material, in particular fiber material.

**18.** A process for dyeing (including printing) hydroxyl-and/or carboxamido-containing material, in particular fiber material, wherein a dye is applied to or introduced into the material and fixed by means of heat and/or with the aid of an alkaline agent, which comprises using as the dye a dye conforming to the formula (1) mentioned and defined in claim 1.

**Revendications**

**Revendications pour les Etats contractants suivants : BE, CH, DE, FR, GB, IT, LI**

**1.** Colorant répondant à la formule générale (I)

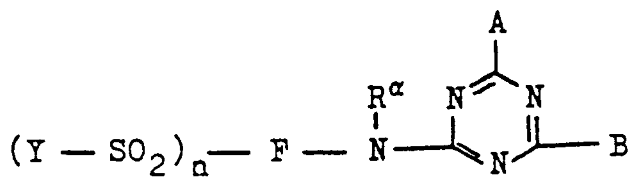

(1)

formule dans laquelle :

F représente le reste d'un colorant monoazoïque ou disazoïque contenant au moins un groupe sulfo et sans métal ou contenant un ou des métaux lourds;

n représente le nombre 1 ou 2, de préférence 1;

Y représente le groupe vinyle ou $\beta$-sulfatoéthyle, $\beta$-halogéno-éthyle, un groupe $\beta$-thiosulfatoéthyle, $\beta$-phosphatoéthyle ou $\beta$-acétoxyéthyle;

$R^\alpha$ représente un atome d'hydrogène ou un groupe alkyle linéaire ou ramifié ayant 1 à 6 atomes de carbone qui peut être substitué par un groupe carboxy, sulfo, cyano ou hydroxyle ou par un atome de chlore;

A est un groupe de formule générale (2a) ou (2b)

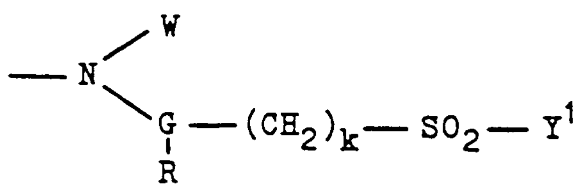

(2a)

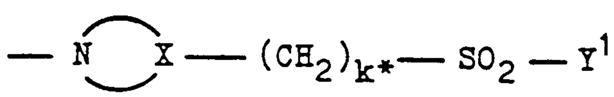

(2b)

formules dans lesquelles

G représente un reste alkyle linéaire ou ramifié ayant 1 à 6 atomes de carbone, avantageusement 2 à 4 atomes de carbone ou bien il représente un reste alkylène ayant 2 à 6 atomes de carbone, qui est interrompu par 1 ou 2 hétérogroupes, la partie alkylène pouvant être linéaire ou ramifiée et l'on préfère des parties alkylènes comportant 2 ou 3 atomes de carbone, ou bien G représente un reste cycloalkyléne, éventuellement substitué par un groupe méthyle et comportant 5 à 8 atomes de carbone,

R représente un atome d'hydrogène ou un atome de chlore, de brome ou de fluor ou un groupe hydroxy, sulfato, cyano, carboxy ou carbamoyle ou un groupe carbalcoxy ayant 2 à 5 atomes de carbone ou un groupe alcanoyloxy ayant 2 à 5 atomes de carbone ou un groupe benzoylamino qui peut être substitué par un ou deux substituants choisis parmi un reste sulfo, carboxy, méthyle, éthyle, méthoxy, éthoxy et chloro, ou bien G représente un groupe de formule générale $-SO_2-Y^2$, dans laquelle

$Y^2$ a l'un des sens indiqués ci-dessus pour Y ou représente un groupe $\beta$-éthoxyéthyle, $Y^2$ pouvant être identique à Y ou en différer,

k est un nombre nul ou valant 1 ou 2,

k* est un nombre nul ou valant 1,2, 3 ou 4,

X forme, avec l'atome d'azote et avec un ou deux groupes alkylène ayant 1 à 5 atomes de carbone et éventuellement un ou deux hétéroatome(s), le reste bivalent d'un noyau hétérocyclique,

$Y^1$ possède l'un des sens indiqués ci-dessus pour Y, $Y^1$ pouvant être identique à Y ou en différer, et

W représente un atome d'hydrogène, le groupe méthyle, sulfométhyle ou carboxyméthyle, ou un groupe alkyle linéaire ou ramifié ayant 2 à 6 atomes de carbone, qui peut être substitué par un ou deux substituants choisis parmi un reste méthoxy, éthoxy, carboxy, sulfo, hydroxy et halogéno, ou bien W représente un reste cycloalkylène, éventuellement substitué par un reste méthyle et comportant 5 à 8 atomes de carbone ou bien W représente un reste phénylène, qui peut être substitué par des substituants choisis parmi un groupe alkyle ayant 1 à 4 atomes de carbone, alcoxy ayant 1 à 4 atomes de carbone, carboxy, sulfo et halogéno;

B a l'un des sens indiqués pour A, A et B pouvant avoir des sens identiques ou différents l'un de l'autre.

**2.** Colorant selon la revendication 1 répondant à la formule générale (3a) ou (3b),

$$(Y\text{-}SO_2\text{-}X^1)_n - D - N = N - (E - N = N)_v - K - Z \qquad (3a)$$

$$Z - D - N = N - (E - N = N)_v - K - X^1 - SO_2 - Y \qquad (3b)$$

dans lesquelles;

Y et n ont l'un des sens indiqués à la revendication 1 ;

$X^1$ représente une liaison directe ou un terme de pontage, comme par exemple un groupe alkylène ayant 1 à 4 atomes de carbone ou le reste divalent d'un groupe alcanoylamido ayant 2 à 5 atomes de carbone;

n est un nombre valant 1 ou 2, avantageusement 1;

Z représente un groupe de formule générale (4)

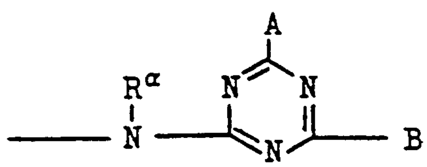

(4)

dans laquelle $R^\alpha$, A et B ont l'un des sens indiqués à la revendication 1;

D représente le reste d'un composant diazotable usuel dans la chimie des composés azoïques et appartenant à la série du benzène ou du naphtalène, qui peut contenir des substituants usuels pour des colorants azoïques, comme par exemple des groupes sulfo, carboxy, hydroxy, amino, méthyle, éthyle, méthoxy et éthoxy et des groupes alcanoylamino, éventuellement substitués, comportant 2 à 4 atomes de carbone, des groupes benzoylamino éventuellement substitués et des atomes d'halogène-(s);

K représente le reste d'un copulant usuel dans la chimie des composés azoïques et appartenant à la série des composés benzéniques, naphtaléniques, des pyrazolones, de la 6-hydroxy-2-pyridone ou d'un arylamide d'acide acétoacétique, pouvant contenir des substituants usuels pour des colorants azoïques, comme par exemple des groupes hydroxy, sulfo, carboxy, amino, méthyle, éthyle, méthoxy et éthoxy et des groupes alcanoylamino éventuellement substitués comportant 2 à 4 atomes de carbone, des groupes benzoylamino éventuellement substitués et des atomes d'halogène;

E représente le reste d'un composant médian usuel dans les colorants diazoïques et appartenant à la série benzénique ou naphtalénique, qui peut être substitué par des substituants usuels pour les colorants azoïques, comme par exemple des groupes sulfo, carboxy, hydroxy, méthyle, éthyle, méthoxy et éthoxy et des groupes alcanoylamino éventuellemzent substitués et comportant 2 à 4 atomes de carbone, un groupe uréido éventuellement substitué, des groupes benzoylamino éventuellement substitués et des atomes d'halogène;

v est un nombre nul ou valant 1;

les restes D, E et K contenant ensemble au moins deux groupes sulfo, et avantageusement 3 à 4 groupes sulfo.

**3.** Colorant selon la revendication 1, répondant à la formule générale (5a)

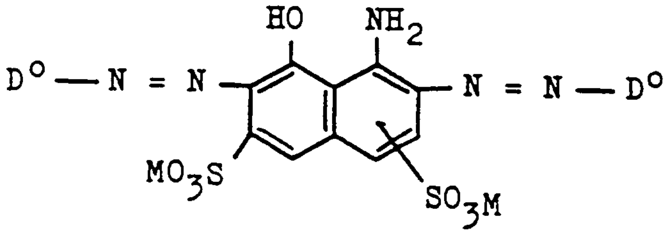

(5a)

formule dans laquelle :

M représente un atome d'hydrogène ou un métal alcalin;

D° est un reste de formule générale (6a), (6b) ou (6c)

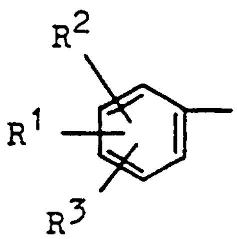

(6a)

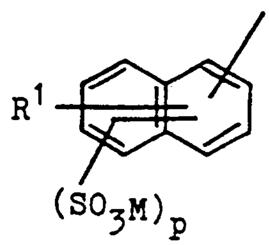

(6b)

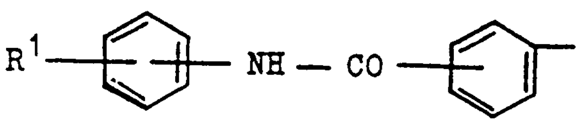

(6c)

formules dans lesquelles

$R^1$ représente dans un reste D° un ou deux groupes de formule générale $Y\text{-}SO_2\text{-}X^1\text{-}$ , dans laquelle Y a le sens indiqué à la revendication 1 et $X^1$ représente une liaison directe ou un groupe alkylène ayant 1 à 4 atomes, ou bien le reste bivalent d'un groupe alcanoyl amido ayant 2 à 5 atomes de carbone, de préférence le reste bivalent du groupe propionylamido, et $R^1$ représente dans l'autre reste D° un reste Z de formule générale (4)

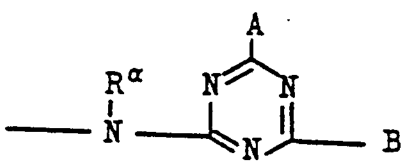

(4)

dans laquelle $R^\alpha$ , A et B ont l'un des sens indiqués à la revendication 1,

$R^2$ représente un atome d'hydrogène, un groupe méthyle, éthyle, méthoxy, éthoxy, alcanoyle ayant 2 à 5 atomes de carbone, cyano, carboxy, sulfo, alcoxycarbonyle ayant 2 à 5 atomes de carbone, carbamoyle, N-(alkyl en $C_1$ à $C_4$)-carbamoyle, un atome de fluor, de chlore, de brome ou un groupe trifluorométhyle,

$R^3$ représente un atome d'hydrogène, un groupe méthyle, éthyle, méthoxy, éthoxy, cyano, carboxy, sulfo, alcanoylamino ayant 2 à 5 atomes de carbone , alcoxycarbonyle ayant 2 à 5 atomes de carbone, carbamoyle, N-(alkyl en $C_1$ à $C_4$)-carbamoyle, un atome de fluor ou de chlore, un groupe nitro, sulfamoyle, N-(alkyl en $C_1$ à $C_4$)-sulfamoyle, alkylsulfonyle ayant 1 à 4 atomes de carbone, phénylsulfonyle ou phénoxy,

p est un nombre nul ou valant 1 ou 2 (et, au cas où p est nul, ce groupe désigne un atome

d'hydrogène) et

M a le sens précité.

4. Colorant selon la revendication 1, répondant à la formule générale (5b)

$$(Y\text{-}SO_2\text{-}X^1)_n\text{—}D^1\text{—}N = N\text{—}(E^1\text{—}N = N)_v\text{—}K^*\text{—}Z \quad (5b)$$

dans laquelle :

Y et n ont les sens indiqués à la revendication 1,

$X^1$ représente une liaison directe ou un groupe alkylène ayant 1 à 4 atomes de carbone ou un reste bivalent d'un groupe alcanoylamido ayant 2 à 5 atomes de carbone, parmi lesquels on préfère le groupe de formule

$-(CH_2)_3$-CO-NH-

$D^1$ représente un reste phénylène, qui possède les substituants $R^2$ et $R^3$ , et

$R^2$ représente un atome d'hydrogène ou un groupe méthyle, éthyle, méthoxy, éthoxy, alcanoyle ayant 2 à 5 atomes de carbone, cyano, carboxy, sulfo, alcoxycarbonyle ayant 2 à 5 atomes de carbone, carbamoyle, N-(alkyl en $C_1$ à $C_4$)-carbamoyle, un atome de fluor, de chlore ou de brome, ou un groupe trifluorométhyle;

$R^3$ représente un atome d'hydrogène, un groupe méthyle, éthyle, méthoxy, éthoxy, cyano, carboxy, sulfo, alcanoylamino ayant 2 à 5 atomes de C, alcoxy carbonyle ayant 2 à 5 atomes de C, carbamoyle, N-(alkyl en $C_1$ à $C_4$)carbamoyle, un atome de fluor ou de chlore, un groupe nitro, sulfamoyle, N-(alkyl en $C_1$ à $C_4$)-sulfamoyle, un groupe alkyl sulfonyle ayant 1 à 4 atomes de carbone, phénylsulfonyle ou phénoxy;

$E^1$ représente un reste de formule générale (7a), (7b), (7c) ou (7d)

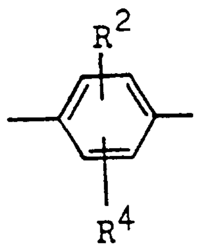
(7a)

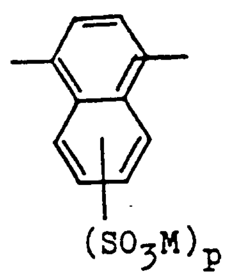
(7b)

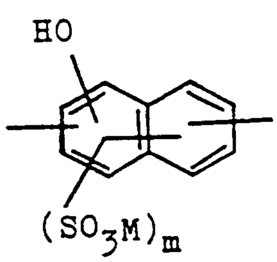
(7c)

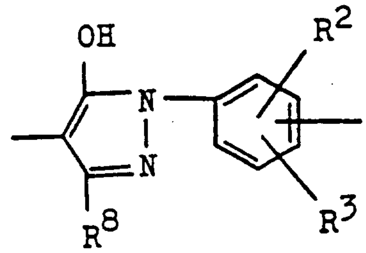
(7d)

dans lesquelles

$R^2$ et $R^3$ ont l'un des sens indiqués ci-dessus,

$R^4$ représente un atome d'hydrogène, un groupe alkyle ayant 1 à 4 atomes de carbone, un groupe alcoxy ayant 1 à 4 atomes de carbone, un atome de chlore, un groupe alcanoylamino ayant 2 à 5 atomes de carbone, le groupe benzoylamino, le groupe uréido, un groupe N'-phényl-uréido, un groupe N'-alkyl-uréido ayant 1 à 4 atomes de carbone dans le reste alkyle, un groupe phénylsulfonyle ou un

groupe alkylsulfonyle ayant 1 à 4 atomes de carbone,

M représente un atome d'hydrogène ou un métal alcalin,

m est un nombre valant 1 ou 2,

p est un nombre nul ou valant 1 ou 2, et

$R^8$ représente un atome d'hydrogène, un groupe alkyle ayant 1 à 4 atomes de carbone, cyano, carboxy, carbalcoxy ayant 2 à 5 atomes de carbone, carbamoyle ou phényle;

v est un nombre nul ou valant 1;

-K*-Z représente un reste de formule générale (8a), (8b), (8c), (8d), (8e), ou (8f) :

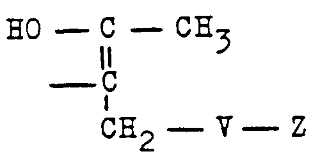
(8a)

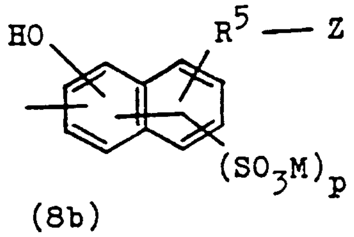
(8b)

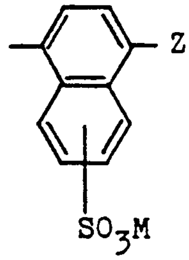
(8c)

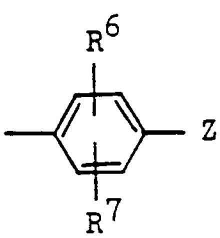
(8d)

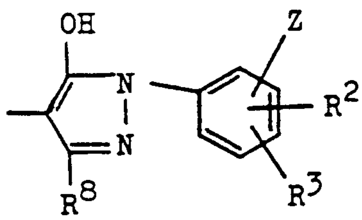
(8e)

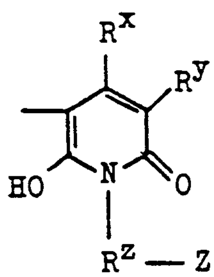
(8f)

dans lesquelles

$R^2$, $R^3$, p et M ont les sens précités, et le groupe hydroxyle se trouve dans la formule (8b) en position ortho par rapport à la liaison libre qui assure la liaison avec le groupe azoïque;

V représente un reste phénylène qui contient les restes $R^2$ et $R^3$ cités et définis ci-dessus, ou bien il représente un reste naphtylène, qui peut être substitué par un ou deux groupes sulfo;

Z représente un reste de formule générale (4)

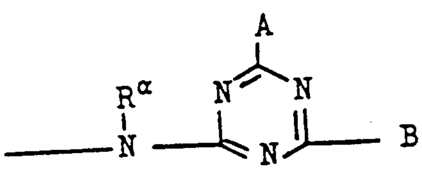
(4)

dans laquelle

$R^\alpha$, A et B ont les sens indiqués à la revendication 1;

R5 représente une liaison directe ou un reste de formule -NH-CO-phénylène-, -NH-CO-NH-phénylène-, $-N(CH_3)$-CO-phénylène- ou $-N(CH_3)$-CO-NH-phénylène-,

$R^6$ représente un atome d'hydrogène, un groupe alkyle ayant 1 à 4 atomes de carbone, alcoxy ayant 1 à 4 atomes de carbone, un atome de brome ou de chlore ou un groupe alcanoylamino ayant 2 à 7 atomes de carbone,

$R^7$ représente un atome d'hydrogène, un groupe alkyle ayant 1 à 4 atomes de carbone, alcoxy ayant 1 à 4 atomes de carbone, un atome de fluor, un groupe alcanoylamino ayant 2 à 7 atomes de carbone, uréido ou phénylyuréido,

$R^8$ a l'un des sens précités,

$R^x$ représente un atome d'hydrogène ou un groupe alkyle ayant 1 à 4 atomes de carbone ou un

groupe alkyle ayant 1 à 4 atomes de carbone et qui est substitué par un reste alcoxy ayant 1 à 4 atomes de carbone ou par un reste cyano,

$R^y$ représente un atome d'hydrogène, un groupe sulfo ou un groupe sulfoalkyle comportant un reste alkylène ayant 1 à 4 atomes de carbone ou un groupe cyano ou carbamoyle, et

$R^z$ représente un groupe alkylène ayant 1 à 6 atomes de carbone, de préférence 1 à 4 atomes de carbone, ou un reste phénylène qui peut être substitué par des substituants choisis dans l'ensemble formé par un reste méthyle, éthyle, chloro, carboxy et sulfo, ou il représente un reste alkylène phénylène ayant 2 à 4 atomes de carbone dans le reste alkylène.

**5.** Colorant selon la revendication 1 répondant à la formule générale (5c)

$$Z \text{--} D^* \text{--} N = N \text{--} (E^1 - N = N)_v \text{---} K^1 \text{---} X^2 \text{---} SO_2 \text{--} Y \qquad (5c)$$

dans laquelle :

Z représente un reste de formule générale (4)

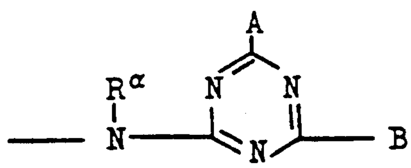

(4)

dans laquelle $R^\alpha$ , A et B ont les sens indiqués à la revendication 1;

D* représente un reste phénylène, qui peut être substitué par un ou deux substituants choisis parmi un atome d'hydrogène, un reste méthyle, éthyle, méthoxy, bromo, chloro, carboxy et sulfo ou bien D* représente un reste naphtylène qui peut être substitué par un ou deux groupes sulfo;

$E^1$ représente un reste répondant aux formules générales (7a), (7b), (7c) ou (7d)

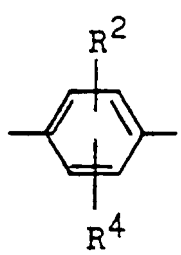

(7a)

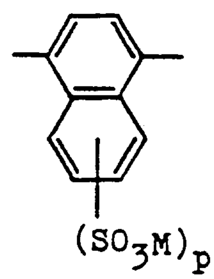

(7b)

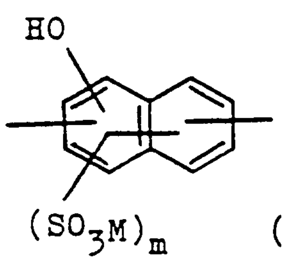

(7c)

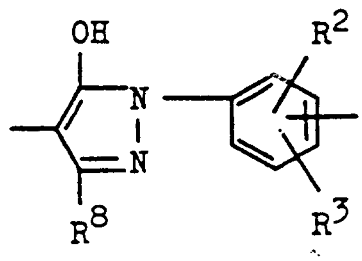

(7d)

dans lesquelles :

$R^2$ représente un atome d'hydrogène ou un groupe méthyle, méthoxy, éthoxy, alcanoyle ayant 2 à 5 atomes de carbone, cyano, carboxy, sulfo, alcoxy carbonyle ayant 2 à 5 atomes de carbone,

carbamoyle, N-(alkyl en $C_1$ en $C_4$)carbamoyle, un atome de fluor, de chlore ou de brome ou un groupe trifluorométhyle,

$R^3$ représente un atome d'hydrogène, un groupe méthyle, éthyle, méthoxy, éthoxy, cyano, carboxy, sulfo, alcanoylamino ayant 2 à 5 atomes de carbone, alcoxycarbonyle ayant 2 à 5 atomes de carbone, carbamoyle, N-(alkyl en $C_1$ à $C_4$)-carbamoyle, un atome de fluor ou de chlore, un groupe nitro, sulfamoyle, N-(alkyl en $C_1$ à $C^4$)-sulfamoyle, alkylsulfonyle ayant 1 à 4 atomes de carbone, phénylsulfonyle ou phénoxy,

$R^4$ représente un atome d'hydrogène, un groupe alkyle ayant 1 à 4 atomes de carbone, un groupe alcoxy ayant 1 à 4 atomes de carbone, un atome de chlore, un groupe alcanoylamino ayant 2 à 5 atomes de carbone, le groupe benzoylamino, le groupe uréido, un groupe N'-phényl-uréido, un groupe N'-alkyl-uréido comportant 1 à 4 atomes de carbone dans le reste alkyle, un groupe phénylsulfonyle ou un groupe alcanoylsulfonyle ayant 1 à 4 atomes de carbone,

M représente un atome d'hydrogène ou un métal alcalin,

m est un nombre valant 1 ou 2,

p est un nombre nul ou valant 1 ou 2, et

$R^8$ représente un atome d'hydrogène, un groupe alkyle ayant 1 à 4 atomes de carbone, cyano, carboxy, carbalcoxy ayant 2 à 5 atomes de carbone, carbamoyle ou phényle;

v est un nombre nul ou valant 1;

$K^1$ représente un reste répondant à l'une des formules générales (9a), (9b), ou (9c)

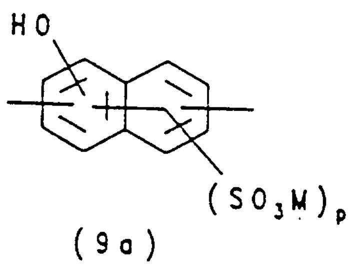

(9a)

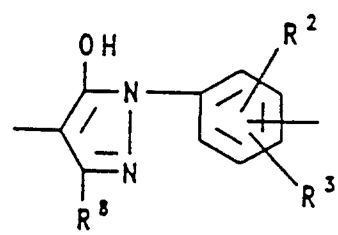

(9b)

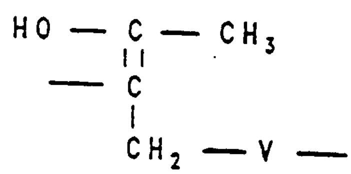

(9c)

dans lesquelles M, p, $R^2$, $R^3$ et $R^8$ ont les sens précités, et le groupe hydroxyle de la formule (9a) est en position ortho par rapport à la liaison libre reliant ce groupe au groupe azoïque et,

V représente un reste phénylène, qui contient les restes $R^2$ et $R^3$ cités et définis ci-dessus, ou bien V représente un reste naphtylène qui peut être substitué par un ou deux groupes sulfo;

$X^2$ représente une liaison directe ou un groupe alkylène ayant 1 ou 2 groupes alkylamido ayant 2 à 5 atomes de carbone, et l'on préfère en particulier le groupe $-NH-CO-(CH_2)_3-$;

Y a l'un des sens indiqués à la revendication 1.

**6.** Colorant selon la revendication 1, répondant à la formule générale (5d)

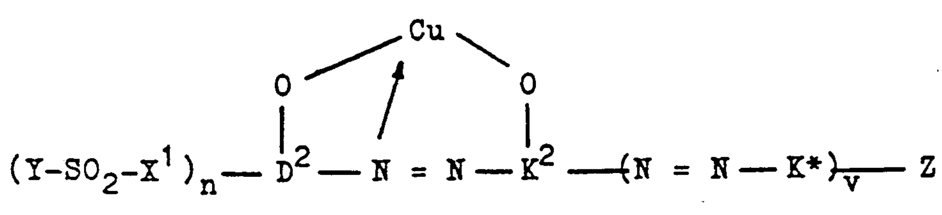

(5d)

dans laquelle

Y et n ont les sens indiqués à la revendication 1;

$X^1$ représente une liaison directe ou un groupe alkylène ayant 1 à 4 atomes de carbone ou un reste bivalent d'un groupe alcanoylamido ayant 2 à 5 atomes de carbone, parmi lesquels on préfère le groupe de formule $-(CH_2)_3-CONH-$;

$D^2$ représente un reste benzène, qui peut être substitué par un ou deux substituants choisis parmi un groupe méthyle, éthyle, méthoxy, éthoxy, un atome de brome ou de chlore, un groupe carboxy et un groupe sulfo, ou bien $D^2$ représente un reste naphtalène, qui peut être substitué par un groupe sulfo;

$K^2$ représente un reste de formule générale (10a) ou (10b) :

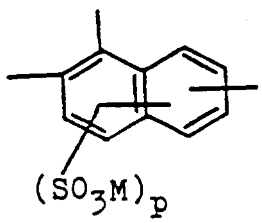

(10a)

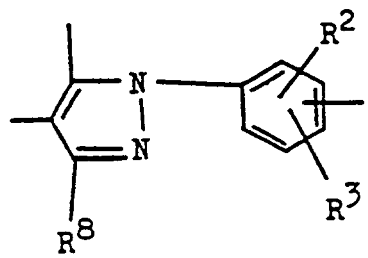

(10b)

dans lesquelles

M représente un atome d'hydrogène ou un métal alcalin,

p est un nombre nul ou valant 1 ou 2,

$R^2$ représente un atome d'hydrogène, un groupe méthyle, méthoxy, éthoxy, alcanoyle ayant 2 à 5 atomes de carbone, cyano, carboxy, sulfo, alcoxycarbonyle ayant 2 à 5 atomes de carbone, carbamoyle, N-(alkyl en $C_1$ à $C_4$)-carbamoyle, un atome de fluor, de chlore ou de brome ou un groupe trifulorométhyle,

$R^3$ représente un atome d'hydrogène ou un groupe méthyle, éthyle, méthoxy, éthoxy, cyano, carboxy, sulfo, alcanoylamino ayant 2 à 5 atomes de carbone, alcoxycarbonyle ayant 2 à 5 atomes de carbone, carbamoyle, N-(alkyl en $C_1$ à $C_4$)-carbamoyle, un atome de fluor ou de chlore, un groupe nitro, sulfamoyle, N-(alkyl en $C_1$ à $C_4$)-sulfamoyle, alkylsulfonyle ayant 1 à 4 atomes de carbone, phénylsulfonyle ou phénoxy, et

$R^8$ représente un atome d'hydrogène, un groupe alkyle ayant 1 à 4 atomes de carbone, cyano, carboxy, carbalcoxy ayant 2 à 5 atomes de carbone, carbamoyle ou phényl;

Z représente un reste de formule générale (4)

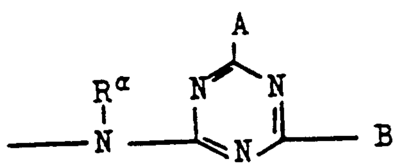

(4)

dans laquelle $R^\alpha$, A et B ont l'un des sens indiqués à la revendication 1;

v est un nombre nul ou valant 1;

$-K^*-Z$ représente un reste répondant à l'une des formules générales (8a), (8b), (8c), (8d), (8e) ou (8f)

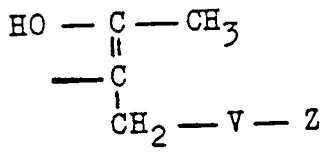

(8a)

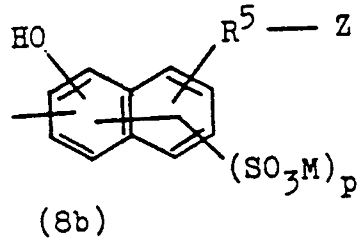

(8b)

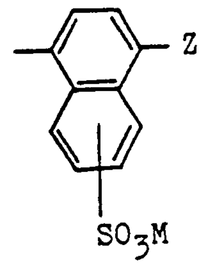

(8c)

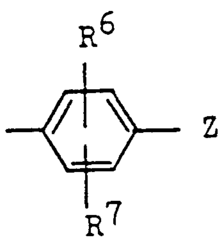

(8d)

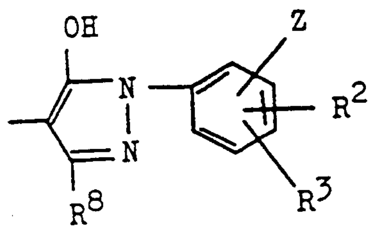

(8e)

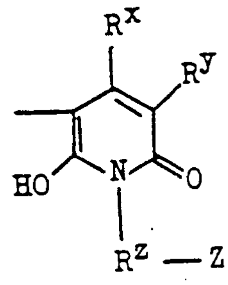

(8f)

dans lesquelles

$R^2$, $R^3$, $R^8$, Z, p et M ont les sens précités et, dans la formule (8b), le groupe hydroxyle se trouve en position ortho par rapport à la liaison libre assurant la liaison avec le groupe azoïque,

V représente un reste phénylène, qui contient les restes $R^2$ et $R^3$ définis et cités ci-dessus, ou un reste naphtylène, qui peut être substitué par un ou deux groupes sulfo,

$R^5$ représente une liaison directe ou un reste de formule -NH-CO-phénylène-, -NH-CO-NH-phénylène-, -N($CH_3$)-CO-phénylène- ou un reste -N($CH_3$)-CO-NH-phénylène-,

$R^6$ représente un atome d'hydrogène, un groupe alkyle ayant 1 à 4 atomes de carbone, alcoxy ayant 1 à 4 atomes de carbone, un atome de brome ou de chlore ou un groupe alcanoylamino ayant 2 à 7 atomes de carbone,

$R^7$ représente un atome d'hydrogène, un groupe alkyle ayant 1 à 4 atomes de carbone, alcoxy ayant 1 à 4 atomes de carbone, un atome de fluor ou un groupe alcanoylamino ayant 2 à 7 atomes de carbone, ou un groupe uréido ou phényluréido,

$R^x$ représente un atome d'hydrogène ou un groupe alkyle ayant 1 à 4 atomes de carbone ou un groupe alkyle ayant 1 à 4 atomes de carbone et qui est substitué par un groupe alcoxy ayant 1 à 4 atomes de carbone ou par un groupe cyano,

$R^y$ représente un atome d'hydrogène, un groupe sulfo ou un groupe sulfoalkyle comportant un reste alkylène ayant 1 à 4 atomes de carbone, ou bien un groupe cyano ou carbamoyle, et

$R^z$ représente un groupe alkylène ayant 1 à 6 atomes de carbone, et ayant de préférence 1 à 4 atomes de carbone, ou un reste phénylène, qui peut être substitué par des substituants choisis dans l'ensemble formé par un groupe méthyle, éthyle, chloro, carboxy et sulfo, ou bien $R^z$ représente un reste alkylène phénylène comportant 2 à 4 atomes de carbone dans le reste alkylène.

**7.** Colorant selon l'une au moins des revendications 1 à 6, caractérisé en ce que $X^1$ et $X^2$ représentent chacun une liaison directe.

**8.** Composé selon l'une au moins des revendications 1 à 7, caractérisé en ce que $R^\alpha$ représente le groupe méthyle ou de préférence un atome d'hydrogène.

**9.** Colorant selon l'une au moins des revendications 1 à 8, caractérisé en ce que A représente un groupe de formule générale (2a) ayant le sens indiqué à la revendication 1.

**10.** Colorant selon l'une au moins des revendications 1 à 9, caractérisé en ce que B a le même sens que A.

**11.** Colorant selon la revendication 9 ou 10 ou selon la revendication 9 et la revendication 10, caractérisé en ce que W représente un atome d'hydrogène ou un groupe méthyle; R représente un atome d'hydrogène; k est un nombre nul et $Y^1$ représente un groupe $\beta$-sulfatoéthyle ou $\beta$-chloréthyle.

**12.** Colorant selon la revendication 11, caractérisé en ce que G représente le groupe n-propylène.

**13.** Colorant selon l'une au moins des revendications 1 à 12, caractérisé en ce que Y représente le groupe vinyle ou un groupe $\beta$-sulfatoéthyle.

**14.** Colorant selon l'une au moins des revendications 1 à 10, caractérisé en ce que le groupe de formule générale (4)

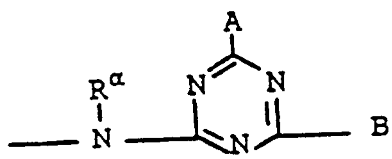

(4)

est un groupe de formule générale (4A)

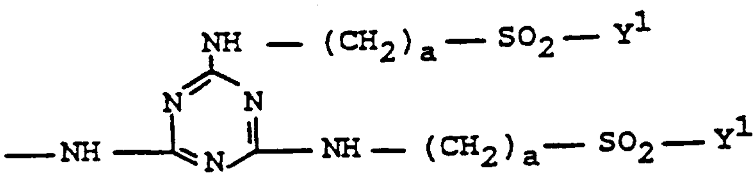

(4A)

formule dans laquelle $Y^1$ représente le groupe vinyle, un groupe $\beta$-sulfatoéthyle, $\beta$-halogéno-éthyle, $\beta$-thiosulfatoéthyle, $\beta$-phosphatoéthyle ou $\beta$-acétoxyéthyle, et a est un nombre valant 2 ou 3.

**15.** Colorant selon l'une au moins des revendications 1 à 10 et 12 à 14, caractérisé en ce que Y représente le groupe vinyle, $\beta$-chloréthyle ou $\beta$-sulfatoéthyle.

**16.** Colorant selon la revendication 14 ou 15, caractérisé en ce que A représente le nombre 3.

**17.** Procédé pour produire un colorant selon la revendication 1, caractérisé en ce que de manière analogue à des modes opératoires usuels de synthèse de colorants monoazoïques et disazoïques et de leurs composés complexes de métaux lourds, on fait réagir mutuellement des précurseurs de colorants dont l'un au moins contient un groupement de formule générale (4) pouvant réagir avec les fibres, et qui est cité et défini à la revendication 1 et un qui contient au moins un groupement de formule générale $-SO_2-Y$, cité et défini à la revendication 1 et pouvant réagir avec les fibres, ou bien en ce qu'on fait réagir dans un ordre quelconque un halogénure de cyanuryle avec un composé général (15) :

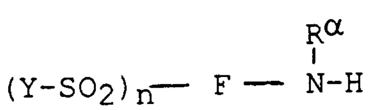

(15)

dans laquelle F, Y, $R^\alpha$ et n ont les sens indiqués à la revendication 1 et avec une ou deux amines de formule générale (16)

$H_2N-A$ (16)

dans laquelle A a l'un des sens indiqués à la revendication 1, A pouvant également avoir un autre sens

correspondant à celui du reste B.

**18.** Procédé pour préparer un colorant répondant à la formule générale (1), citée et définie à la revendication 1, mais dans laquelle Y représente le groupe $\beta$-sulfatoéthyle ou $\beta$-phosphatoéthyle, procédé caractérisé en ce qu'on fait réagir le colorant répondant à la formule générale (1), mais dans laquelle un ou plusieurs des groupes Y, $Y^1$ et $Y^2$ représente(nt) un ou des groupes $\beta$-hydroxyéthyle(s) avec un agent de sulfatation ou avec un agent de phosphatation.

**19.** Utilisation d'un colorant de formule générale (1), citée et définie à la revendication 1, pour teindre (ce qui comprend l'impression) de la matière contenant des groupes hydroxyles et/ou carboxamides notamment de la matière fibreuse.

**20.** Procédé pour teindre (ce qui comprend l'impression) une matière contenant des groupes hydroxyles et/ou carboxamides, notamment de la matière fibreuse, procédé selon lequel on applique un colorant sur la matière ou bien on introduit ce colorant dans la matière et on l'y fixe par de la chaleur et/ou à l'aide d'un agent à réaction alcaline, procédé caractérisé en ce qu'on utilise comme colorant un colorant répondant à la formule (I) citée et définie à la revendication 1.

**Revendications pour l'Etat contractant suivant : ES**

**1.** Procédé pour préparer un colorant répondant à la formule générale (1)

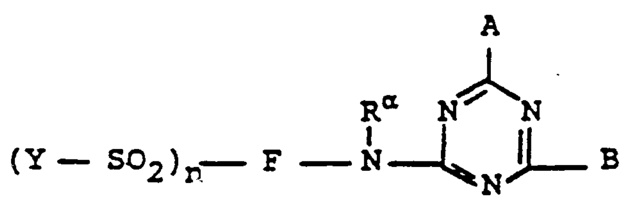

(1)

dans laquelle :

F représente le reste d'un colorant monoazoïque ou disazoïque contenant au moins un groupe sulfo et sans métal ou contenant un ou des métaux lourds;

n représente le nombre 1 ou 2, de préférence 1;

Y représente le groupe vinyle ou $\beta$-sulfatoéthyle, $\beta$-halogéno-éthyle, un groupe $\beta$-thiosulfatoéthyle, $\beta$-phosphatoéthyle ou $\beta$-acétoxyéthyle;

$R^\alpha$ représente un atome d'hydrogène ou un groupe alkyle linéaire ou ramifié ayant 1 à 6 atomes de carbone , qui peut être substitué par un groupe carboxy, sulfo, cyano ou hydroxyle ou par un atome de chlore;

A est un groupe de formule générale (2a) ou (2b)

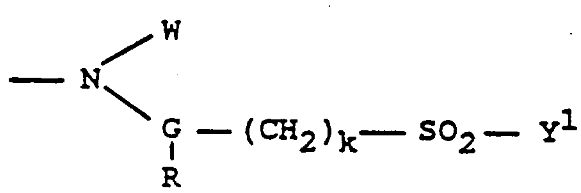

(2a)

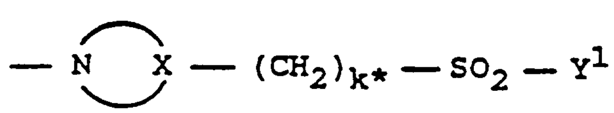

(2b)

formules dans lesquelles

G représente un reste alkyle linéaire ou ramifié ayant 1 à 6 atomes de carbone, avantageusement 2 à 4 atomes de carbone ou bien il représente un reste alkylène ayant 2 à 6 atomes de carbone, qui

est interrompu par 1 ou 2 hétérogroupes, la partie alkylène pouvant être linéaire ou ramifiée et l'on préfère des parties alkylènes comportant 2 ou 3 atomes de carbone, ou bien G représente un reste cycloalkylène, éventuellement substitué par un groupe méthyle et comportant 5 à 8 atomes de carbone,

R représente un atome d'hydrogène ou un atome de chlore, de brome ou de fluor ou un groupe hydroxy, sulfato, cyano, carboxy ou carbamoyle ou un groupe carbalcoxy ayant 2 à 5 atomes de carbone ou un groupe alcanoyloxy ayant 2 à 5 atomes de carbone ou un groupe benzoylamino qui peut être substitué par un ou deux substituants choisis parmi un reste sulfo, carboxy, méthyle, éthyle, méthoxy, éthoxy et chloro, ou bien G représente un groupe de formule générale $-SO_2-Y^2$, dans laquelle

$Y^2$ a l'un des sens indiqués ci-dessus pour Y ou représente un groupe $\beta$-éthoxyéthyle, $Y^2$ pouvant être identique à Y ou en différer,

k est un nombre nul ou valant 1 ou 2,

k* est un nombre nul ou valant 1,2, 3 ou 4,

X forme, avec l'atome d'azote et avec un ou deux groupes alkylène ayant 1 à 5 atomes de carbone et éventuellement un ou deux hétéroatome(s), le reste bivalent d'un noyau hétérocyclique,

$Y^1$ possède l'un des sens indiqués ci-dessus pour Y, $Y^1$ pouvant être identique à Y ou en différer, et

W représente un atome d'hydrogène, le groupe méthyle, sulfométhyle ou carboxyméthyle, ou un groupe alkyle linéaire ou ramifié ayant 2 à 6 atomes de carbone, qui peut être substitué par un ou deux substituants choisis parmi un reste méthoxy, éthoxy, carboxy, sulfo, hydroxy et halogéno, ou bien W représente un reste cycloalkylène, éventuellement substitué par un reste méthyle et comportant 5 à 8 atomes de carbone ou bien W représente un reste phénylène, qui peut être substitué par des substituants choisis parmi un groupe alkyle ayant 1 à 4 atomes de carbone, alcoxy ayant 1 à 4 atomes de carbone, carboxy, sulfo et halogéno;

B a l'un des sens indiqués pour A, A et B pouvant avoir des sens identiques ou différents l'un de l'autre;

procédé caractérisé en ce que, de façon analogue au mode opératoire usuel de synthèse de colorants monoazoïques et disazoïques et de leurs composés complexes de métaux lourds, on fait mutuellement réagir des précurseurs de colorants dont l'un au moins contient un groupement pouvant réagir avec les fibres et qui répond à la formule générale (4) citée et définie ci-dessus et l'un au moins contient un groupement pouvant réagir avec les fibres et de formule générale $-SO_2-Y$ citée et définie ci-dessus,

ou bien en ce qu'on fait réagir un halogénure de cyanuryle avec un composé de formule générale (15)

$$(Y\text{-}SO_2)_n\text{---}F\text{---}\underset{}{N(R^{\alpha})\text{-}H} \qquad (15)$$

(dans laquelle F, Y, $R^{\alpha}$ et n ont les sens indiqués ci-dessus) et une ou deux amines de formule générale (16)

$H_2N\text{-}A$ (16)

dans laquelle A a l'un des sens indiqués ci-dessus, le symbôle A pouvant aussi avoir un autre sens correspondant à celui du reste B, la réaction ayant lieu dans un ordre quelconque,

ou bien en ce que, pour préparer un colorant de formule générale (1), dans laquelle cependant Y représente le groupe $\beta$-sulfatoéthyle ou $\beta$-phosphatoéthyle, on fait réagir le colorant correspondant, de formule générale (1), mais dans lequel cependant un ou plusieurs des groupes Y, $Y^1$ et $Y^2$ représentent un ou des groupes $\beta$-hydroxyéthyle, avec un agent de sulfatation ou avec un agent de phosphatation.

**2.** Procédé selon la revendication 1, caractérisé en ce que le colorant de formule (1) est un colorant répondant à la formule générale (3a) ou (3b)

$$(Y\text{-}SO_2\text{-}X^1)_n\text{---}D\text{ -- }N = N\text{ ---}(E\text{ -- }N = N)_v\text{---}K\text{ -- }Z \qquad (3a)$$

$$Z\text{ -- }D\text{ -- }N = N\text{---}(E\text{ -- }N = N)_v\text{---}K\text{ -- }X^1\text{ --}SO_2\text{-- }Y \qquad (3b)$$

dans lesquelles:

Y et n ont l'un des sens indiqués à la revendication 1 ;

$X^1$ représente une liaison directe ou un terme de pontage, comme par exemple un groupe alkylène ayant 1 à 4 atomes de carbone ou le reste divalent d'un groupe alcanoylamido ayant 2 à 5 atomes de carbone;

n est un nombre valant 1 ou 2, avantageusement 1;

Z représente un groupe de formule générale (4)

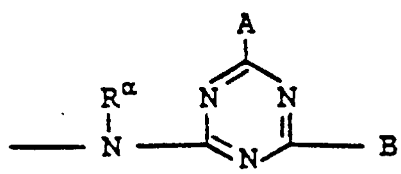

(4)

dans laquelle $R^\alpha$, A et B ont l'un des sens indiqués à la revendication 1;

D représente le reste d'un composant diazotable usuel dans la chimie des composés azoïques et appartenant à la série du benzène ou du naphtalène, qui peut contenir des substituants usuels pour des colorants azoïques, comme par exemple des groupes sulfo, carboxy, hydroxy, amino, méthyle, éthyle, méthoxy et éthoxy et des groupes alcanoylamino, éventuellement substitués, comportant 2 à 4 atomes de carbone, des groupes benzoylamino éventuellement substitués et des atomes d'halogène(s);

K représente le reste d'un copulant usuel dans la chimie des composés azoïques et appartenant à la série des composés benzéniques, naphtaléniques, des pyrazolones, de la 6-hydroxy-2-pyridone ou d'un arylamide d'acide acétoacétique, pouvant contenir des substituants usuels pour des colorants azoïques, comme par exemple des groupes hydroxy, sulfo, carboxy, amino, méthyle, éthyle, méthoxy et éthoxy et des groupes alcanoylamino éventuellement substitués comportant 2 à 4 atomes de carbone, des groupes benzoylamino éventuellement substitués et des atomes d'halogène;

E représente le reste d'un composant médian usuel dans les colorants disazoïques et appartenant à la série benzénique ou naphtalénique, qui peut être substitué par des substituants usuels pour les colorants azoïques, comme par exemple des groupes sulfo, carboxy, hydroxy, méthyle, éthyle, méthoxy et éthoxy et des groupes alcanoylamino éventuellemzent substitués et comportant 2 à 4 atomes de carbone, un groupe uréido éventuellement substitué, des groupes benzoylamino éventuellement substitués et des atomes d'halogène;

v est un nombre nul ou valant 1;

les restes D, E et K contenant ensemble au moins deux groupes sulfo, et avantageusement 3 à 4 groupes sulfo.

**3.** Procédé selon la revendication 1, caractérisé en ce que le colorant de formule (1) est un colorant répondant à la formule générale (5a)

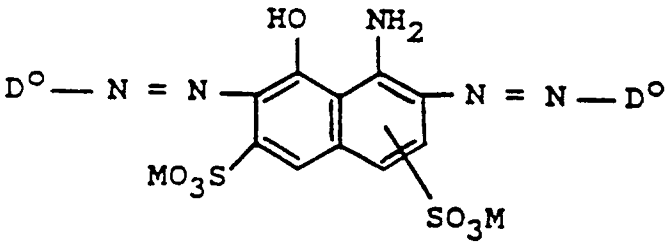

(5a)

dans laquelle :

M représente un atome d'hydrogène ou un métal alcalin;

$D^o$ est un reste de formule générale (6a), (6b) ou (6c)

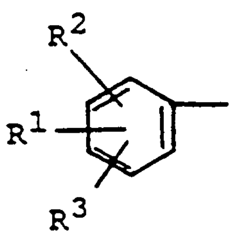

(6a)

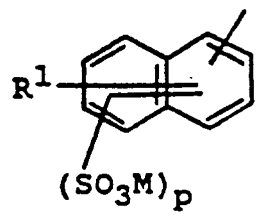

(6b)

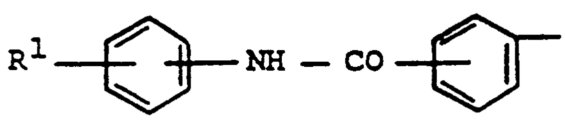

(6c)

dans lesquelles

$R^1$ représente dans un reste $D^o$ un ou deux groupes de formule générale $Y\text{-}SO_2\text{-}X^1\text{-}$ , dans laquelle Y a le sens indiqué à la revendication 1 et $X^1$ représente une liaison directe ou un groupe alkylène ayant 1 à 4 atomes, ou bien le reste bivalent d'un groupe alcanoyl amido ayant 2 à 5 atomes de carbone, de préférence le reste bivalent du groupe propionylamido, et $R^1$ représente dans l'autre reste $D^o$ un reste Z de formule générale (4)

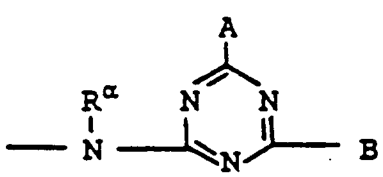

(4)

dans laquelle $R^\alpha$, A et B ont l'un des sens indiqués à la revendication 1,

$R^2$ représente un atome d'hydrogène, un groupe méthyle, éthyle, méthoxy, éthoxy, alcanoyle ayant 2 à 5 atomes de carbone, cyano, carboxy, sulfo, alcoxycarbonyle ayant 2 à 5 atomes de carbone, carbamoyle, N-(alkyl en $C_1$ à $C_4$)-carbamoyle, un atome de fluor, de chlore, de brome ou un groupe trifluorométhyle,

$R^3$ représente un atome d'hydrogène, un groupe méthyle, éthyle, méthoxy, éthoxy, cyano, carboxy, sulfo, alcanoylamino ayant 2 à 5 atomes de carbone , alcoxycarbonyle ayant 2 à 5 atomes de carbone, carbamoyle, N-(alkyl en $C_1$ à $C_4$)-carbamoyle, un atome de fluor ou de chlore, un groupe nitro, sulfamoyle, N-(alkyl en $C_1$ à $C_4$)-sulfamoyle, alkylsulfonyle ayant 1 à 4 atomes de carbone, phénylsulfonyle ou phénoxy,

p est un nombre nul ou valant 1 ou 2 (et, au cas où p est nul, ce groupe désigne un atome d'hydrogène) et

M a le sens précité.

**4.** Procédé selon la revendication 1, caractérisé en ce que le colorant de formule (1) est un colorant répondant à la formule générale (5b)

$$(Y\text{-}SO_2\text{-}X^1)_n\text{—}D^1\text{—}N=N\text{—}(E^1\text{—}N=N)_Y\text{—}K^*\text{—}Z \qquad (5b)$$

dans laquelle :

$X^1$ représente une liaison directe ou un groupe alkylène ayant 1 à 4 atomes de carbone ou un reste bivalent d'un groupe alcanoyl amido ayant 2 à 5 atomes de carbone, parmi lesquels on préfère le groupe de formule

$-(CH_2)_3\text{-}CO\text{-}NH\text{-}$;

$D^1$ représente un reste phénylène, qui possède les substituants $R^2$ et $R^3$ , et

$R^2$ représente un atome d'hydrogène ou un groupe méthyle, éthyle, méthoxy, éthoxy, alcanoyle ayant 2 à 5 atomes de carbone, cyano, carboxy, sulfo, alcoxycarbonyle ayant 2 à 5 atomes de carbone, carbamoyle, N-(alkyl en $C_1$ à $C_4$)-carbamoyle, un atome de fluor, de chlore ou de brome, ou un groupe trifluorométhyle;

$R^3$ représente un atome d'hydrogène, un groupe méthyle, éthyle, méthoxy, éthoxy, cyano, carboxy, sulfo, alcanoylamino ayant 2 à 5 atomes de C, alcoxy carbonyle ayant 2 à 5 atomes de C, carbamoyle, N-(alkyl en $C_1$ à $C_4$)-carbamoyle, un atome de fluor ou de chlore, un groupe nitro, sulfamoyle, N-(alkyl en $C_1$ à $C_4$)-sulfamoyle, un groupe alkyl sulfonyle ayant 1 à 4 atomes de carbone, phénylsulfonyle ou phénoxy;

$E^1$ représente un reste de formule générale (7a), (7b), (7c) ou (7d)

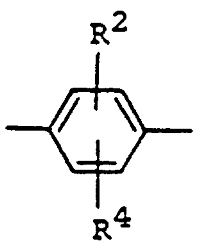
(7a)

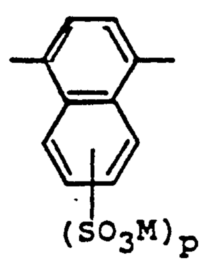
(7b)

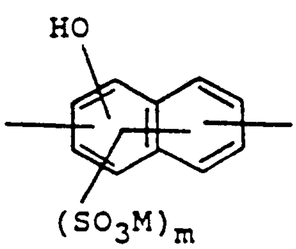
(7c)

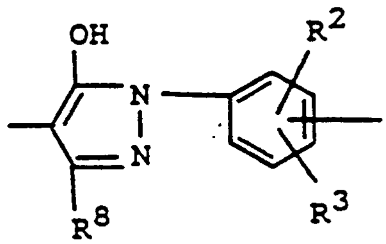
(7d)

dans lesquelles

$R^2$ et $R^3$ ont l'un des sens indiqués ci-dessus,

$R^4$ représente un atome d'hydrogène, un groupe alkyle ayant 1 à 4 atomes de carbone, un groupe alcoxy ayant 1 à 4 atomes de carbone, un atome de chlore, un groupe alcanoylamino ayant 2 à 5 atomes de carbone, le groupe benzoylamino, le groupe uréido, un groupe N'-phényl-uréido, un groupe N'-alkyl-uréido ayant 1 à 4 atomes de carbone dans le reste alkyle, un groupe phénylsulfonyle ou un groupe alkylsulfonyle ayant 1 à 4 atomes de carbone,

M représente un atome d'hydrogène ou un métal alcalin,

m est un nombre valant 1 ou 2,

p est un nombre nul ou valant 1 ou 2, et

$R^8$ représente un atome d'hydrogène, un groupe alkyle ayant 1 à 4 atomes de carbone, cyano, carboxy, carbalcoxy ayant 2 à 5 atomes de carbone, carbamoyle ou phényle;

v est un nombre nul ou valant 1;

-K*-Z représente un reste de formule générale (8a), (8b), (8c), (8d), (8e), ou (8f) :

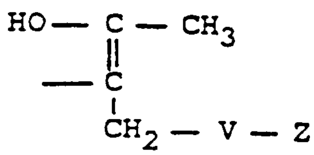

(8a)

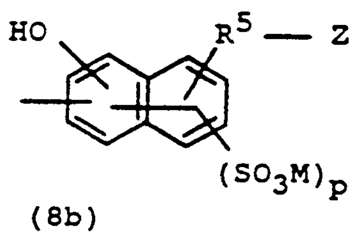

(8b)

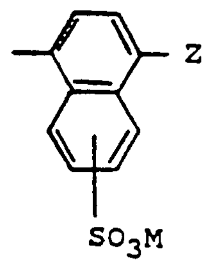

(8c)

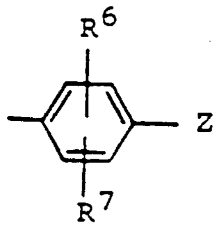

(8d)

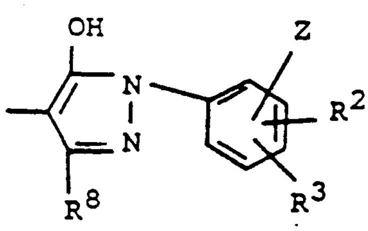

(8e)

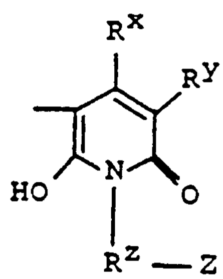

(8f)

dans lesquelles

$R^2$, $R^3$, p et M ont les sens précités, et le groupe hydroxyle se trouve dans la formule (8b) en position ortho par rapport à la liaison libre qui assure la liaison avec le groupe azoïque;

V représente un reste phénylène qui contient les restes $R^2$ et $R^3$ cités et définis ci-dessus, ou bien il représente un reste naphtylène, qui peut être substitué par un ou deux groupes sulfo;

Z représente un reste de formule générale (4)

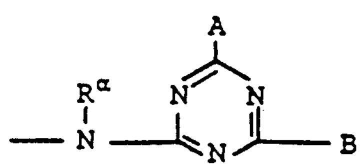

(4)

dans laquelle

$R^\alpha$, A et B ont les sens indiqués à la revendication 1;

R5 représente une liaison directe ou un reste de formule -NH-CO-phénylène- -NH-CO-NH-phénylène-, -N($CH_3$)-CO-phénylène- ou -N($CH_3$)-CO-NH-phénylène-,

$R^6$ représente un atome d'hydrogène, un groupe alkyle ayant 1 à 4 atomes de carbone, alcoxy ayant 1 à 4 atomes de carbone, un atome de brome ou de chlore ou un groupe alcanoylamino ayant 2 à 7 atomes de carbone,

$R^7$ représente un atome d'hydrogène, un groupe alkyle ayant 1 à 4 atomes de carbone, alcoxy ayant 1 à 4 atomes de carbone, un atome de fluor, un groupe alcanoylamino ayant 2 à 7 atomes de carbone, uréido ou phénylyuréido,

$R^8$ a l'un des sens précités,

$R^x$ représente un atome d'hydrogène ou un groupe alkyle ayant 1 à 4 atomes de carbone ou un groupe alkyle ayant 1 à 4 atomes de carbone et qui est substitué par un reste alcoxy ayant 1 à 4 atomes de carbone ou par un reste cyano,

$R^y$ représente un atome d'hydrogène, un groupe sulfo ou un groupe sulfoalkyle comportant un reste alkylène ayant 1 à 4 atomes de carbone ou un groupe cyano ou carbamoyle, et

$R^z$ représente un groupe alkylène ayant 1 à 6 atomes de carbone, de préférence 1 à 4 atomes de carbone, ou un reste phénylène qui peut être substitué par des substituants choisis dans l'ensemble formé par un reste méthyle, éthyle, chloro, carboxy et sulfo, ou il représente un reste alkylène phénylène ayant 2 à 4 atomes de carbone dans le reste alkylène.

**5.** Procédé selon la revendication 1, caractérisé en ce que le colorant de formule (1) est un colorant répondant à la formule générale (5c)

$$Z-D^{*}-N=N-(E^{1}-N=N)_{v}-K^{1}-X^{2}-SO_{2}-Y \qquad (5c)$$

dans laquelle :

Z représente un reste de formule générale (4)

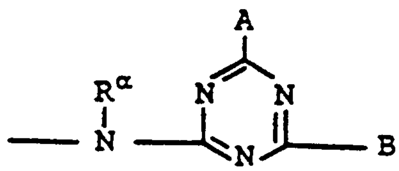

(4)

dans laquelle $R^{\alpha}$ , A et B ont les sens indiqués à la revendication 1;

D* représente un reste phénylène, qui peut être substitué par un ou deux substituants choisis parmi un atome d'hydrogène, un reste méthyle, éthyle, méthoxy, bromo, chloro, carboxy et sulfo ou bien D* représente un reste naphtylène qui peut être substitué par un ou deux groupes sulfo;

$E^1$ représente un reste répondant aux formules générales (7a), (7b), (7c) ou (7d)

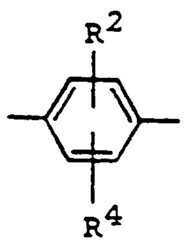

(7a)

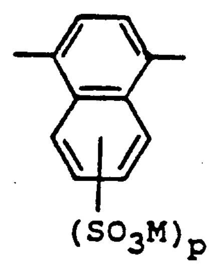

(7b)

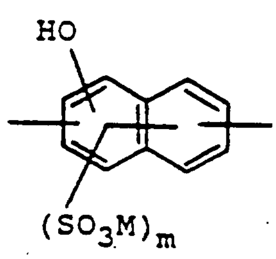

(7c)

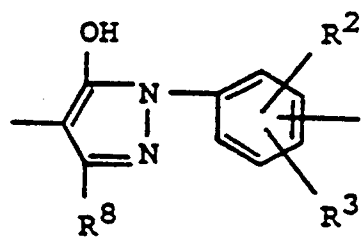

(7d)

dans lesquelles :

$R^2$ représente un atome d'hydrogène ou un groupe méthyle, méthoxy, éthoxy, alcanoyle ayant 2 à 5 atomes de carbone, cyano, carboxy, sulfo, alcoxy carbonyle ayant 2 à 5 atomes de carbone, carbamoyle, N-(alkyl en $C_1$ en $C_4$)-carbamoyle, un atome de fluor, de chlore ou de brome ou un groupe trifluorométhyle,

$R^3$ représente un atome d'hydrogène, un groupe méthyle, éthyle, méthoxy, éthoxy, cyano, carboxy,

sulfo, alcanoylamino ayant 2 à 5 atomes de carbone, alcoxycarbonyle ayant 2 à 5 atomes de carbone, carbamoyle, N-(alkyl en $C_1$ à $C_4$)-carbamoyle, un atome de fluor ou de chlore, un groupe nitro, sulfamoyle, N-(alkyl en $C_1$ à $C^4$)-sulfamoyle, alkylsulfonyle ayant 1 à 4 atomes de carbone, phénylsulfonyle ou phénoxy,

$R^4$ représente un atome d'hydrogène, un groupe alkyle ayant 1 à 4 atomes de carbone, un groupe alcoxy ayant 1 à 4 atomes de carbone, un atome de chlore, un groupe alcanoylamino ayant 2 à 5 atomes de carbone, le groupe benzoylamino, le groupe uréido, un groupe N'-phényl-uréido, un groupe N'-alkyl-uréido comportant 1 à 4 atomes de carbone dans le reste alkyle, un groupe phénylsulfonyle ou un groupe alcanoylsulfonyle ayant 1 à 4 atomes de carbone,

M représente un atome d'hydrogène ou un métal alcalin,

m est un nombre valant 1 ou 2,

p est un nombre nul ou valant 1 ou 2, et

$R^8$ représente un atome d'hydrogène, un groupe alkyle ayant 1 à 4 atomes de carbone, cyano, carboxy, carbalcoxy ayant 2 à 5 atomes de carbone, carbamoyle ou phényle;

v est un nombre nul ou valant 1;

$K^1$ représente un reste répondant à l'une des formules générales (9a), (9b), ou (9c)

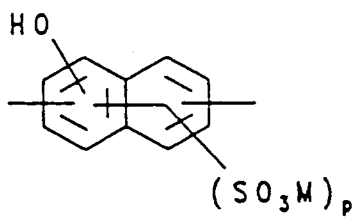

(9a)

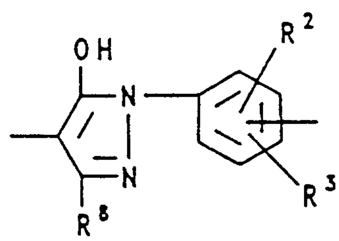

(9b)

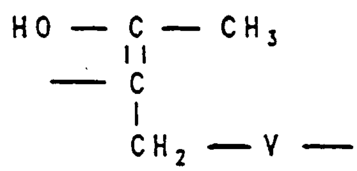

(9c)

dans lesquelles M, p, $R^2$, $R^3$ et $R^8$ ont les sens précités, et le groupe hydroxyle de la formule (9a) est en position ortho par rapport à la liaison libre reliant ce groupe au groupe azoïque et,

V représente un reste phénylène, qui contient les restes $R^2$ et $R^3$ cités et définis ci-dessus, ou bien V représente un reste naphtylène qui peut être substitué par un ou deux groupes sulfo;

$X^2$ représente une liaison directe ou un groupe alkylène ayant 1 ou 2 groupes alkylamido ayant 2 à 5 atomes de carbone, et l'on préfère en particulier le groupe $-NH-CO-(CH_2)_3-$;

Y a l'un des sens indiqués à la revendication 1.

6. Procédé selon la revendication 1, caractérisé en ce que le colorant de formule (1) est un colorant répondant à la formule générale (5d)

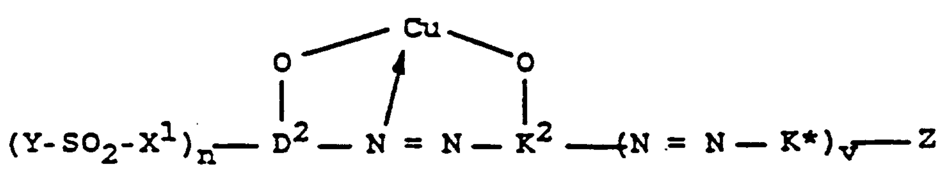

(5d)

dans laquelle

Y et n ont les sens indiqués à la revendication 1;

$X^1$ représente une liaison directe ou un groupe alkylène ayant 1 à 4 atomes de carbone ou un

reste bivalent d'un groupe alcanoylamido ayant 2 à 5 atomes de carbone, parmi lesquels on préfère le groupe de formule $-(CH_2)_3-CONH-$;

$D^2$ représente un reste benzène, qui peut être substitué par un ou deux substituants choisis parmi un groupe méthyle, éthyle, méthoxy, éthoxy, un atome de brome ou de chlore, un groupe carboxy et un groupe sulfo, ou bien $D^2$ représente un reste naphtalène, qui peut être substitué par un groupe sulfo;

$K^2$ représente un reste de formule générale (10a) ou (10b) :

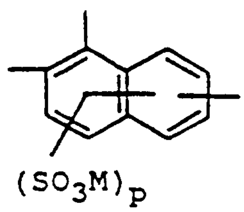
(10a)

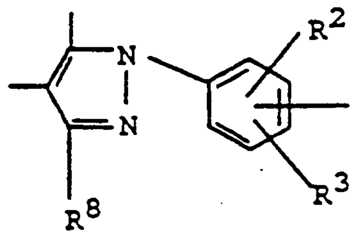
(10b)

dans lesquelles

M représente un atome d'hydrogène ou un métal alcalin,

p est un nombre nul ou valant 1 ou 2,

$R^2$ représente un atome d'hydrogène, un groupe méthyle, méthoxy, éthoxy, alcanoyle ayant 2 à 5 atomes de carbone, cyano, carboxy, sulfo, alcoxycarbonyle ayant 2 à 5 atomes de carbone, carbamoyle, N-(alkyl en $C_1$ à $C_4$)-carbamoyle, un atome de fluor, de chlore ou de brome ou un groupe trifluorométhyle,

$R^3$ représente un atome d'hydrogène ou un groupe méthyle, éthyle, méthoxy, éthoxy, cyano, carboxy, sulfo, alcanoylamino ayant 2 à 5 atomes de carbone, alcoxycarbonyle ayant 2 à 5 atomes de carbone, carbamoyle, N-(alkyl en $C_1$ à $C_4$)-carbamoyle, un atome de fluor ou de chlore, un groupe nitro, sulfamoyle, N-(alkyl en $C_1$ à $C_4$)-sulfamoyle, alkylsulfonyle ayant 1 à 4 atomes de carbone, phénylsulfonyle ou phénoxy, et

$R^8$ représente un atome d'hydrogène, un groupe alkyle ayant 1 à 4 atomes de carbone, cyano, carboxy, carbalcoxy ayant 2 à 5 atomes de carbone, carbamoyle ou phényl;

Z représente un reste de formule générale (4)

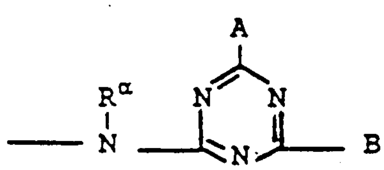
(4)

dans laquelle $R^{\alpha}$, A et B ont l'un des sens indiqués à la revendication 1;

v est un nombre nul ou valant 1;

$-K^*-Z$ représente un reste répondant à l'une des formules générales (8a), (8b), (8c), (8d), (8e) ou (8f)

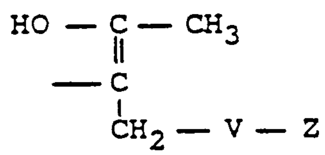

(8a)

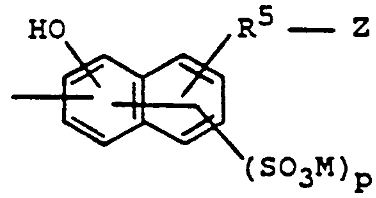

(8b)

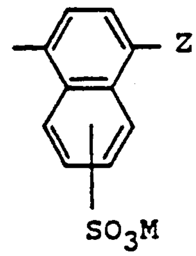

(8c)

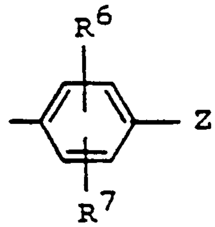

(8d)

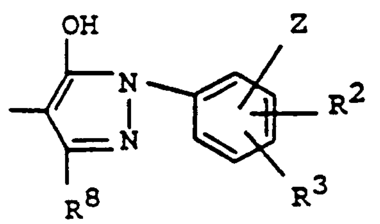

(8e)

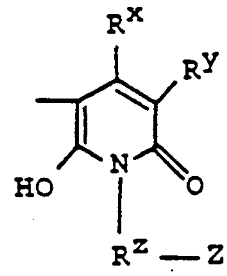

(8f)

dans lesquelles

$R^2$, $R^3$, $R^8$, Z, p et M ont les sens précités et, dans la formule (8b), le groupe hydroxyle se trouve en position ortho par rapport à la liaison libre assurant la liaison avec le groupe azoïque,

V représente un reste phénylène, qui contient les restes $R^2$ et $R^3$ définis et cités ci-dessus, ou un reste naphtylène, qui peut être substitué par un ou deux groupes sulfo,

$R^5$ représente une liaison directe ou un reste de formule -NH-CO-phénylène-, -NH-CO-NH-phénylène-, -N($CH_3$)-CO-phénylène- ou un reste -N($CH_3$)-CO-NH-phénylène-,

$R^6$ représente un atome d'hydrogène, un groupe alkyle ayant 1 à 4 atomes de carbone, alcoxy ayant 1 à 4 atomes de carbone, un atome de brome ou de chlore ou un groupe alcanoylamino ayant 2 à 7 atomes de carbone,

$R^7$ représente un atome d'hydrogène, un groupe alkyle ayant 1 à 4 atomes de carbone, alcoxy ayant 1 à 4 atomes de carbone, un atome de fluor ou un groupe alcanoylamino ayant 2 à 7 atomes de carbone, ou un groupe uréido ou phényluréido,

$R^x$ représente un atome d'hydrogène ou un groupe alkyle ayant 1 à 4 atomes de carbone ou un groupe alkyle ayant 1 à 4 atomes de carbone et qui est substitué par un groupe alcoxy ayant 1 à 4 atomes de carbone ou par un groupe cyano,

$R^y$ représente un atome d'hydrogène, un groupe sulfo ou un groupe sulfoalkyle comportant un reste alkylène ayant 1 à 4 atomes de carbone, ou bien un groupe cyano ou carbamoyle, et

$R^z$ représente un groupe alkylène ayant 1 à 6 atomes de carbone, et ayant de préférence 1 à 4 atomes de carbone, ou un reste phénylène, qui peut être substitué par des substituants choisis dans l'ensemble formé par un groupe méthyle, éthyle, chloro, carboxy et sulfo, ou bien $R^z$ représente un reste alkylène phénylène comportant 2 à 4 atomes de carbone dans le reste alkylène.

**7.** Procédé selon l'une au moins des revendications 1 à 6, caractérisé en ce que $X^1$ et $X^2$ représentent chacun une liaison directe.

**8.** Procédé selon l'une au moins des revendications 1 à 7, caractérisé en ce que $R^\alpha$ représente le groupe méthyle ou de préférence un atome d'hydrogène.

**9.** Procédé selon l'une au moins des revendications 1 à 8, caractérisé en ce que A est un groupe de formule générale (2a) ayant le sens indiqué à la revendication 1.

**10.** Procédé selon l'une au moins des revendications 1 à 9, caractérisé en ce que B a le même sens que A.

**11.** Procédé selon la revendication 9 ou 10 ou bien 9 et 10, caractérisé en ce que W représente un atome d'hydrogène ou un groupe méthyle; R représente un atome d'hydrogène, k est un nombre nul et $Y^1$ représente un groupe $\beta$-sulfatoéthyle ou $\beta$-chloréthyle.

**12.** Procédé selon la revendication 11, caractérisé en ce que G représente le groupe n-propylène.

**13.** Procédé selon l'une au moins des revendications 1 à 12, caractérisé en ce que Y représente le groupe vinyle ou un groupe $\beta$-sulfatoéthyle.

**14.** Procédé selon l'une au moins des revendications 1 à 10, caractérisé en ce que le groupe de formule générale (4)

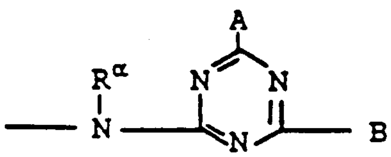

(4)

est un groupe de formule générale (4A)

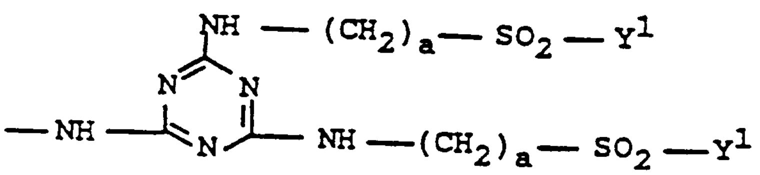

(4A)

dans laquelle $Y^1$ représente le groupe vinyle, un groupe $\beta$-sulfatoéthyle, $\beta$-halogéno-éthyle, $\beta$-thiosulfatoéthyle, $\beta$-phosphatoéthyle ou $\beta$-acétoxyéthyle, et a est un nombre valant 2 ou 3.

**15.** Procédé selon l'une au moins des revendications 1 à 10 et 12 à 14, caractérisé en ce que $Y^1$ représente le groupe vinyle, $\beta$-chloréthyle, ou $\beta$-sulfatoéthyle.

**16.** Procédé selon la revendication 14 ou 15, caractérisé en ce que a est un nombre valant 3.

**17.** Utilisation d'un colorant de formule générale (1), citée et définie à la revendication 1, pour teindre (ce qui inclut l'impression) de la matière, notamment de la matière fibreuse, contenant des groupes hydroxyles et/ou carboxamides.

**18.** Procédé pour teindre (ce qui comprend l'impression) une matière contenant des groupes hydroxyles et/ou carboxamides, notamment une matière fibreuse, procédé selon lequel on applique un colorant sur la matière ou l'on introduit un colorant dans cette matière et on le fixe à l'aide de la chaleur et/ou à l'aide d'un agent à réaction alcaline, procédé caractérisé en ce qu'on utilise comme colorant un colorant répondant à la formule générale (1) citée et définie à la revendication 1.